# EUROPEAN PATENT APPLICATION

(11) **EP 4 557 744 A1**
(43) Date of publication of application: **21.05.2025**
(21) Application number: 23838964.7
(22) Date of filing: 12.07.2023
(51) Int. Cl.: H04N 21/2343

(54) **IMAGE DECODING METHOD AND APPARATUS BASED ON NEURAL NETWORK, IMAGE ENCODING METHOD AND APPARATUS BASED ON NEURAL NETWORK, AND DEVICE THEREOF**

(30) Priority: 14.07.2022 CN 202210834031
(71) Applicant: Hangzhou Hikvision Digital Technology Co., Ltd., Hangzhou, Zhejiang 310051 (CN)
(72) Inventor: CHEN, Fangdong, Hangzhou, Zhejiang 310051 (CN); YE, Zongmiao, Hangzhou, Zhejiang 310051 (CN); WU, Xiaoyang, Hangzhou, Zhejiang 310051 (CN)
(74) Representative: Goddar, Heinz J.
(86) International application number: PCT/CN2023/106899
(87) International publication number: WO 2024/012474

(57) **Abstract**

Provided in the present disclosure are an image decoding method and apparatus based on a neural network, an image encoding method and apparatus based on a neural network, and a device thereof. The image decoding method comprises: decoding, from a code stream, a control parameter and image information, which correspond to the current block; acquiring, from the control parameter, neural network information corresponding to a decoding processing unit, and on the basis of the neural network information, generating a decoding neural network corresponding to the decoding processing unit; and on the basis of the image information, determining an input feature corresponding to the decoding processing unit, and processing the input feature on the basis of the decoding neural network, so as to obtain an output feature corresponding to the decoding processing unit. By means of the present disclosure, the encoding performance and the decoding performance can be improved.

## Description

### TECHNICAL FIELD

The present disclosure relates to the field of encoding and decoding technology, in particular to a picture decoding method and apparatus based on a neural network, a picture encoding method and apparatus based on a neural network, and devices thereof.

### BACKGROUND

In order to save space, video pictures are encoded before transmission. Complete video encoding can include prediction, transform, quantization, entropy encoding, filtering, and other processes. The prediction process can include intra prediction and inter prediction. Inter prediction utilizes a temporal correlation of a video to predict pixels of a current picture by pixels of an adjacent encoded picture, to remove temporal redundancy in the video. Intra prediction utilizes a spatial correlation of a video to predict a current pixel by using pixels of encoded blocks in a current frame picture, to remove spatial redundancy in the video.

With the rapid development of deep learning, deep learning has achieved success in many high-level computer vision problems, such as picture classification, object detection, etc. Deep learning is also gradually being applied in the field of encoding and decoding, that is, a neural network can be used to encode and decode pictures. Although encoding and decoding methods based on neural networks have shown great performance potential, the encoding and decoding methods based on neural networks still suffer from issues such as poor stability, poor generalization, and high complexity.

### SUMMARY

In view of this, the present disclosure provides a picture decoding method and apparatus based on a neural network, a picture encoding method and apparatus based on a neural network, and devices thereof, which improves encoding and decoding performance, solves problems such as poor stability, poor generalization, and high complexity.

The present disclosure provides a picture decoding method based on a neural network. The method is applied to the decoding end, and includes:
decoding a control parameter and picture information for a current block from a bitstream;
obtaining neural network information for a decoding processing unit from the control parameter, and generating a decoding neural network for the decoding processing unit based on the neural network information; and
determining an input feature for the decoding processing unit based on the picture information, and processing the input feature based on the decoding neural network to obtain an output feature for the decoding processing unit.

The present disclosure provides a picture encoding method based on a neural network. The method is applied to the encoding end, and includes:
determining an input feature for an encoding processing unit based on a current block, obtaining an output feature for the encoding processing unit by processing the input feature based on an encoding neural network for the encoding processing unit, and determining picture information for the current block based on the output feature;
obtaining a control parameter for the current block, where the control parameter includes neural network information for a decoding processing unit, and the neural network information is configured to determine a decoding neural network for the decoding processing unit; and
encoding the control parameter and the picture information for the current block in a bitstream.

The present disclosure provides a picture decoding device based on a neural network, including:
one or more memories configured to store video data; and
a decoder configured to implement:
decoding a control parameter and picture information for a current block from a bitstream;
obtaining neural network information for a decoding processing unit from the control parameter, and generating a decoding neural network for the decoding processing unit based on the neural network information; and
determining an input feature for the decoding processing unit based on the picture information, and processing the input feature based on the decoding neural network to obtain an output feature for the decoding processing unit.

The present disclosure provides a picture encoding device based on a neural network, including:
one or more memories configured to store video data; and
an encoder configured to implement:
determining an input feature for an encoding processing unit based on a current block, obtaining an output feature for the encoding processing unit by processing the input feature based on an encoding neural network for the encoding processing unit, and determining picture information for the current block based on the output feature;
obtaining a control parameter for the current block, where the control parameter includes neural network information for a decoding processing unit, and the neural network information is configured to determine a decoding neural network for the decoding processing unit; and
encoding the control parameter and the picture information for the current block in a bitstream.

The present disclosure provides a decoding device, including: one or more processors and one or more machine-readable storage media, where the one or more machine-readable storage media store machine executable instructions that can be executed by the one or more processors; and
the one or more processors are configured to execute the machine executable instructions to implement the picture decoding method based on a neural network described above.

The present disclosure provides an encoding device, including: one or more processors and one or more machine-readable storage media, where the one or more machine-readable storage media store machine executable instructions that can be executed by the one or more processors; and
the one or more processors are configured to execute machine executable instructions to implement the picture encoding method based on a neural network described above.

From the above technical solutions, it can be seen that in the embodiments of the present disclosure, the control parameter for the current block can be decoded from the bitstream, the neural network information for the decoding processing unit can be obtained from the control parameter, and the decoding neural network for the decoding processing unit can be generated based on the neural network information. Then, picture decoding can be implemented based on the decoding neural network to improve decoding performance. Picture encoding can be implemented based on the encoding neural network for the encoding processing unit to improve encoding performance. It is possible to use neural networks (such as decoding neural networks and encoding neural networks) to encode and decode pictures, and transmit neural network information through bitstreams, and then, based on the neural network information, a decoding neural network for the decoding processing unit can be generated, to solve problems such as poor stability, poor generalization, and high complexity, that is, to achieve good stability, good generalization, and low complexity. A scheme for dynamically adjusting the complexity of encoding and decoding is provided, which has better encoding and decoding performance compared to a single neural network framework. Since each current block corresponds to a control parameter, the neural network information obtained from the control parameter is the neural network information for the current block, and a decoding neural network is generated for each current block. That is, the decoding neural networks for different current blocks can be the same or different, so the decoding neural network is at a block level, that is, the decoding neural network can be changed and adjusted.

### BRIEF DESCRIPTION OF DRAWINGS

FIG. 1 is a schematic diagram of a video encoding framework.
FIGs. 2A to 2C are schematic diagrams of a video encoding framework.
FIG. 3 is a flowchart of a picture decoding method based on a neural network according to an embodiment of the present disclosure.
FIG. 4 is a flowchart of a picture encoding method based on a neural network according to an embodiment of the present disclosure.
FIGs. 5A and 5C are schematic diagrams of a picture encoding method and a picture decoding method according to embodiments of the present disclosure.
FIGs. 5B and 5D are schematic diagrams of boundary padding according to embodiments of the present disclosure.
FIG. 5E is a schematic diagram of picture domain transform of an original picture according to an embodiment of the present disclosure.
FIGs. 6A and 6B are structural schematic diagrams of decoding ends according to embodiments of the present disclosure.
FIG. 6C is a structural schematic diagram of a coefficient hyperparameter feature generating unit according to an embodiment of the present disclosure.
FIG. 6D is a structural schematic diagram of a picture feature inverse transform unit according to an embodiment of the present disclosure.
FIGs. 7A, 7B, and 7C are structural schematic diagrams of encoding ends according to embodiments of the present disclosure.
FIG. 8A is a hardware structure diagram of a decoding device according to an embodiment of the present disclosure.
FIG. 8B is a hardware structure diagram of an encoding device according to an embodiment of the present disclosure.

### DETAILED DESCRIPTION

The terms used in the embodiments of the present disclosure are only for the purpose of describing specific embodiments and are not intended to limit the present disclosure. As used in the present disclosure and claims, the singular forms "a", "said", and "the" are intended to include the plural forms as well, unless the context clearly indicates otherwise. It should also be understood that the term "and/or" as used herein refers to and includes any and all possible combinations of one or more of the associated listed items. It shall be understood that, although the terms "first," "second," "third," and the like can be used herein to describe various information, the information should not be limited by these terms. These terms are only used to distinguish the same type of information from each other. For example, without departing from the scope of the present disclosure, first information can be referred as second information; and similarly, second information can also be referred as first information, according to the context. The word "if" as used herein can be interpreted as "at the time of", "when" or "in response to determining that".

The embodiments of the present disclosure propose a picture decoding and encoding method based on neural networks, which can involve the following concepts:

Neural Network (NN): the neural network refers to an artificial neural network, not a biological neural network. The neural network is an operational model composed of a large number of interconnected nodes (or neurons). In the neural network, neuron processing units can represent different objects, such as features, letters, concepts, or some meaningful abstract patterns. The types of processing units in the neural network are divided into three categories: an input unit, an output unit, and hidden unit(s). The input unit receives signal(s) and data from the outside. The output unit outputs the processing result. The hidden unit(s) is/are located between the input unit and the output unit and cannot be observed from outside the system. The connection weight between neurons reflects the strength of the connection between units, and the representation and processing of information are reflected in the connection relationships between processing units. The neural network is a non-programmed, brain-like information processing method that essentially obtains a parallel distributed information processing function through the transform and dynamic behaviour of the neural network, and imitates the information processing function of the nervous system of the human brain to different degrees and levels. In the field of video processing, a commonly used neural network can include but is not limited to: a Convolutional Neural Network (CNN), a Recurrent Neural Network (RNN), or a Fully Connected Network, etc.

Convolutional Neural Network (CNN): the convolutional neural network is a type of feedforward neural network and is one of the most representative network structures in deep learning technology. The artificial neurons of Convolutional Neural Network can respond to surrounding units within a certain coverage area, and have excellent performance in large-scale picture processing. The basic structure of a convolutional neural network includes two layers, one of which is the feature extraction layer (also referred to as the convolutional layer), and the input of each neuron is connected to a local receptive field of the previous layer and extracts the local features. Once the local features are extracted, a positional relationship between the partial features and other features is also determined. The second layer is the feature mapping layer (also referred to as the activation layer), where each computational layer of the neural network consists of multiple feature maps. Each feature map is a plane, and the weights of all neurons on the plane are equal. The feature mapping structure can use Sigmoid function, ReLU function, Leaky-ReLU function, PReLU function, or GDN (Generalized Difference Network) function, etc. as the activation function for the convolutional network. In addition, since neurons on one mapping surface share a weight, the number of free parameters in the network is reduced.

One of the advantages of the convolutional neural network over picture processing algorithms is that it avoids the complex pre-processing process (such as extracting artificial features) of the pictures, and can directly input the original picture for end-to-end learning. One of the advantages of the convolutional neural network compared to ordinary neural networks is that ordinary neural networks adopt a fully connected approach, where all neurons from the input layer to the hidden layer are connected, which results in a huge number of parameters, makes network training time-consuming or even difficult. The Convolutional neural network can avoid this difficulty through local connections, weight sharing, and other approaches.

Deconvolution: the deconvolutional layer, also referred to as transposed convolution layer, works similarly to convolution layer. The main difference is that the deconvolutional layer uses padding to make the output greater than the input (although the output and the input can also be kept the same). If the stride is 1, it means that the output size is equal to the input size; if the stride is N, it means that the width of the output feature is N times the width of the input feature, and the height of the output feature is N times the height of the input feature.

Generalization Ability: the generalization ability can refer to the adaptability of a machine learning algorithm to fresh samples. The purpose of learning is to learn the hidden patterns behind data pairs. For data outside the learning set that has the same pattern, the trained network can also provide appropriate outputs. This ability can be called generalization ability.

Rate-Distortion Optimization: there are two major indicators for evaluating encoding efficiency, code rate and Peak Signal to Noise Ratio (PSNR). The smaller the bitstream, the higher the compression rate, the higher the PSNR, and the better the quality of the reconstructed picture. In mode selection, the discrimination formula is essentially a comprehensive evaluation of the both. For example, the cost corresponding to a mode: J (mode)=D + λ * R, where D represents distortion, which can usually be measured by using the SSE index. SSE refers to the mean square sum of the differences between the reconstructed picture block and the source picture. To realize cost consideration, the SAD index can also be used, where the SAD refers to the sum of the absolute differences between the reconstructed picture block and the source picture. λ represents the Lagrange multiplier, and R represents the actual number of bits required for picture block encoding in this mode, including the total number of bits required for encoding mode information, motion information, and residuals, etc. When selecting modes, using the Rate-Distortion Optimization to compare and make decisions on encoding modes can usually ensure the best encoding performance.

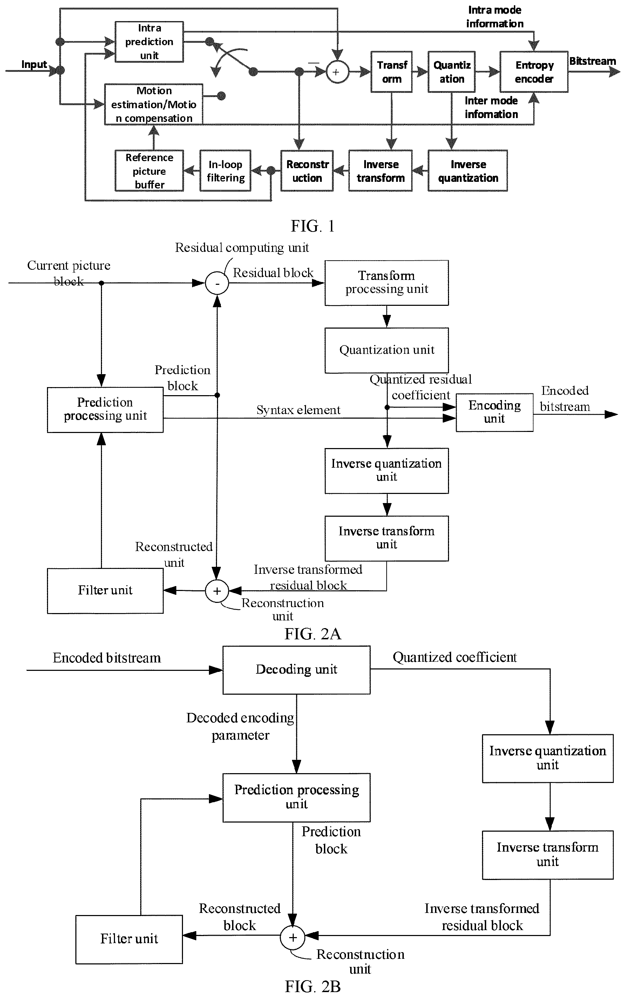

Video encoding framework: FIG. 1 is a schematic diagram of the video encoding framework at the encoding end. This video encoding framework can be used to implement the processing flow of the encoding end of the embodiments of the present disclosure. The schematic diagram of the video decoding framework can be similar to FIG. 1 and will not be repeated here. The processing flow of the decoding end of the embodiments of the present disclosure can be implemented by using the video decoding framework.

For example, as shown in FIG. 1, the video encoding framework can include modules such as prediction, transform, quantization, entropy encoder, inverse quantization, inverse transform, reconstruction, and filtering, etc. At the encoding end, the processing flow of the encoding end can be achieved through the cooperation between these modules. In addition, the video decoding framework can include modules such as prediction, transform, quantization, entropy decoder, inverse quantization, inverse transform, reconstruction, and filtering, etc. At the decoding end, the processing flow of the decoding end can be achieved through the cooperation between these modules.

There are many encoding tools proposed for each module of the encoding end, and each tool usually has multiple modes. For different video sequences, the encoding tools that can achieve optimal encoding performance are often different. Therefore, in the encoding process, Rate-Distortion Optimization (RDO) is usually used to compare the encoding performance of different tools or modes to select the best mode. After determining the optimal tool or mode, the decision information of the tool or mode is transmitted by encoding flag information in the bitstream. Although this approach brings high encoding complexity, it can adaptively select the optimal mode combination for different contents and achieve the best encoding performance. The decoding end can obtain relevant mode information by directly parsing the flag information, with less effect on complexity.

Below is a brief introduction to the structure of the encoding end and the decoding end. FIG. 2A is a schematic block diagram of an example of the encoding end used to implement the embodiments of the present disclosure. In FIG. 2A, the encoding end includes a prediction processing unit, a residual calculating unit, a transform processing unit, a quantization unit, an encoding unit, an inverse quantization unit (also referred to as an anti-quantization unit), an inverse transform processing unit (also referred to as an anti-transform processing unit), a reconstruction unit (also referred to as a rebuild unit), and a filter unit. In an example, the encoding end can further include a buffer and a decoded picture buffer, where the buffer is configured to cache the reconstructed picture blocks output by the reconstruction unit, and the decoded picture buffer is configured to cache the filtered picture blocks output by the filter unit.

The input of the encoding end (also referred to as the encoder) is the picture block of the picture (which can be referred to as the to-be-encoded picture), and the picture block can also be referred to as the current block or the to-be-encoded block. The encoding end can further include a segmentation unit (not shown in the figures), where the segmentation unit is configured to split the to-be-encoded picture into multiple picture blocks. The encoding end is configured for block by block encoding to complete the encoding of the to-be-encoded picture, i.e., performing the encoding process on each picture block. The prediction processing unit is configured to receive or obtain a picture block (the current block of the to-be-encoded picture, also referred to as the current block, where the picture block can be understood as the true value of the picture block) and reconstructed picture data. Based on the relevant data in the reconstructed picture data, the prediction processing unit predicts the current block and obtains the predicted block for the current block. In an example, the prediction processing unit can include an inter prediction unit, an intra prediction unit, and a mode selection unit. The mode selection unit is configured to select an intra prediction mode or an inter prediction mode. If the intra prediction mode is selected, the prediction process is performed by the intra prediction unit. If the inter prediction mode is selected, the prediction process is performed by the inter prediction unit.

The residual calculating unit is configured to calculate the residual between the true value of a picture block and the predicted block of the picture block, to obtain the residual block. For example, the residual calculating unit can subtract the pixel value of the predicted block from the pixel value of the picture block pixel by pixel.

The transform processing unit is configured to perform transform (such as discrete cosine transform (DCT) or discrete sine transform (DST)) on the residual block, to obtain transform coefficients in a transform domain. The transform coefficients can also be referred to as transform residual coefficients, and the transform residual coefficients can represent a residual block in the transform domain.

The quantization unit is configured to quantize the transform coefficients by applying scalar quantization or vector quantization to obtain quantized transform coefficients, and the quantized transform coefficients can also be referred to as quantized residual coefficients. The quantization process can reduce the bit depth associated with some or all of the transform coefficients. For example, during quantization, a transform coefficient of n bits can be rounded down to a transform coefficient of m bits, where n is greater than m. The degree of quantization can be modified by adjusting the quantization parameter (QP). For example, for scalar quantization, different scales can be applied to achieve finer or coarser quantization. A smaller quantization step corresponds to finer quantization, and a larger quantization step corresponds to coarser quantization. The appropriate quantization stride can be indicated by a quantization parameter (QP).

The encoding unit is configured to encode the quantized residual coefficients, and output the encoded picture data (i.e., the encoding result of the current to-be-encoded picture block) in the form of an encoded bitstream. Then, the encoded bitstream is transmitted to the decoder or stored, and subsequently transmitted to the decoder or used for retrieval. The encoding unit can further be configured to encode other syntax elements of the current picture block, such as encoding the prediction mode into the bitstream. The encoding algorithm include but is not limited to variable length coding (VLC) algorithm, context adaptive VLC (CAVLC) algorithm, arithmetic coding algorithm, context adaptive binary arithmetic coding (CABAC) algorithm, syntax-based context-adaptive binary arithmetic coding (SBAC) algorithm, or probability interval partitioning entropy (PIPE) algorithm.

The inverse quantization unit is configured to perform inverse quantization on the quantized coefficients to obtain the inverse quantized coefficients. The inverse quantization is the inverse application of the quantization unit. For example, based on or using the same quantization stride as the quantization unit, an inverse quantization scheme for the quantization scheme applied by the quantization unit is applied. The inverse quantized coefficients can also be referred to as inverse quantized residual coefficients.

The inverse transform processing unit is configured to perform inverse transform on the inverse quantized coefficients. It should be understood that this inverse transform is the inverse application of the aforementioned transform processing unit. For example, the inverse transform can include inverse discrete cosine transform (IDCT) or inverse discrete sine transform (IDST) to obtain the inverse transform block in the pixel domain (or sample domain). The inverse transform block can also be referred to as the inverse transform quantized block or the inverse transform residual block.

The reconstruction unit is configured to add the inverse transform block (i.e., inverse transform residual block) to the prediction block to obtain the reconstructed block in the sample domain. The reconstruction unit can be a summer, e.g., to add the sample values (i.e., pixel values) of the residual block to the sample values of the prediction block. The reconstructed block output by the reconstruction unit can be subsequently used for predicting other picture blocks, e.g., can be used in intra prediction mode.

The filter unit (or simply "filter") is configured to filter the reconstructed block to obtain a filtered block, to smoothly performing pixel transform or improving picture quality. The filter unit can be a loop filter unit (such as one or more loop filters). For example, the filter unit can be a deblocking filter, a sample-adaptive offset (SAO) filter, a bilateral filter, an adaptive loop filter (ALF), a sharpening or smoothing filter, a collaborative filter, or other filters. In an example, the filtered block output by the filtering unit can be subsequently used for predicting other picture blocks, e.g., can be used in inter prediction mode, which is not limited in the present disclosure.

FIG. 2B is a schematic block diagram of an example of a decoding end (also referred to as a decoder) used for implementing the embodiments of the present disclosure. The decoder is configured to receive encoded picture data (i.e., an encoded bitstream, such as an encoded bitstream including a picture block and associated syntax elements) encoded by an encoder, to obtain a decoded picture. The decoder includes a decoding unit, an inverse quantization unit, an inverse transform processing unit, a prediction processing unit, a reconstruction unit, and a filter unit. In some embodiments, the decoder can perform decoding passes that are generally inverse of the encoding passes described for the encoder in FIG. 2A. In an example, the decoder can further include a buffer and a decoded picture buffer, where the buffer is configured to cache the reconstructed picture blocks output by the reconstruction unit, and the decoded picture buffer is configured to cache the filtered picture blocks output by the filter unit.

The decoding unit is configured to decode encoded picture data to obtain quantized coefficients and/or decoded encoding parameters (e.g., decoding parameters can include any one or all of inter prediction parameters, intra prediction parameters, filter parameters, and/or other syntax elements). The decoding unit is further configured to forward the decoded encoding parameters to the prediction processing unit, such that the prediction processing unit can perform the prediction process based on the encoding parameters. The function of the inverse quantization unit can be the same as the function of the inverse quantization unit of the encoder, and the inverse quantization unit can be configured for inverse quantization (i.e., anti-quantization) of the quantized coefficients decoded by the decoding unit.

The function of the inverse transform processing unit can be the same as the function of the inverse transform processing unit of the encoder, and the function of the reconstruction unit (such as a summer) can be the same as the function of the reconstruction unit of the encoder, which are configured to perform inverse transform (such as inverse DCT, inverse integer transform, or conceptually similar inverse transform process) on the quantized coefficients, to obtain an inverse transform block (also referred to as an inverse transform residual block), where the inverse transform block is the residual block of the current picture block in the pixel domain.

The prediction processing unit is configured to receive or obtain encoded picture data (such as the encoded bitstream of the current picture block) and reconstructed picture data. The prediction processing unit can further receive or obtain prediction related parameters and/or information (i.e., decoded encoding parameters) about the selected prediction mode from, e.g., the decoding unit, and predict the current picture block based on the relevant data in the reconstructed picture data and the decoded encoding parameters to obtain the predicted block of the current picture block.

In an example, the prediction processing unit can include an inter prediction unit, an intra prediction unit, and a mode selection unit. The mode selection unit is configured to select an intra prediction mode or an inter prediction mode. If the intra prediction mode is selected, the prediction process is performed by the intra prediction unit. If the inter prediction mode is selected, the prediction process is performed by the inter prediction unit.

The reconstruction unit is configured to add the inverse transform block (i.e., the inverse transform residual block) to the prediction block to obtain the reconstructed block in the sample domain. For example, the sample values of the inverse transform residual block can be added to the sample values of the prediction block.

The filter unit is configured to filter the reconstructed block to obtain the filtered block, where the filtered block is the decoded picture block.

It should be understood that in the encoder and decoder of the embodiments of the present disclosure, the processing result of a certain step can also be further processed and the further processed result can be output to the next step. For example, after interpolation filtering, motion vector derivation, or filtering, the processing result of a corresponding step can be further clipped or shifted.

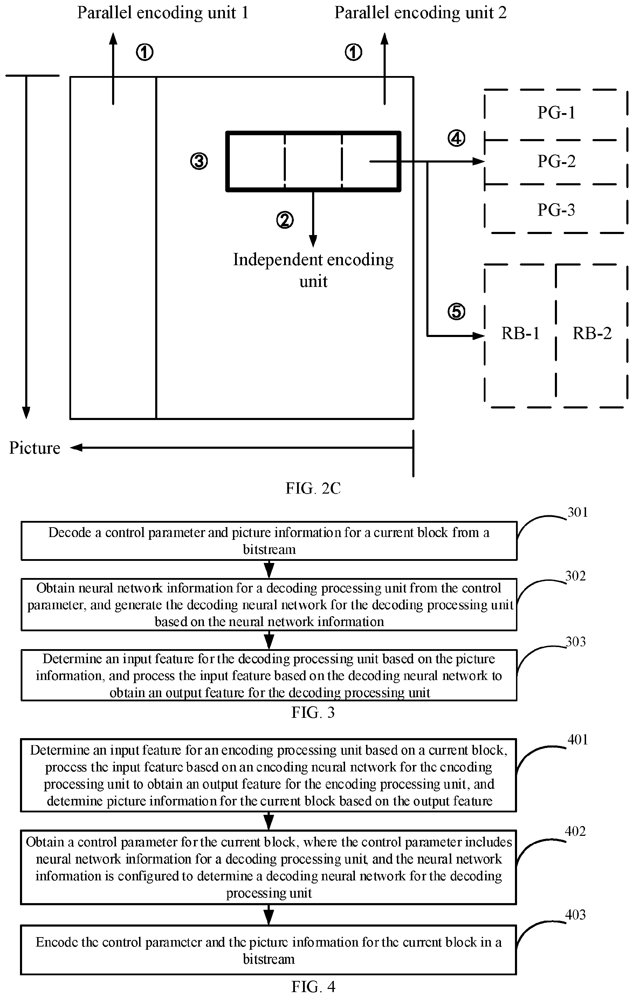

On the basis of the encoder and decoder, the embodiments of the present disclosure provides an embodiment of encoding/decoding, as shown in FIG. 2C. FIG. 2C is a flowchart of an encoding and decoding process provided in the embodiments of the present disclosure, the embodiment of the encoding/decoding includes processes ① to ⑤, where the processes ① to ⑤ can be executed by the aforementioned decoder and encoder. In process ①, a picture of a frame is split into one or more non-overlapping parallel coding units. The one or more parallel coding units do not depend on each other and can encode and decode completely in parallel and independently of each other, as shown in parallel coding unit 1 and parallel coding unit 2 in FIG. 2C.

In process ②, for each parallel coding unit, the parallel coding unit can be further split into one or more independent coding units that do not overlap with each other. The one or more independent coding units can be independent of each other, but can share some header information of the parallel coding unit. For example, the width of an independent coding unit is w_lcu, and the height of an independent coding unit is h-lcu. If the parallel coding unit is split into one independent coding unit, the size of the independent coding unit is exactly the same as the size of the parallel coding unit. If the parallel coding unit is split into multiple independent coding unit, the width of the independent coding unit should be greater than the height of the independent coding unit (unless the independent coding unit is at an edge region).

Usually, an independent coding unit can be fixed w_lcu × h-lcu, where w_lcu and h-lcu are both 2 to the power of N (N ≥ 0). For example, the size of the independent coding unit can be 128 × 4, 64 × 4, 32 × 4, 16 × 4, 8 × 4, 32 × 2, 16 × 2, or 8 × 2.

For example, the independent coding unit can be a fixed 128 × 4. If the size of the parallel coding unit is 256 × 8, the parallel coding unit can be split into 4 independent coding units. If the size of the parallel coding unit is 288 × 10, the parallel coding unit is split into: each of the first row and the second row is 2 independent coding units of 128 × 4 and 1 independent coding unit of 32 × 4, and the third row consists of 2 independent coding units of 128 × 2 and 1 independent coding unit of 32 × 2. It is worth noting that an independent coding unit can include three components of luminance Y, chrominance Cb, and chrominance Cr, or three components of red (R), green (G), and blue (B), or three components of luminance Y, chrominance Co, and chrominance Cg. Alternatively, an independent coding unit can only include one component of them. If the independent coding unit contains three components, the sizes of these three components can be exactly the same or different, depending on the input format of the picture.

In process ③, for each independent coding unit, the independent coding unit can be further split into one or more non-overlapping sub coding units. The sub coding units within the independent coding unit can depend on each other, e.g., multiple sub coding units can perform pre encoding/decoding through cross reference.

If the size of the sub coding unit is the same as the size of the independent coding unit (i.e., the independent coding unit is only split into one sub coding unit), the size of the sub coding unit can be one of all the sizes described in process ②. If an independent coding unit is split into multiple non-overlapping sub coding units, examples of splitting include: horizontal splitting (the height of the sub coding unit is the same as the height of the independent coding unit, but the width is different, where the width of the sub coding unit can be 1/2, 1/4, 1/8, or 1/16, etc. the width of the independent coding unit), vertical splitting (the width of the sub coding unit is the same as the width of the independent coding unit, but the height is different, where the height of the sub coding unit can be 1/2, 1/4, 1/8, or 1/16, etc. the height of the independent coding unit), or horizontal and vertical splitting (quadtree splitting), etc. In some embodiments, horizontal splitting is adopted.

The width of the sub coding unit is w_cu and the height of the sub coding unit is h-cu, and the width is greater than the height unless the sub coding unit is at an edge region. Usually, the sub coding unit is fixed w_cu × h-cu, where w_cu and h-cu are both 2 to the power of N (N is greater than or equal to 0), such as 16 × 4, 8 × 4, 16 × 2, 8 × 2, 8 × 1, or 4 × 1, etc. If the sub coding unit is a fixed 16 × 4. If the size of the independent coding unit is 64 × 4, the independent coding unit is split into 4 sub coding units. If the size of the independent coding unit is 72x4, the split sub coding units are: four 16 × 4 and one 8 × 4. It is worth noting that a sub coding unit can include three components of luminance Y, chrominance Cb, and chrominance Cr, or three components of red (R), green (G), and blue (B), or three components of luminance Y, chrominance Co, and chrominance Cg. Alternatively, a sub coding unit can only include one component of them. If a sub coding unit includes three components, the respective sizes of components can be exactly the same or different, depending on the input format of the picture.

It is worth noting that process ③ can be an optional step in the encoding or decoding method, and the encoder/decoder can encode or decode the residual coefficients (or residual values) of the independent coding units obtained in process ②.

In process ④, a sub coding unit can be further split into one or more non-overlapping prediction groups (PGs), where PG can be abbreviated as Group. PGs are encoded or decoded according to the selected prediction mode to obtain the predicted values of the PGs, which form the predicted value of the entire sub coding unit. Based on the predicted value of the sub coding unit and the original value, the residual value of the sub coding unit is obtained.

In process ⑤, based on the residual values of the sub coding units, the sub coding units are grouped into obtain one or more non-overlapping residual blocks (RBs). The residual coefficient of each RB is encoded or decoded according to a selected mode to form a residual coefficient bitstream. For example, two categories: transforming residual coefficients and not transforming them can be included.

The selected mode of residual coefficient encoding or decoding method in process ⑤ can include, but is not limited to, any one of the following: semi fixed length encoding method, exponential Golomb encoding method, Golomb-Rice encoding method, truncated unary code encoding method, run length encoding method, or direct encoding of original residual values, etc. For example, the encoder can directly encode the coefficient within the RB. For example, the encoder can also perform transform (such as DCT, DST, or Hadamard transform, etc.) on the residual block, and then encode the transformed coefficient. For example, when the RB is small, the encoder can directly perform unified quantization on each coefficient within the RB and then perform binary encoding. If the RB is large, the RB can be further split into multiple coefficient groups (CGs), and each CG can be uniformly quantized and then binary encoded. In some embodiments of the present disclosure, the coefficient group (CG) and quantization group (QG) can be the same, or the coefficient group and quantization group can also be different.

Below is an exemplary explanation of the residual coefficient encoding by using a semi fixed length encoding method. Firstly, a maximum absolute value of a residual within an RB block is defined as a modified maximum (MM). Secondly, the number of encoding bits for the residual coefficients within the RB block (the number of encoding bits for residual coefficients within the same RB block is consistent) is determined. For example, if the critical limit (CL) of the current RB block is 2 and the current residual coefficient is 1, encoding residual coefficient 1 requires 2 bits, represented as 01. If the CL of the current RB block is 7, it represents encoding 8-bit residual coefficients and 1-bit sign bit. The determination of CL is to find the minimum M value that satisfies the condition that all residuals in the current sub block are within the range of [-2 ^ (M-1), 2 ^ (M-1)]. If there are two boundary values, -2 ^ (M-1) and 2 ^ (M-1) at the same time, M increases by 1, which requires M+1 bits to encode all residuals of the current RB block. If there is only one of the two boundary values -2 ^ (M-1) or 2 ^ (M-1), a Trailing bit is encoded to determine whether the boundary value is -2 ^ (M-1) or 2 ^ (M-1). If none of the residuals is either -2 ^ (M-1) or 2 ^ (M-1), there is no need to encode a Trailing bit. For certain special cases, the encoder can directly encode the original value of the picture instead of the residual value.

With the rapid development of deep learning, a neural network can adaptively construct feature descriptions driven by training data, with higher flexibility and universality, making deep learning successful in many high-level computer vision problems, such as picture classification, object detection, etc. Deep learning is also gradually being applied in the field of encoding and decoding, that is, a neural network can be used to encode and decode pictures. For example, using a Variable Filter Size Convolutional Neural Network (VRCNN) instead of deblock filtering and adaptive sample compensation techniques to perform post-processing filtering on the intra frame encoded picture significantly improves the subjective and objective quality of the reconstructed picture. For example, a neural network can be applied to intra prediction. An intra prediction mode based on block upsampling and downsampling is proposed. For an intra frame predicted block, downsampling encoding is first performed, and then the reconstructed pixels are upsampled by the neural network. For ultra high definition sequences, a performance gain of up to 9.0% can be achieved. The neural networks can effectively overcome the limitations of manually set modes, and the neural network that meet practical needs can be obtained through data-driven approaches, which significantly improves coding performance.

For example, although encoding and decoding methods based on neural networks have shown great performance potential, the encoding and decoding methods based on neural networks still suffer from issues such as poor stability, poor generalization, and high complexity. Firstly, neural networks are still in the process of rapid iteration, with new network structures emerging constantly. Even for some common problems, there is still no solution of which network structure is optimal, let alone specific problems for certain modules of the encoder. Therefore, using a single fixed neural network for a certain module of the encoder carries a high risk. Secondly, since the formation of the neural network highly depends on training data, if a certain feature of the actual problem is not included in the training data, poor performance is likely to occur when dealing with the actual problem. In related arts, one mode usually only uses one neural network. When the neural network has insufficient generalization ability, the mode will result in a decrease in encoding performance. Further, due to the high data density and low latency requirements required for video encoding, video encoding standard technologies have particularly strict requirements for complexity, especially decoding complexity. In order to achieve good encoding performance, the number of parameters used for an encoding neural network is often very large (such as 1M or more). The number of multiplications and additions generated by applying the neural network once can average more than 100K times per pixel. A simplified neural network with fewer layers or parameters cannot achieve optimal encoding performance, but the use of such a neural network can greatly reduce the complexity of encoding and decoding. In addition, for picture encoding schemes, most schemes use the entire frame of a picture as input (with high caching overhead), and cannot effectively control the output code rate. In practical applications, it is often necessary to obtain pictures with arbitrary bitrates.

Regarding the above findings, the embodiments of the present disclosure propose a picture decoding method and a picture encoding method based on a neural network, which can use neural networks (such as a decoding neural network and an encoding neural network) to encode and decode pictures. In this embodiment, the optimization idea is to focus not only on encoding performance and decoding performance, but also on complexity (especially the parallelism of coefficient encoding and decoding) and application functionality (supporting variable and fine tuned code rates, i.e., controllable code rates). Based on the above optimization idea, several methods are proposed in the embodiments of the present disclosure: a) a fixed structure of the neural network, but not limiting the network parameters (i.e., weight parameters) of the neural network, where the network parameters can be indexed by ID; b) a flexible structure of the neural network, which can be achieved by transmitting relevant structural parameters through syntax encoding, where network parameters can be indexed through ID (some parameters can be transmitted by syntax encoding, increasing the code rate cost); c) a flexible structure (high-level syntax configuration) of the neural network, and fixed network parameters (for saving code rate) of some networks (such as shallow networks), where the network parameters of the remaining networks are transmitted by encoding syntax (maintaining performance optimization space).

The following provides a detailed explanation of the decoding and encoding methods in the embodiments of the present disclosure, based on several embodiments.

Embodiment 1: a picture decoding method based on a neural network is proposed in the embodiments of the present disclosure, as shown in FIG. 3, which is a flowchart of the method. The method can be applied to the decoding end (also referred to as the video decoder), and can include steps 301-303.

In step 301, a control parameter and picture information for a current block are decoded from a bitstream.

In step 302, neural network information for a decoding processing unit is obtained from the control parameter, and the decoding neural network for the decoding processing unit is generated based on the neural network information.

In step 303, an input feature for the decoding processing unit is determined based on the picture information, and the input feature is processed based on the decoding neural network to obtain an output feature for the decoding processing unit.

In an embodiment, when the neural network information includes basic layer information and enhancement layer information, the basic layer for the decoding processing unit can be determined based on the basic layer information, and the enhancement layer for the decoding processing unit can be determined based on the enhancement layer information, and then a decoding neural network for the decoding processing unit is generated based on the basic layer and enhancement layer.

For example, regarding the process of determining the basic layer, when the basic layer information includes a basic layer usage default network flag, and the basic layer usage default network flag indicates that the basic layer uses a default network, the basic layer of a default network structure is obtained.

For example, regarding the process of determining the basic layer, when the basic layer information includes a basic layer usage predesigned network flag and a basic layer predesigned network index, and the basic layer usage predesigned network flag indicates that the basic layer uses a predesigned network, a basic layer of a predesigned network structure corresponding to the basic layer predesigned network index is selected from a predesigned neural network pool.

The predesigned neural network pool includes network layers of at least one predesigned network structure.

For example, regarding the process of determining the enhancement layer, when the enhancement layer information includes an enhancement layer usage default network flag, and the enhancement layer usage default network flag indicates that the enhancement layer uses a default network, the enhancement layer of a default network structure is obtained.

For example, regarding the process of determining the enhancement layer, when the enhancement layer information includes an enhancement layer usage predesigned network flag and an enhancement layer predesigned network index, and the enhancement layer usage predesigned network flag indicates that the enhancement layer uses a predesigned network, an enhancement layer of a predesigned network structure corresponding to the enhancement layer predesigned network index can be selected from a predesigned neural network pool.

The predesigned neural network pool includes network layers of at least one predesigned network structure.

For example, regarding the process of determining the enhancement layer, when the enhancement layer information includes a network parameter configured to generate the enhancement layer, and the enhancement layer for the decoding processing unit is generated based on the network parameter; where the network parameter can include but are not limited to at least one of the following: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, an activation layer flag, or an activation layer type. The above are just a few examples and are not limiting.

In an embodiment, the picture information can include coefficient hyperparameter feature information and picture feature information, and based on the picture information, the input feature for the decoding processing unit is determined, and the input feature is processed based on the decoding neural network to obtain the output feature for the decoding processing unit, which can include but is not limited to: when executing a decoding process of coefficient hyperparameter feature generating, determining a reconstructed value of the coefficient hyperparameter feature coefficient based on the coefficient hyperparameter feature information, and performing inverse transform on the reconstructed value of the coefficient hyperparameter feature coefficient based on the decoding neural network to obtain a coefficient hyperparameter feature value; where the coefficient hyperparameter feature value can be configured to decode the picture feature information from a bitstream. When executing a decoding process of picture feature inverse transform, a reconstructed value of the picture feature is determined based on the picture feature information; and inverse transform is performed on the reconstructed value of the picture feature based on the decoding neural network to obtain a picture low order feature value; where the picture low order feature value is configured to obtain a reconstructed picture block for the current block.

For example, determining the reconstructed value of the coefficient hyperparameter feature coefficient based on coefficient hyperparameter feature information can include but is not limited to: when the control parameter includes first enabling information, and the first enabling information represents enabling first inverse quantization, performing inverse quantization on the coefficient hyperparameter feature information to obtain the reconstructed value of the coefficient hyperparameter feature coefficient. Based on picture feature information, determining the reconstructed value of the picture feature can include but is not limited to: when the control parameter includes second enabling information and the second enabling information represents enabling a second inverse quantization, performing inverse quantization on the picture feature information to obtain the reconstructed value of the picture feature.

For example, when control parameter includes third enabling information, and the third enabling information represents enabling quality enhancement, when executing a decoding process of quality enhancement, obtaining the picture low order feature value, and performing enhancement on the picture low order feature value based on the decoding neural network to obtain the reconstructed picture block for the current block.

In an embodiment, the decoding device can include a control parameter decoding unit, a first feature decoding unit, a second feature decoding unit, a coefficient hyperparameter feature generating unit, and a picture feature inverse transform unit. The picture information can include coefficient hyperparameter feature information and picture feature information. where the control parameter decoding unit can decode control parameters from a bitstream, the first feature decoding unit can decode coefficient hyperparameter feature information from a bitstream, and the second feature decoding unit can decode picture feature information from a bitstream. When the coefficient hyperparameter feature generating unit is the decoding processing unit, the reconstructed value of the coefficient hyperparameter feature coefficient can be determined based on the coefficient hyperparameter feature information. The coefficient hyperparameter feature generating unit can use a decoding neural network to perform inverse transform on the reconstructed value of the coefficient hyperparameter feature coefficient, to obtain the coefficient hyperparameter feature value; where the coefficient hyperparameter feature value is configured to enable the second feature decoding unit to decode picture feature information from the bitstream. When the picture feature inverse transform unit is the decoding processing unit, the reconstructed value of the picture feature is determined based on the picture feature information. The picture feature inverse transform unit can perform inverse transform on the reconstructed value of the picture feature based on the decoding neural network to obtain a picture low order feature value; where the picture low order feature value is configured to obtain the reconstructed picture block corresponding to the current block.

For example, the decoding device further includes a first inverse quantization unit and a second inverse quantization unit; where the control parameter can include the first enabling information of the first inverse quantization unit. When the first enabling information represents enabling the first inverse quantization unit, the first inverse quantization unit can obtain coefficient hyperparameter feature information from the first feature decoding unit, perform inverse quantization on the coefficient hyperparameter feature information to obtain the reconstructed value of the coefficient hyperparameter feature coefficient, and provide the reconstructed value of the coefficient hyperparameter feature coefficient to the coefficient hyperparameter feature generating unit. The control parameter can include the second enabling information of the second inverse quantization unit. If the second enabling information represents enabling the second inverse quantization unit, the second inverse quantization unit can obtain picture feature information from the second feature decoding unit, perform inverse quantization on the picture feature information to obtain the reconstructed value of the picture feature, and provide the reconstructed value of the picture feature to the picture feature inverse transform unit.

For example, the decoding device can further include a quality enhancement unit; where the control parameter can include the third enabling information of the quality enhancement unit. When the third enabling information represents enabling the quality enhancement unit, when the quality enhancement unit is the decoding processing unit, the quality enhancement unit can obtain the picture low order feature value from the picture feature inverse transform unit, and enhance the picture low order feature value based on the decoding neural network to obtain the reconstructed picture block corresponding to the current block.

For example, the above execution order is only for the convenience of describing the given examples. In practical applications, the execution order of steps can also be changed without limitation. Moreover, in other embodiments, the steps of the corresponding method can not necessarily be executed in the order shown and described in the specification, and the steps included in the method can be more or less than those described in the specification. In addition, the single step described in the specification can be decomposed into multiple steps for description in other embodiments. The multiple steps described in the specification can also be combined into a single step for description in other embodiments.

From the above technical solutions, it can be seen that in the embodiments of the present disclosure, the control parameter for the current block can be decoded from the bitstream, the neural network information for the decoding processing unit can be obtained from the control parameter, and the decoding neural network for the decoding processing unit can be generated based on the neural network information. Then, picture decoding can be implemented based on the decoding neural network to improve decoding performance. Picture encoding can be implemented based on the encoding neural network for the encoding processing unit to improve encoding performance. It is possible to use deep learning networks (such as decoding neural networks and encoding neural networks) to encode and decode pictures, and transmit neural network information through bitstreams, and then, based on the neural network information, a decoding neural network for the decoding processing unit can be generated, to solve problems such as poor stability, poor generalization, and high complexity, that is, to achieve good stability, good generalization, and low complexity. A scheme for dynamically adjusting the complexity of encoding and decoding is provided, which has better encoding performance compared to a single deep learning network framework. Since each current block corresponds to a control parameter, the neural network information obtained from the control parameter is the neural network information for the current block, and a decoding neural network is generated for each current block. That is, the decoding neural networks for different current blocks can be the same or different, so the decoding neural network is at a block level, that is, the decoding neural network can be changed and adjusted.

Embodiment 2: a picture encoding method based on a neural network is proposed in the embodiments of the present disclosure, as shown in FIG. 4, which is a flowchart of the method. The method can be applied to the encoding end (also referred to as the video encoder), and can include steps 401-403.

In step 401, an input feature for an encoding processing unit is determined based on a current block, the input feature is processed based on an encoding neural network for the encoding processing unit to obtain an output feature for the encoding processing unit, and picture information (such as coefficient hyperparameter feature information and picture feature information) for the current block is determined based on the output feature.

In step 402, a control parameter for the current block is obtained, where the control parameter includes neural network information for a decoding processing unit, and the neural network information is configured to determine a decoding neural network for the decoding processing unit.

In step 403, the control parameter and the picture information for the current block are encoded in a bitstream.

In an embodiment, the neural network information includes basic layer information and enhancement layer information, and the decoding neural network includes a basic layer determined based on the basic layer information and an enhancement layer determined based on the enhancement layer information.

For example, when the basic layer information includes a basic layer usage default network flag, and the basic layer usage default network flag indicates that the basic layer uses a default network, the decoding neural network adopts the basic layer of a default network structure.

For example, when the basic layer information includes a basic layer usage predesigned network flag and a basic layer predesigned network index, and the basic layer usage predesigned network flag indicates that the basic layer uses a predesigned network, the decoding neural network adopts a basic layer of a predesigned network structure selected from a predesigned neural network pool corresponding to the basic layer predesigned network index.

The predesigned neural network pool includes network layers of at least one predesigned network structure.

For example, when the enhancement layer information includes an enhancement layer usage default network flag, and the enhancement layer usage default network flag indicates that the enhancement layer uses a default network, the decoding neural network adopts the enhancement layer of a default network structure.

For example, when the enhancement layer information includes an enhancement layer usage predesigned network flag and an enhancement layer predesigned network index, and the enhancement layer usage predesigned network flag indicates that the enhancement layer uses a predesigned network, the decoding neural network adopts an enhancement layer of a predesigned network structure selected from a predesigned neural network pool corresponding to the enhancement layer predesigned network index.

The predesigned neural network pool includes network layers of at least one predesigned network structure.

For example, when the enhancement layer information includes a network parameter configured to generate the enhancement layer, the decoding neural network can adopt the enhancement layer generated based on the network parameter; where the network parameter can include but is not limited to at least one of the following: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, an activation layer flag, or an activation layer type. The above are just a few examples of network parameters, which is not limited in the present disclosure.

In an embodiment, the picture information can include coefficient hyperparameter feature information and picture feature information. The input feature for the encoding processing unit is determined based on the current block, and the input feature is processed based on the encoding neural network for the encoding processing unit to obtain the output feature of the encoding processing unit, and the picture information for the current block is determined based on the output feature, which can include but is not limited to: for the encoding process of performing feature transform, the encoding neural network can be used to perform feature transform on the current block to obtain the picture feature value for the current block; where picture feature value is configured to determine picture feature information. In the encoding process of performing coefficient hyperparameter feature transform, the encoding neural network can be used to perform coefficient hyperparameter feature transform on the picture feature value to obtain the coefficient hyperparameter feature coefficient value, where the coefficient hyperparameter feature coefficient value is configured to determine the coefficient hyperparameter feature information.

For example, in the process of determining coefficient hyperparameter feature information based on the coefficient hyperparameter feature coefficient value, the coefficient hyperparameter feature coefficient value can be quantified to obtain the quantized value of coefficient hyperparameter feature coefficient, and the coefficient hyperparameter feature information can be determined based on the quantized value of coefficient hyperparameter feature coefficient. The control parameter can further include first enabling information, and the first enabling information is configured to indicate that the first quantization has been enabled.

For example, in the process of determining picture feature information based on the picture feature value, the picture feature value can be quantified to obtain the quantized value of the picture feature, and the picture feature information can be determined based on the quantized value of the picture feature. Where the control parameter can further include second enabling information, and the second enabling information is configured to indicate that the second quantization has been enabled.

For example, obtaining the control parameter for the current block can include but is not limited to: based on the network structure of the encoding neural network used in the encoding process of feature transform, determining the neural network information used in the decoding process of the picture feature inverse transform of the decoding device, where the neural network information is configured to determine the decoding neural network for the decoding process of the picture feature inverse transform of the decoding device; and/or, based on the network structure of the encoding neural network used in the encoding process of coefficient hyperparameter feature transform, determining the neural network information used in the decoding process of the coefficient hyperparameter feature generation of the decoding device, where the neural network information is configured to determine the decoding neural network for the decoding process of the coefficient hyperparameter feature generation of the decoding device.

In an embodiment, the encoding device can include a control parameter encoding unit, a first feature encoding unit, a second feature encoding unit, a feature transform unit, and a coefficient hyperparameter feature transform unit; and the picture information can include coefficient hyperparameter feature information and picture feature information. Where the control parameter encoding unit encodes the control parameter in the bitstream, the first feature encoding unit encodes coefficient hyperparameter feature information in the bitstream, and the second feature encoding unit encodes picture feature information in the bitstream. When the feature transform unit is an encoding processing unit, the feature transform unit can perform feature transform on the current block based on the encoding neural network to obtain the picture feature value for the current block; where picture feature value is configured to determine picture feature information. When the coefficient hyperparameter feature transform unit is the encoding processing unit, the coefficient hyperparameter feature transform unit can perform coefficient hyperparameter feature transform on the picture feature value based on the encoding neural network to obtain the coefficient hyperparameter feature coefficient value, where the coefficient hyperparameter feature coefficient value is configured to determine the coefficient hyperparameter feature information.

For example, the encoding device can further include a first quantization unit and a second quantization unit; where the first quantization unit can obtain the coefficient hyperparameter feature coefficient value from the coefficient hyperparameter feature transform unit, quantize the coefficient hyperparameter feature coefficient value to obtain the quantized value of coefficient hyperparameter feature coefficient, and determine the coefficient hyperparameter feature information based on the quantized value of coefficient hyperparameter feature coefficient. Where the control parameter can further include the first enabling information of the first quantization unit, and the first enabling information is configured to indicate that the first quantization unit has been enabled. The second quantization unit can obtain the picture feature value from the feature transform unit, quantize the picture feature value, obtain the quantized value of the picture feature, and determine picture feature information based on the quantized value of the picture feature; where the control parameter can further include second enabling information of the second quantization unit, and the second enabling information is configured to indicate that the second quantization unit has been enabled.

For example, obtaining the control parameter for the current block can include but is not limited to: based on the network structure of the encoding neural network of the feature transform unit, determining the neural network information for the picture feature inverse transform unit, where the neural network information is configured to determine the decoding neural network for the picture feature inverse transform unit of the decoding device; and/or, based on the network structure of the encoding neural network of the coefficient hyperparameter feature transform unit, determining the neural network information for the coefficient hyperparameter feature generation unit, where the neural network information is configured to determine the decoding neural network for the coefficient hyperparameter feature generation unit of the decoding device.

In an embodiment, the picture information can include coefficient hyperparameter feature information and picture feature information. In the decoding process of coefficient hyperparameter feature generation, the reconstructed value of the coefficient hyperparameter feature coefficient can be determined based on the coefficient hyperparameter feature information; and based on the decoding neural network, inverse transform is performed on the reconstructed value of the coefficient hyperparameter feature coefficient to obtain the coefficient hyperparameter feature value; where the coefficient hyperparameter feature value can be used to decode picture feature information from the bitstream. When executing a decoding process of picture feature inverse transform, a reconstructed value of the picture feature is determined based on the picture feature information; and inverse transform is performed on the reconstructed value of the picture feature based on the decoding neural network to obtain a picture low order feature value; where the picture low order feature value is configured to obtain a reconstructed picture block for the current block.

For example, determining the reconstructed value of the coefficient hyperparameter feature coefficient based on coefficient hyperparameter feature information can include but is not limited to: performing inverse quantization on the coefficient hyperparameter feature information to obtain the reconstructed value of the coefficient hyperparameter feature coefficient. Based on picture feature information, determining the reconstructed value of the picture feature can include but is not limited to: performing inverse quantization on the picture feature information to obtain the reconstructed value of the picture feature.

For example, when executing a decoding process of quality enhancement, obtaining the picture low order feature value, and performing enhancement on the picture low order feature value based on the decoding neural network to obtain the reconstructed picture block for the current block.

For example, obtaining the control parameter for the current block can include but is not limited to at least one of the following: based on the network structure of the decoding neural network used in the encoding process of the coefficient hyperparameter feature generation of the encoding device, determining the neural network information used in the decoding process of the coefficient hyperparameter feature generation of the decoding device, where the neural network information is configured to determine the decoding neural network used in the decoding process of the coefficient hyperparameter feature generation of the decoding device; or based on the network structure of the decoding neural network used in the encoding process of the picture feature inverse transform of the encoding device, determining the neural network information used in the decoding process of the picture feature inverse transform of the decoding device, where the neural network information is configured to determine the decoding neural network used in the decoding process of the picture feature inverse transform of the decoding device; or based on the network structure of the decoding neural network used in the encoding process of the quality enhancement of the encoding device, determining the neural network information used in the decoding process of the quality enhancement of the decoding device, where the neural network information is configured to determine the decoding neural network used in the decoding process of the quality enhancement of the decoding device.

In an embodiment, the encoding device can include a first feature decoding unit, a second feature decoding unit, a coefficient hyperparameter feature generating unit, and a picture feature inverse transform unit; and the picture information can include coefficient hyperparameter feature information and picture feature information. Where the first feature decoding unit can decode coefficient hyperparameter feature information from the bitstream, and the second feature decoding unit can decode picture feature information from the bitstream; and after determining the reconstructed value of the coefficient hyperparameter feature coefficient based on the coefficient hyperparameter feature information, the coefficient hyperparameter feature generating unit can perform inverse transform on the reconstructed value of the coefficient hyperparameter feature coefficient based on the decoding neural network to obtain the coefficient hyperparameter feature value; where the coefficient hyperparameter feature value is configured to enable the second feature decoding unit to decode picture feature information from the bitstream, and is configured to enable the second feature encoding unit to encode picture feature information in the stream by; and after determining the reconstructed value of the picture feature based on the picture feature information, the picture feature inverse transform unit can perform inverse transform on the reconstructed value of the picture feature based on the decoding neural network to obtain the picture low order feature value; where the picture low order feature value is configured to obtain the reconstructed picture block corresponding to the current block.

For example, the encoding device can further include a first inverse quantization unit and a second inverse quantization unit; where the first inverse quantization unit can obtain coefficient hyperparameter feature information from the first feature decoding unit, and inverse quantize the coefficient hyperparameter feature information to obtain the reconstructed value of the coefficient hyperparameter feature coefficient; and the second inverse quantization unit can obtain picture feature information from the second feature decoding unit and perform inverse quantization on the picture feature information to obtain the reconstructed value of the picture feature.

For example, the encoding device further includes a quality enhancement unit. The quality enhancement unit obtains low order feature value from the picture feature inverse transform unit, and based on the decoding neural network, performs enhancement on the picture low order feature value to obtain reconstructed picture block.

For example, obtaining the control parameter for the current block can include but is not limited to at least one of the following: based on the network structure of the decoding neural network of the coefficient hyperparameter feature generating unit of the encoding device, determining the neural network information corresponding to the coefficient hyperparameter feature generating unit of the decoding device, where the neural network information is configured to determine the decoding neural network corresponding to the coefficient hyperparameter feature generating unit of the decoding device; or based on the network structure of the decoding neural network of the picture feature inverse transform unit of the encoding device, determining the neural network information corresponding to the picture feature inverse transform unit of the decoding device, where the neural network information is configured to determine the decoding neural network corresponding to the picture feature inverse transform unit of the decoding device; or based on the network structure of the decoding neural network of the quality enhancement unit of the encoding device, determining the neural network information corresponding to the quality enhancement unit of the decoding device, where the neural network information is configured to determine the decoding neural network corresponding to the quality enhancement unit of the decoding device.

In an embodiment, before determining the input feature for the encoding processing unit based on the current block, the current picture can further be split into N non-overlapping picture blocks, where N is a positive integer. Boundary padding can be performed on each picture block to obtain a boundary padded picture block; where when performing boundary padding on each picture block, a padding value is independent on a reconstructed pixel value of an adjacent picture block. N current blocks can be generated based on the boundary padded picture blocks.

In an embodiment, before determining the input feature for the encoding processing unit based on the current block, the current picture can further be split into multiple basic blocks, and each basic block includes at least one picture block, where for each of the at least one picture block in each of the multiple basic blocks, when performing boundary padding on the picture block, the padding value for the picture block is independent on an reconstructed pixel value of another picture block within a same basic block, and the padding value for the picture block is allowed to be dependent on a reconstructed pixel value of a picture block within a different basic block. Multiple current blocks can be generated based on the boundary padded picture blocks.

For example, the above execution order is only for the convenience of describing the given examples. In practical applications, the execution order of steps can also be changed without limitation. Moreover, in other embodiments, the steps of the corresponding method can not necessarily be executed in the order shown and described in the specification, and the steps included in the method can be more or less than those described in the specification. In addition, the single step described in the specification can be decomposed into multiple steps for description in other embodiments. The multiple steps described in the specification can also be combined into a single step for description in other embodiments.

From the above technical solutions, it can be seen that in the embodiments of the present disclosure, the control parameter for the current block can be decoded from the bitstream, the neural network information for the decoding processing unit can be obtained from the control parameter, and the decoding neural network for the decoding processing unit can be generated based on the neural network information. Then, picture decoding can be implemented based on the decoding neural network to improve decoding performance. Picture encoding can be implemented based on the encoding neural network for the encoding processing unit to improve encoding performance. It is possible to use deep learning networks (such as decoding neural networks and encoding neural networks) to encode and decode pictures, and transmit neural network information through bitstreams, and then, based on the neural network information, a decoding neural network for the decoding processing unit can be generated, to solve problems such as poor stability, poor generalization, and high complexity, that is, to achieve good stability, good generalization, and low complexity. A scheme for dynamically adjusting the complexity of encoding and decoding is provided, which has better encoding performance compared to a single deep learning network framework. Since each current block corresponds to a control parameter, the neural network information obtained from the control parameter is the neural network information for the current block, and a decoding neural network is generated for each current block. That is, the decoding neural networks for different current blocks can be the same or different, so the decoding neural network is at a block level, that is, the decoding neural network can be changed and adjusted.

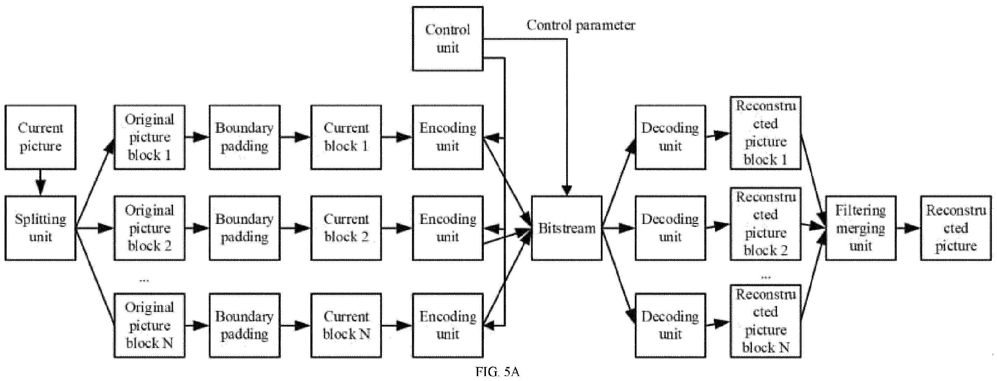

Embodiment 3: a neural network-based picture encoding method and picture decoding method with variable and adjustable code rate are proposed in the embodiments of the present disclosure, which can achieve high parallelism of picture blocks and controllable and adjustable code rate. FIG. 5A is a schematic diagram of the picture encoding method and the picture decoding method, illustrating the encoding process of the picture encoding method and the decoding process of the picture decoding method.

For example, regarding the picture encoding method based on a neural network, the encoding process can include the following steps S11-S15.

In step S11, a block splitting unit splits the current picture (i.e., the original picture) into N non-overlapping picture blocks (i.e., the original picture blocks, which can be referred to as original picture block 1, original picture block 2, ..., and original picture block N), where N is a positive integer.

In step S12, boundary padding is performed on each original picture block to obtain a boundary padded picture block, and N current blocks are generated based on the boundary padded picture blocks. That is, boundary padding is performed on each of the N original picture blocks to obtain N boundary padded picture blocks, and the N boundary padded picture blocks are taken as N current blocks.

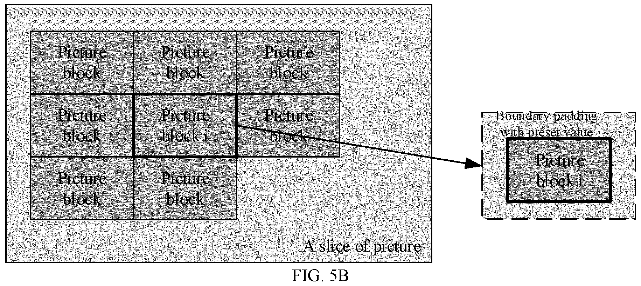

For example, as shown in FIG. 5B, when performing boundary padding on each original picture block, the padding value can be independent of the reconstructed pixel value of an adjacent picture block, which ensures that each original picture block can be independently encoded in parallel and improving encoding performance.

In step S13, the encoding unit determines the encoding parameter for the current block based on the information of the encoded block. The encoding parameter is configured to control the encoding code rate size (such as quantization stride and other parameters) of the current block, and there are no restrictions on the encoding parameters.

In step S14: the control unit writes the control parameter that the decoding end needs and cannot derive into the bitstream.

In step S15, the padded picture block (i.e., the current block) is input into a neural network-based encoding unit, and the encoding unit encodes the current block based on the encoding parameter and outputs the bitstream of the current block. For example, when encoding the current block based on the encoding parameter, the encoding unit can use a neural network to encode the current block.

For example, regarding the picture decoding method based on a neural network, the decoding process can include the following steps S21-S24.

In step S21, the decoding end decodes, from the bitstream, the control parameter that is required for the current block and cannot be derived.

In step S22, based on the control parameter and the bitstream of the current block, a neural network-based decoding unit is configured to obtain the reconstructed picture block corresponding to the current block. That is, the current block is decoded to obtain the reconstructed picture block, such as the reconstructed picture block 1 corresponding to the original picture block 1, the reconstructed picture block 2 corresponding to the original picture block 2, ..., and the reconstructed picture block N corresponding to the original picture block N.

For example, when the decoding unit decodes the current block, a neural network can be used to decode the current block.

In step S23, based on the control parameter, it is determined whether to perform a filtering process on a current block. If so, the filtering merging unit performs a filtering process based on the information of the current block and at least one adjacent reconstructed picture block to obtain the filtered picture blocks.

In step S24, the filtered picture blocks are merged to obtain a reconstructed picture.

In an embodiment, when performing boundary padding on the original picture block, the padding value can be a preset padding value, which can be the default value agreed upon by the encoding and decoding (such as 0, or 1<<(1-depth), where depth indicates the bit depth, such as 8, 10, 12, etc.), or the padding value can be a value transmitted to the decoding end through high-level syntax encoding, or the padding value can be obtained through operations such as mirroring or nearest neighbour copying based on the pixels of the current block. There is no limitation on the way this padding value is obtained.

In an embodiment, when performing boundary padding on the original picture block, the size of padding extension of the surrounding block can be the default value agreed upon by the encoding and decoding (such as 1, 2, 4, etc.), a value related to the current block size, or a value transmitted to the decoding end through high-level syntax encoding. There is no limitation on the size of padding extension of the surrounding block.

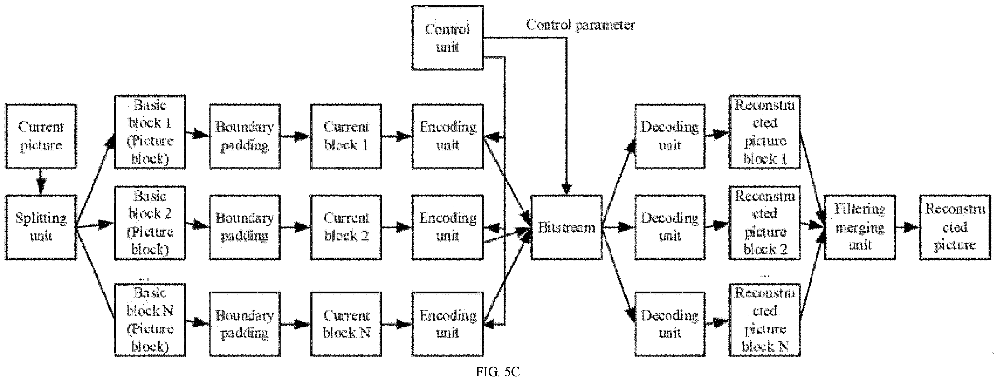

Embodiment 4: a neural network-based picture encoding method and picture decoding method with variable and adjustable code rate are proposed in the embodiments of the present disclosure, which can achieve high parallelism of picture blocks and controllable and adjustable code rate. On this basis, information (such as reconstructed pixels of adjacent blocks) between adjacent blocks can also be utilized. FIG. 5C is a schematic diagram of the picture encoding method and the picture decoding method, illustrating the encoding process of the picture encoding method and the decoding process of the picture decoding method.

For example, regarding the picture encoding method based on a neural network, the encoding process can include the following steps S31-S35.

In step S31, the block unit splits the current picture (i.e., the original picture) into multiple basic blocks, where each of the basic blocks includes at least one picture block. Taking M basic blocks as an example, M is a positive integer, and M basic blocks totally include N non-overlapping picture blocks (i.e., original picture blocks, denoted as original picture block 1, original picture block 2, ..., and original picture block N), where N is a positive integer.

In step S32, boundary padding is performed on each original picture block to obtain a boundary padded picture block, and N current blocks are generated based on the boundary padded picture blocks. That is, boundary padding is performed on each of the N original picture blocks to obtain N boundary padded picture blocks, and the N boundary padded picture blocks are taken as N current blocks.

For example, for each original picture block, when performing boundary padding on the original picture block, the padding value for the original picture block is independent on an reconstructed pixel value of another original picture block within a same basic block, and the padding value for the original picture block is allowed to be dependent on a reconstructed pixel value of an original picture block within a different basic block.

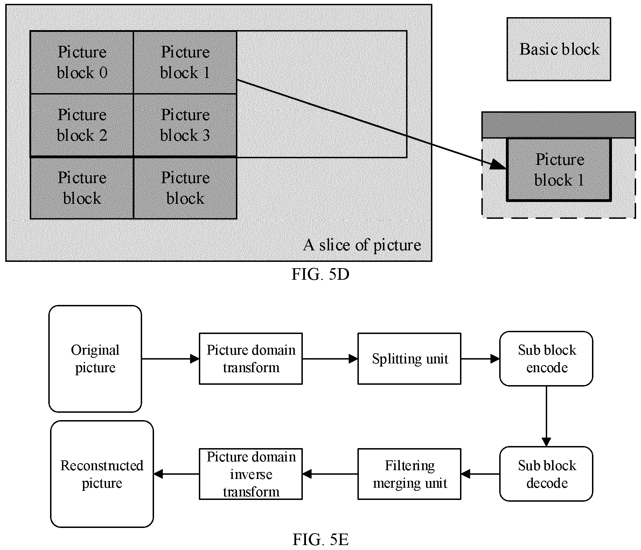

In this embodiment, the concept of basic blocks is introduced, as shown in FIG. 5D. Each basic block includes at least one picture block (i.e., the original picture block), and the picture blocks within the basic block do not refer to each other, but can refer to the reconstruction information of another picture block that is in a different basic block from the picture block. For example, as shown in FIG. 5D, for picture block 1, the picture block on its left (i.e., the adjacent block on the left side of picture block 1) is in the same basic block as picture block 1. Therefore, the reconstruction information of this picture block cannot be used as the padding value for picture block 1, and a padding preset value is configured to pad the picture block. For picture block 1, the upper picture block (i.e., the adjacent block on the upper side of picture block 1) is located in a different basic block from picture block 1. Therefore, the reconstruction information of the upper picture block can be used as the padding value for picture block 1. When using the reconstruction information of the upper picture block as the padding value for picture block 1, the reconstruction value of the upper picture block can be used, and the reconstruction value before filtering of the upper picture block can also be used.

By introducing basic blocks, it is possible to ensure parallelism (each picture block within the basic block can be encoded and decoded in parallel), and also conduces to improve performance (by utilizing the reconstruction information of a picture block within an adjacent basic block).

In step S33, the encoding unit determines the encoding parameter for the current block based on the information of the encoded block. The encoding parameter is configured to control the encoding code rate size (such as quantization stride and other parameters) of the current block, and there are no restrictions on the encoding parameters.

In step S34: the control unit writes the control parameter that the decoding end needs and cannot derive into the bitstream.

In step S35, the padded picture block (i.e., the current block) is input into a neural network-based encoding unit, and the encoding unit encodes the current block based on the encoding parameter and outputs the bitstream of the current block. For example, when encoding the current block based on the encoding parameter, the encoding unit can use a neural network to encode the current block.

For example, regarding the picture decoding method based on a neural network, the decoding process can include the following steps S41-S44.

In step S41, the decoding end decodes, from the bitstream, the control parameter that is required for the current block and cannot be derived.

In step S42, based on the control parameter and the bitstream of the current block, a neural network-based decoding unit is configured to obtain the reconstructed picture block corresponding to the current block. That is, the current block is decoded to obtain the reconstructed picture block, such as the reconstructed picture block 1 corresponding to the original picture block 1, the reconstructed picture block 2 corresponding to the original picture block 2, ..., and the reconstructed picture block N corresponding to the original picture block N.

In step S43, based on the control parameter, it is determined whether to perform a filtering process on a current block. If so, the filtering merging unit performs a filtering process based on the information of the current block and at least one adjacent reconstructed picture block to obtain the filtered picture blocks.

In step S44, the filtered picture blocks are merged to obtain a reconstructed picture.

In an embodiment, when performing boundary padding on the original picture block, the padding value can be a preset padding value, which can be the default value agreed upon by the encoding and decoding (such as 0, or 1<<(1-depth), where depth indicates the bit depth, such as 8, 10, 12, etc.), or the padding value can be a value transmitted to the decoding end through high-level syntax encoding, or the padding value can be obtained through operations such as mirroring or nearest neighbour copying based on the pixels of the current block. There is no limitation on the way this padding value is obtained.

In an embodiment, when performing boundary padding on the original picture block, the size of padding extension of the surrounding block can be the default value agreed upon by the encoding and decoding (such as 1, 2, 4, etc.), a value related to the current block size, or a value transmitted to the decoding end through high-level syntax encoding. There is no limitation on the size of padding extension of the surrounding block.

In an embodiment, the number of picture blocks in the basic block can be the default value agreed upon by the encoding and decoding (such as 1, 4, 16, etc.), a value related to the size of the current picture, or a value transmitted to the decoding end through high-level syntax encoding. There is no limit to the number of picture blocks in the basic block, and it can be selected according to actual needs.

In an embodiment, in embodiments 3 and 4, the process of splitting the original picture into blocks (steps S11 and S31) can also be achieved by performing picture domain transform on the original picture and splitting the picture after picture domain transform into blocks. Correspondingly, the filtered picture blocks can be merged into one picture and picture domain inverse transform can be performed on the picture, and a reconstructed picture can be obtained based on the picture after the picture domain inverse transform, as shown in FIG. 5E. For example, picture domain transform can be performed on the original picture, where the picture domain transform can be the transform process from RGB domain picture to YUV domain picture (the corresponding picture domain inverse transform is the inverse transform process from YUV domain picture to RGB domain picture), or the picture domain transform can be the process where wavelet transform or Fourier transform is introduced to generate a new domain picture (the corresponding picture domain inverse transform is the process of inverse wavelet transform or inverse Fourier transform). The picture domain transform process can be implemented by neural networks or non-neural networks, and there is no limitation on this process.

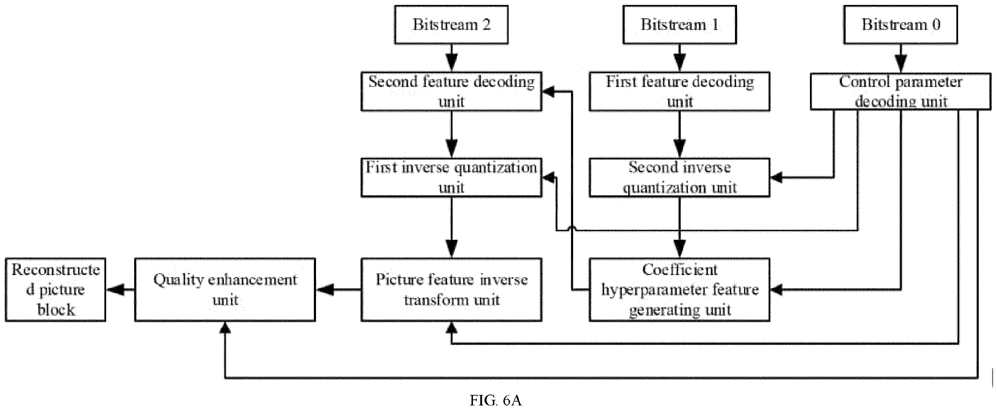

Embodiment 5: a picture decoding method based on a neural network is proposed in the embodiments of the present disclosure, which can be applied to the decoding end (also referred to as a video decoder). As shown in FIG. 6A, which is a schematic diagram of the decoding end structure, the decoding end can include a control parameter decoding unit, a first feature decoding unit, a second feature decoding unit, a coefficient hyperparameter feature generating unit, a picture feature inverse transform unit, a first inverse quantization unit, a second inverse quantization unit, and a quality enhancement unit. The first inverse quantization unit, the second inverse quantization unit, and the quality enhancement unit are optional units, and in some scenarios, the process where these optional units are turned off or skipped can be selected.

In this embodiment, for each current block (i.e., picture block), the corresponding bitstream includes three parts: bitstream 0 (containing the control parameter), bitstream 1 (containing coefficient hyperparameter feature information), and bitstream 2 (containing picture feature information). The coefficient hyperparameter feature information and picture feature information can be collectively referred to as picture information.

For example, the picture decoding method based on a neural network in this embodiment can include the following steps S51-S58.

In step S51, the bitstream 0 for the current block is decoded to obtain the control parameter for the current block. For example, the control parameter decoding unit can decode the bitstream 0 for the current block and obtain the control parameter for the current block. That is, the control parameter decoding unit can decode the control parameter from bitstream 0. The control parameter can include the control parameter for the first inverse quantization unit, the control parameter for the second inverse quantization unit, the control parameter for the coefficient hyperparameter feature generating unit, the control parameter for the picture feature inverse transform unit, and the control parameter for the quality enhancement unit. For the content of control parameters, please refer to the subsequent embodiments, which will not be repeated here.

In step S52, the bitstream 1 for the current block is decoded to obtain the coefficient hyperparameter feature information for the current block. For example, the first feature decoding unit can decode the bitstream 1 for the current block to obtain the coefficient hyperparameter feature information for the current block, that is, the first feature decoding unit can decode the coefficient hyperparameter feature information from bitstream 1.

In step S53, the reconstructed value of the coefficient hyperparameter feature coefficient is determined based on the coefficient hyperparameter feature information.

For example, if the control parameter includes the first enabling information for the first inverse quantization unit, the first enabling information can indicate enabling the first inverse quantization unit (i.e., enabling the first inverse quantization unit to perform the first inverse quantization), or the first enabling information can indicate not enabling the first inverse quantization unit. For example, the first enabling information being a first value indicates enabling the first inverse quantization unit, and the first enabling information being a second value indicates not enabling the first inverse quantization unit.

For example, when the first enabling information represents enabling the first inverse quantization unit, the coefficient hyperparameter feature information can be the quantized value C_q of coefficient hyperparameter feature coefficient, and the first inverse quantization unit can inverse quantize the quantized value C_q of coefficient hyperparameter feature coefficient to obtain the reconstructed value C' of the coefficient hyperparameter feature coefficient. When the first enabling information indicates that the first inverse quantization unit is not enabled, the coefficient hyperparameter feature information can be the reconstructed value C' of the coefficient hyperparameter feature coefficient, that is, the reconstructed value C' of the coefficient hyperparameter feature coefficient is directly decoded from bitstream 1.

In step S54, inverse transform is performed on the reconstructed value C' of the coefficient hyperparameter feature coefficient to obtain the coefficient hyperparameter feature value P. For example, the coefficient hyperparameter feature generating unit performs inverse transform on the reconstructed value C' of the coefficient hyperparameter feature coefficient to obtain the coefficient hyperparameter feature value P. For example, the coefficient hyperparameter feature generating unit performs inverse transform on the reconstructed value of the coefficient hyperparameter feature coefficient C' based on a decoding neural network to obtain the coefficient hyperparameter feature value P.

In an embodiment, the coefficient hyperparameter feature generating unit can obtain the neural network information 1 corresponding to the coefficient hyperparameter feature generating unit from the control parameters, and generate the decoding neural network 1 corresponding to the coefficient hyperparameter feature generating unit based on the neural network information 1.

In addition, the coefficient hyperparameter feature generating unit can determine the input feature (such as the reconstructed value C' of the coefficient hyperparameter feature coefficient) for the coefficient hyperparameter feature generating unit, and process the input feature based on the decoding neural network 1 (such as performing inverse transform on the reconstructed value C' of the coefficient hyperparameter feature coefficient) to obtain the output feature (such as the coefficient hyperparameter feature value P) for the coefficient hyperparameter feature generating unit.

For example, neural network information 1 can include basic layer information and enhancement layer information. The coefficient hyperparameter feature generating unit can determine the basic layer for the coefficient hyperparameter feature generating unit based on the basic layer information, and determine the enhancement layer for the coefficient hyperparameter feature generating unit based on the enhancement layer information. The coefficient hyperparameter feature generating unit can generate the decoding neural network 1 for the coefficient hyperparameter feature generating unit based on the basic layer and enhancement layer. For example, the basic layer and enhancement layer can be combined to obtain the decoding neural network 1.

After obtaining the decoding neural network 1, the coefficient hyperparameter feature generating unit can perform inverse transform on the reconstructed value C' of the coefficient hyperparameter feature coefficient through the decoding neural network 1 to obtain the coefficient hyperparameter feature value P. There are no restrictions on the inverse transform process.

In step S55, the bitstream 2 corresponding to the current block is decoded to obtain the picture feature information for the current block. For example, the second feature decoding unit can decode the bitstream 2 corresponding to the current block to obtain the picture feature information for the current block, that is, the second feature decoding unit can decode the picture feature information from bitstream 2. When decoding the bitstream 2 corresponding to the current block, the second feature decoding unit can use the coefficient hyperparameter feature value P to decode the bitstream 2 corresponding to the current block, where the decoding process is not limited.

In step S56, the reconstructed value of the picture feature is determined based on the picture feature information.

For example, if the control parameter includes the second enabling information for the second inverse quantization unit, the second enabling information can indicate enabling the second inverse quantization unit (i.e., enabling the second inverse quantization unit to perform the second inverse quantization), or the second enabling information can indicate not enabling the second inverse quantization unit. For example, the second enabling information being a first value indicates enabling the second inverse quantization unit, and the second enabling information being a second value indicates not enabling the second inverse quantization unit.

For example, if the second enabling information represents enabling the second inverse quantization unit, the picture feature information can be the quantized value F_q of the picture feature, and the second inverse quantization unit can obtain the quantized value F_q of the picture feature and perform inverse quantization on the quantized value F_q of the picture feature to obtain the reconstructed value F' of the picture feature. When the second enabling information indicates that the second inverse quantization unit is not enabled, the picture feature information can be the reconstructed value F' of the picture feature, that is the reconstructed value F' of the picture feature is directly decoded from bitstream 2.

In step S57, inverse transform is performed on the reconstructed value F' of the picture feature to obtain the low order feature value LF of the picture. For example, the picture feature inverse transform unit performs inverse transform on the reconstructed value F' of the picture feature to obtain the low order feature value LF of the picture. For example, based on the decoding neural network, the reconstructed value F' of the picture feature is inverse transformed to obtain the low order feature value LF of the picture.

In an embodiment, the picture feature inverse transform unit can obtain the neural network information 2 corresponding to the picture feature inverse transform unit from the control parameter, and generate the decoding neural network 2 corresponding to the picture feature inverse transform unit based on the neural network information 2. The picture feature inverse transform unit can determine the input feature (such as the reconstructed value F' of the picture feature) for the picture feature inverse transform unit, and based on the decoding neural network 2, process the input feature (such as performing inverse transform on the reconstructed value F' of the picture feature) to obtain the output feature (such as the picture low order feature value LF) for the picture feature inverse transform unit.

For example, the neural network information 2 can include basic layer information and enhancement layer information. The picture feature inverse transform unit can determine the basic layer for the picture feature inverse transform unit based on the basic layer information, and determine the enhancement layer for the picture feature inverse transform unit based on the enhancement layer information. The picture feature inverse transform unit can generate the decoding neural network 2 for the picture feature inverse transform unit based on the basic layer and the enhancement layer. For example, the basic layer and the enhancement layer can be combined to obtain the decoding neural network 2.

After obtaining the decoding neural network 2, the picture feature inverse transform unit can perform inverse transform on the reconstructed value F' of the picture feature through the decoding neural network 2 to obtain the low order feature value LF of the picture, and there is no restriction on the inverse transform process.

In step S58, the reconstructed picture block I for the current block is determined based on the low order feature value LF of the picture.

For example, when the control parameter includes third enabling information for the quality enhancement unit, the third enabling information can represent enabling the quality enhancement unit (i.e., enabling the quality enhancement unit to perform quality enhancements), or the third enabling information can represent not enabling the quality enhancement unit. For example, the third enabling information being the first value represents enabling the quality enhancement unit, and the third enabling information being the second value represents not enabling the quality enhancement unit.

For example, when the third enabling information represents enabling the quality enhancement unit, the quality enhancement unit obtains the low order feature value LF of the picture, performs enhancement processing on the low order feature value LF of the picture to obtain the reconstructed picture block I corresponding to the current block. If the third enabling information indicates that the quality enhancement unit is not enabled, the low order feature value LF of the picture is taken as the reconstructed picture block I corresponding to the current block.

For example, when the quality enhancement unit performs enhancement on the low order feature value LF of the picture, the quality enhancement unit can use a decoding neural network to enhance the low order feature value LF of the picture to obtain the reconstructed picture block I corresponding to the current block.

In an embodiment, the quality enhancement unit can obtain the neural network information 3 for the quality enhancement unit from the control parameter, and generate the decoding neural network 3 for the quality enhancement unit based on the neural network information 3.

The quality enhancement unit can determine the input feature (such as the low order feature value LF of the picture) for the quality enhancement unit, and process the input feature based on the decoding neural network 3 (such as enhancing the low order feature value LF of the picture) to obtain the output feature (such as the reconstructed picture block I corresponding to the current block) for the quality enhancement unit.

For example, the neural network information 3 can include basic layer information and enhancement layer information. The quality enhancement unit can determine the basic layer for the quality enhancement unit based on the basic layer information, and determine the enhancement layer for the quality enhancement unit based on the enhancement layer information. The quality enhancement unit can generate a decoding neural network 3 for the quality enhancement unit based on the basic layer and the enhancement layer. For example, the basic layer and the enhancement layer can be combined to obtain the decoding neural network 3.

After obtaining the decoding neural network 3, the quality enhancement unit can enhance the low order feature values LF of the picture through the decoding neural network 3 to obtain the reconstructed picture block I corresponding to the current block. There are no restrictions on this enhancement process.

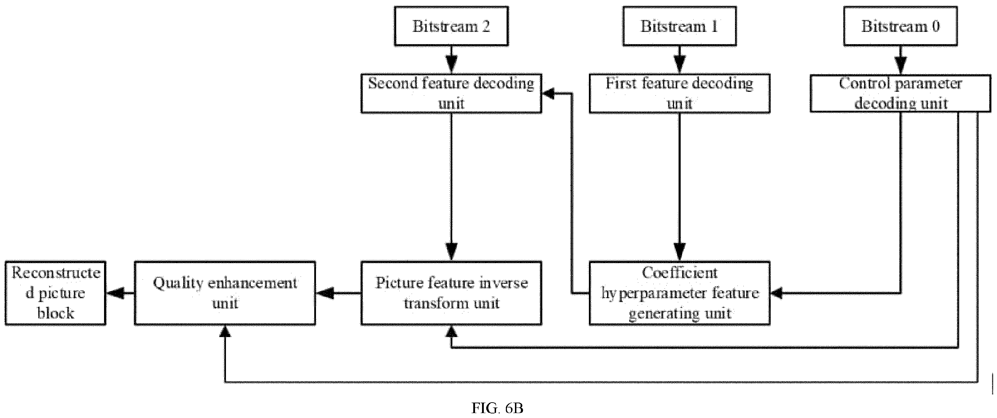

Embodiment 6: a picture decoding method based on a neural network is proposed in the embodiments of the present disclosure, which can be applied to the decoding end. As shown in FIG. 6B, which is a schematic diagram of a structure of the decoding end, the decoding end can include a control parameter decoding unit, a first feature decoding unit, a second feature decoding unit, a coefficient hyperparameter feature generating unit, and a picture feature inverse transform unit. In this embodiment, for each current block (i.e., picture block), the corresponding bitstream includes three parts: bitstream 0 (containing the control parameter), bitstream 1 (containing coefficient hyperparameter feature information), and bitstream 2 (containing picture feature information).

For example, the picture decoding method based on a neural network in this embodiment can include the following steps S61-S66.

In step S61, the control parameter decoding unit decodes the bitstream 0 for the current block to obtain the control parameter for the current block.

In step S62, the first feature decoding unit decodes the bitstream 1 for the current block to obtain the coefficient hyperparameter feature information for the current block. The coefficient hyperparameter feature information can be the reconstructed value C' of the coefficient hyperparameter feature coefficient.

In step S63, the coefficient hyperparameter feature generating unit performs inverse transform on the reconstructed value C' of the coefficient hyperparameter feature coefficient to obtain the coefficient hyperparameter feature value P. For example, based on the decoding neural network, inverse transform is performed on the reconstructed value C' of the coefficient hyperparameter feature coefficient to obtain the coefficient hyperparameter feature value P.

In step S64, the second feature decoding unit decodes the bitstream 2 corresponding to the current block to obtain the picture feature information for the current block, where the picture feature information can be the reconstructed value F' of the picture feature. For example, the second feature decoding unit can obtain the coefficient hyperparameter feature value P, and decode the bitstream 2 corresponding to the current block by the coefficient hyperparameter feature value P to obtain the reconstructed value F' of the picture feature.

In step S65, the picture feature inverse transform unit performs inverse transform on the reconstructed value F' of the picture feature to obtain the low order feature value LF of the picture. For example, based on the decoding neural network, the reconstructed value F' of the picture feature is inverse transformed to obtain the low order feature value LF of the picture.

In step S66, the reconstructed picture block I for the current block is determined based on the low order feature value LF of the picture.

For example, the low order feature value LF of the picture can be directly used as the reconstructed picture block I. Alternatively, when the decoding device further includes a quality enhancement unit, the quality enhancement unit enhances the low order feature values LF of the picture to obtain the reconstructed picture block I corresponding to the current block. For example, based on the decoding neural network, the low order feature values LF of the picture are enhanced to obtain the reconstructed picture block I.

Embodiment 7: for Embodiments 5 and 6, the first feature decoding unit can decode the bitstream 1 for the current block to obtain the coefficient hyperparameter feature information for the current block. For example, the first feature decoding unit includes at least one coefficient decoding module. In an embodiment, the coefficient decoding module can use an entropy decoding method to decode the coefficients, that is, use the entropy decoding method to decode the bitstream 1 corresponding to the current block to obtain the coefficient hyperparameter feature information for the current block.

For example, the entropy decoding method can include but is not limited to CAVLC (Context Adaptive Variable Length Coding) or CABAC (Context based Adaptive Binary Arithmetic Coding), etc., which is not limited in the present disclosure.

For example, when using the entropy decoding method for coefficient decoding, the probability model of entropy decoding can adopt a preset probability model, which can be configured according to actual needs without limitation. For example, based on a preset probability model, the coefficient decoding module can use the entropy decoding method for coefficient decoding.

Embodiment 8: regarding Embodiment 5, the first inverse quantization unit can perform inverse quantization on the quantized value C_q (i.e., coefficient hyperparameter feature information) of coefficient hyperparameter feature coefficient to obtain the reconstructed value C' of the coefficient hyperparameter feature coefficient. For example, there is no first inverse quantization unit, or when the first inverse quantization unit exists, the first inverse quantization unit can be selectively skipped based on the control parameter (such as high-level syntax, first enabling information, etc.), or enabled based on the control parameter.

For example, when the first inverse quantization unit does not exist, the reconstructed value C' of the coefficient hyperparameter feature coefficient is the same as the quantized value C_q of coefficient hyperparameter feature coefficient, that is, there is no need to inverse quantize the quantized value C_q of coefficient hyperparameter feature coefficient. When the first inverse quantization unit is selectively skipped based on the control parameter, the reconstructed value C' of the coefficient hyperparameter feature coefficient is the same as the quantized value C_q of the coefficient hyperparameter feature coefficient, that is, there is no need to inverse quantize the quantized value C_q of the coefficient hyperparameter feature coefficient. When the first inverse quantization unit is enabled based on the control parameter, but the stride parameter qstep for the quantized value C_q of coefficient hyperparameter feature coefficient is 1, the reconstructed value C' of the coefficient hyperparameter feature coefficient is the same as the quantized value C_q of coefficient hyperparameter feature coefficient, that is, there is no need to inverse quantize the quantized value C_q of coefficient hyperparameter feature coefficient.

For example, when it is determined that the first inverse quantization unit is enabled based on the control parameter, and the stride parameter qstep corresponding to the quantized value C_q of coefficient hyperparameter feature coefficient is not 1, the first inverse quantization unit can inverse quantize the quantized value C_q of coefficient hyperparameter feature coefficient based on the control parameter (such as a quantization related parameter) to obtain the reconstructed value C' of the coefficient hyperparameter feature coefficient. For example, the first inverse quantization unit performs the following operation: obtaining the quantization related parameter (the bitstream includes the control parameter, and the control parameter can include the quantization related parameter) corresponding to the quantized value C_q of coefficient hyperparameter feature coefficient from the control parameter, such as the stride parameter qstep or the quantization parameter qp. Based on the stride parameter qstep or quantization parameter qp, determine the multiplication factor (mult) and shift factor (shift) corresponding to the quantized value C_q of the coefficient hyperparameter feature coefficient. Assuming that the quantized value C_q of the coefficient hyperparameter feature coefficient is Coff_hyper, and the reconstructed value C' of the coefficient hyperparameter feature coefficient is Coff_hyper-rec, Coff_hyper-rec = (Coff_hyper * mult)<<shift. Therefore, when performing inverse quantization C_q on the quantized value of the coefficient hyperparameter feature coefficient, the above formula can be used to obtain the reconstructed value C' of the coefficient hyperparameter feature coefficient.

It should be noted that for the quantization related parameter (such as stride parameter qstep) corresponding to the quantized value C_q of the coefficient hyperparameter feature coefficient, it can include: 1) the quantized value of each coefficient hyperparameter feature coefficient of each feature channel uses the same stride parameter qstep; 2) the quantized value of coefficient hyperparameter feature coefficients of each feature channel uses a different stride parameter qstep, but the quantized value of coefficient hyperparameter feature coefficient within a feature channel uses the same stride parameter qstep; or 3) the quantized value of each coefficient hyperparameter feature coefficient in each feature channel uses a different stride parameter qstep. In the above process, the stride parameter qstep can also be referred to as the quantization stride.

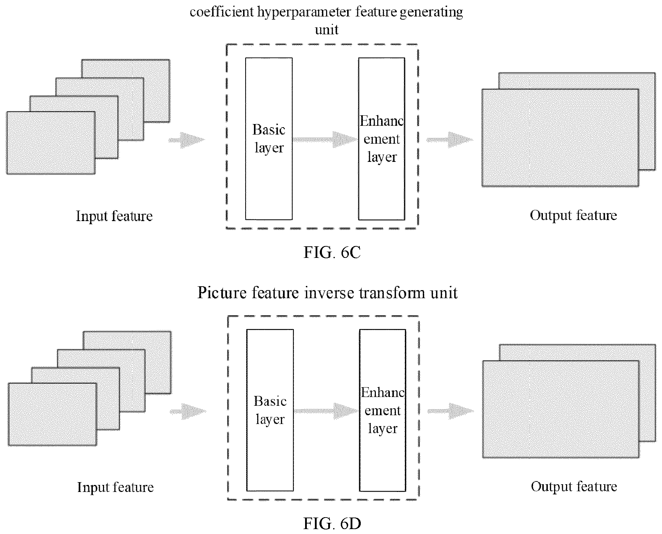

Embodiment 9: regarding Embodiments 5 and 6, the coefficient hyperparameter feature generating unit can perform inverse transform on the reconstructed value C' of the coefficient hyperparameter feature coefficient based on the decoding neural network to obtain the coefficient hyperparameter feature value P. In an embodiment, as shown in FIG. 6C, the coefficient hyperparameter feature generating unit can include a decoding neural network 1, where the decoding neural network 1 can include a basic layer and an enhancement layer. The reconstructed value C' of the coefficient hyperparameter feature coefficient is used as the input feature of the decoding neural network 1, and the coefficient hyperparameter feature value P is used as the output feature of the decoding neural network 1. The decoding neural network 1 is configured to perform inverse transform on the reconstructed value C' of the coefficient hyperparameter feature coefficient.

In this embodiment, the decoding neural network 1 is split into a basic layer and an enhancement layer. The basic layer can include at least one network layer, or the basic layer can include no network layer, i.e., the basic layer is empty. The enhancement layer can include at least one network layer, or the enhancement layer can include no network layer, i.e., the enhancement layer is empty. It should be noted that for multiple network layers in decoding neural network 1, the network layers can be split into basic layers and enhancement layers according to actual needs. For example, the first M1 network layers can be used as basic layers and the remaining network layers can be used as enhancement layers, or the first M2 network layers can be used as enhancement layers and the remaining network layers can be used as basic layers, or the last M3 network layers can be used as basic layers and the remaining network layers can be used as enhancement layers, or the last M4 network layers can be used as enhancement layers and the remaining network layers can be used as basic layers, or the odd numbered network layers can be used as basic layers and the remaining network layers can be used as enhancement layers, or the even numbered network layers can be used as basic layers and the remaining network layers can be used as enhancement layers. The above are just a few examples and do not limit the splitting method.

For example, the network layer with a fixed network structure can be used as the basic layer, and the network layer with an unfixed network structure can be used as the enhancement layer. For example, for a certain network layer in the decoding neural network 1, when multiple picture blocks are decoded, the network layer adopts the same network structure, then the network layer will be used as the fixed network layer and the basic layer. For example, for a certain network layer in the decoding neural network 1, when multiple picture blocks are decoded, the network layer adopts different network structures, then the network layer will be used as the unfixed network layer and the enhancement layer.

For example, for the decoding neural network 1, the size of the output feature can be larger than the size of the input feature, or the size of the output feature can be equal to the size of the input feature, or the size of the output feature can be smaller than the size of the input feature.

For the decoding neural network 1, the basic layer and enhancement layer include at least one deconvolutional layer. For example, the basic layer can include at least one deconvolutional layer, and the enhancement layer can include at least one deconvolutional layer or not include any deconvolutional layer. Alternatively, the enhancement layer can include at least one deconvolutional layer, and the basic layer can include at least one deconvolutional layer or not include any deconvolutional layer.

For example, the decoding neural network 1 can include but is not limited to deconvolutional layers and activation layers, etc., which is not limited in the present disclosure. For example, the decoding neural network 1 sequentially includes one deconvolutional layer with a stride being 2, one activation layer, one deconvolutional layer with a stride being 1, and one activation layer. All the above network layers can be used as the basic layers, that is, the basic layers include one deconvolutional layer with a stride being 2, one activation layer, one deconvolutional layer with a stride being 1, and one activation layer. In this case, the enhancement layer is empty. Of course, some network layers can also be used as enhancement layers without limitation. For example, the decoding neural network 1 sequentially includes one deconvolutional layer with a stride being 2 and one deconvolutional layer with a stride being 1. All the above network layers can be used as the basic layers, that is, the basic layers include one deconvolutional layer with a stride being 2 and one deconvolutional layer with a stride being 1. In this case, the enhancement layer is empty. Of course, some network layers can also be used as enhancement layers without limitation. For example, the decoding neural network 1 sequentially includes one deconvolutional layer with a stride being 2, one activation layer, one deconvolutional layer with a stride being 2, one activation layer, one deconvolutional layer with a stride being 1, and one activation layer. All of the above network layers can be used as the basic layers, that is, the basic layers include one deconvolutional layer with a stride being 2, one activation layer, one deconvolutional layer with a stride being 2, one activation layer, one deconvolutional layer with a stride being 1, and one activation layer. In this case, the enhancement layer is empty. Of course, some network layers can also be used as enhancement layers without limitation. The above are just a few examples and are not limiting.

In an embodiment, the coefficient hyperparameter feature generating unit can be configured with a network layer of a default network structure (the network layer of the default network structure can be composed of at least one network layer), and the network parameters related to the network layer of the default network structure are fixed. For example, the network parameter can include but is not limited to at least one of the following: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, a number of activation layers, an activation layer flag, or an activation layer type. In other words, the above network parameters are fixed. For example, in the network layers of the default network structure, the number of deconvolutional layers is fixed, the number of activation layers is fixed, the number of channels in each deconvolutional layer is fixed, the size of the convolutional kernel is fixed, and the filtering coefficient is fixed. For example, the number of channels in the deconvolutional layer is 4, 8, 16, 32, 64, 128, or 256, and the size of the convolutional kernel is 1 * 1, 3 * 3, or 5 * 5. Since the network parameters in the network layers of the default network structure are fixed and known, it is possible to directly obtain the network layers of the default network structure.

In an embodiment, a predesigned neural network pool can be configured for the coefficient hyperparameter feature generating unit. The predesigned neural network pool can include network layers of at least one predesigned network structure (the network layer of the predesigned network structure can be composed of at least one network layer), and the network parameter related to the network layer of the predesigned network structure can be configured according to actual needs. For example, the network parameter can include but is not limited to at least one of the following: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, a number of activation layers, an activation layer flag, or an activation layer type. That is, the above network parameters can be configured according to actual needs.

For example, a predesigned neural network pool can include network layers of predesigned network structure s1, network layers of predesigned network structure s2, and network layers of predesigned network structure s3. Where for the network layers of the predesigned network structure s1, the number of deconvolutional layers, the number of activation layers, the number of channels in each deconvolutional layer, the size of the convolutional kernel, filtering coefficients and other network parameters can be pre-configured. After all network parameters are configured, the network layers of the predesigned network structure s1 can be obtained. Similarly, the network layers of the predesigned network structure s2 and the predesigned network structure s3 can be obtained, which will not be repeated here.

In an embodiment, a variable network structure network layer (which can be composed of at least one network layer) can be dynamically generated for the coefficient hyperparameter feature generating unit based on network parameters. The network parameters related to the variable network structure network layer are dynamically generated by the encoding end, rather than pre-configured. For example, the encoding end can transmit the network parameters for the coefficient hyperparameter feature generating unit to the decoding end. The network parameter can include but is not limited to at least one of the following: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, a number of activation layers, an activation layer flag, or an activation layer type. The decoding end dynamically generates network layers with variable network structures based on the above network parameters. For example, the encoding end encodes network parameters such as the number of deconvolutional layers, the number of activation layers, the number of channels in each deconvolutional layer, the size of the convolutional kernel, and the filtering coefficients in the bitstream. The decoding end can parse the above network parameters from the bitstream and generate network layers with variable network structures based on these network parameters. The generation process is not limited.

In an embodiment, the decoding neural network 1 can be split into basic layers and enhancement layers. The combination of the basic layers and the enhancement layers can include, but is not limited to, the following manners 1 to 6: manner 1: The basic layers adopt network layers with a default network structure, the enhancement layers adopt network layers with a default network structure, and the basic layers and the enhancement layers are combined to form the decoding neural network 1. Manner 2: the basic layers adopt the network layers with a default network structure, the enhancement layers adopt the network layers with a predesigned network structure, and the basic layers and the enhancement layers are combined to form the decoding neural network 1. Manner 3: the basic layers adopt the network layers with a default network structure, the enhancement layers adopt the network layers with a variable network structure, and the basic layers and the enhancement layers are combined to form the decoding neural network 1. Manner 4: the basic layers adopt the network layers with a predesigned network structure, the enhancement layers adopt the network layers with a default network structure, and the basic layers and the enhancement layers are combined to form the decoding neural network 1. Manner 5: the basic layers adopt the network layers with a predesigned network structure, the enhancement layers adopt the network layers with a predesigned network structure, and the basic layers and the enhancement layers are combined to form the decoding neural network 1. Manner 6: the basic layers adopt the network layers with a predesigned network structure, the enhancement layers adopt the network layers with a variable network structure, and the basic layers and the enhancement layers are combined to form the decoding neural network 1.

In an embodiment, the control parameters can include neural network information 1 for the coefficient hyperparameter feature generating unit, where the coefficient hyperparameter feature generating unit can parse the neural network information 1 from the control parameters and generate a decoding neural network 1 based on the neural network information 1. For example, neural network information 1 can include basic layer information and enhancement layer information. The basic layer can be determined based on this basic layer information, and the enhancement layer can be determined based on this enhancement layer information. The basic layer and enhancement layer can be combined to obtain decoding neural network 1. For example, the following scenarios 1 to 6 can be used to obtain the neural network information 1 for the coefficient hyperparameter feature generating unit.

Scenario 1: the basic layer information includes the basic layer usage default network flag, and the basic layer usage default network flag indicates that the basic layer uses the default network. In this scenario, the coefficient hyperparameter feature generating unit obtains the network layer of the default network structure based on the basic layer information, and thus obtains the basic layer of the default network structure (i.e., the network layer of the default network structure). The enhancement layer information includes the enhancement layer usage default network flag, and the enhancement layer usage default network flag indicates that the enhancement layer uses the default network. In this case, the coefficient hyperparameter feature generating unit obtains the network layer of the default network structure based on the enhancement layer information, and thus obtains the enhancement layer of the default network structure (i.e., the network layer of the default network structure). On this basis, the basic layer of the default network structure and the enhancement layer of the default network structure can be combined to obtain decoding neural network 1.

Scenario 2: the basic layer information includes the basic layer usage default network flag, and the basic layer usage default network flag indicates that the basic layer uses the default network. In this scenario, the coefficient hyperparameter feature generating unit obtains the network layer of the default network structure based on the basic layer information, and thus obtains the basic layer of the default network structure (i.e., the network layer of the default network structure). The enhancement layer information includes the enhancement layer usage predesigned network flag and enhancement layer predesigned network index, and the enhancement layer usage predesigned network flag indicates that the enhancement layer uses the predesigned network. In this case, the coefficient hyperparameter feature generating unit determines based on the enhancement layer information that the enhancement layer adopts the network layer of the predesigned network structure. Therefore, the enhancement layer of the predesigned network structure corresponding to the enhancement layer predesigned network index is selected from the predesigned neural network pool. For example, when the enhancement layer predesigned network index is 0, the network layer of the predesigned network structure s1 is used as the enhancement layer, and when the enhancement layer predesigned network index is 1, the network layer of the predesigned network structure s2 is used as the enhancement layer. On this basis, the basic layer of the default network structure and the enhancement layer of the predesigned network structure can be combined to obtain decoding neural network 1.

Scenario 3: the basic layer information includes the basic layer usage default network flag, and the basic layer usage default network flag indicates that the basic layer uses the default network. In this scenario, the coefficient hyperparameter feature generating unit obtains the network layer of the default network structure based on the basic layer information, and thus obtains the basic layer of the default network structure (i.e., the network layer of the default network structure). The enhancement layer information includes network parameters used to generate the enhancement layer. In this case, the coefficient hyperparameter feature generating unit can parse the network parameters from the control parameter and generate an enhancement layer with the variable network structure (i.e., a network layer with the variable network structure) based on the network parameters. Where the network parameter can include but is not limited to at least one of the following: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, a number of activation layers, an activation layer flag, or an activation layer type. The coefficient hyperparameter feature generating unit can generate an enhancement layer with a variable network structure based on the above network parameters. For example, the coefficient hyperparameter feature generating unit parses network parameters such as the number of deconvolutional layers, the quantization stride of each deconvolutional layer, the number of channels in each deconvolutional layer, the size of the convolutional kernel, and the type of activation layer from the control parameter. Based on these network parameters, the coefficient hyperparameter feature generating unit generates an enhancement layer with a variable network structure. On this basis, the coefficient hyperparameter feature generating unit can combine the basic layer of the default network structure and the enhancement layer of the variable network structure to obtain the decoding neural network 1.

Scenario 4: basic layer information includes the basic layer usage predesigned network flag and basic layer predesigned network index. The basic layer usage predesigned network flag indicates that the basic layer uses the predesigned network. In this scenario, the coefficient hyperparameter feature generating unit determines based on the basic layer information that the basic layer uses the network layer with the predesigned network structure. Therefore, the coefficient hyperparameter feature generating unit selects the basic layer of the predesigned network structure corresponding to the basic layer predesigned network index from the predesigned neural network pool. For example, when the basic layer predesigned network index is 0, the network layer of the predesigned network structure s1 is used as the basic layer, and when the basic layer predesigned network index is 1, the network layer of the predesigned network structure s2 is used as the basic layer. The enhancement layer information includes the enhancement layer usage default network flag, and the enhancement layer usage default network flag indicates that the enhancement layer uses the default network. In this case, the coefficient hyperparameter feature generating unit obtains the network layer of the default network structure based on the enhancement layer information, and thus obtains the enhancement layer of the default network structure (i.e., the network layer of the default network structure). On this basis, the basic layer of the predesigned network structure and the enhancement layer of the default network structure can be combined to obtain decoding neural network 1.

Scenario 5: basic layer information includes the basic layer usage predesigned network flag and basic layer predesigned network index. The basic layer usage predesigned network flag indicates that the basic layer uses the predesigned network. In this scenario, the coefficient hyperparameter feature generating unit determines based on the basic layer information that the basic layer uses the network layer with the predesigned network structure. Therefore, the basic layer of the predesigned network structure (such as the network layer of predesigned network structure s1, etc.) corresponding to the basic layer predesigned network index can be selected from the predesigned neural network pool. The enhancement layer information includes the enhancement layer usage predesigned network flag and enhancement layer predesigned network index, and the enhancement layer usage predesigned network flag indicates that the enhancement layer uses the predesigned network. In this case, the coefficient hyperparameter feature generating unit determines based on the enhancement layer information that the enhancement layer adopts the network layer of the predesigned network structure. Therefore, the enhancement layer of the predesigned network structure (such as the network layer of the predesigned network structure s1, etc.) corresponding to the enhancement layer predesigned network index can be selected from the predesigned neural network pool. On this basis, the basic layer of the predesigned network structure and the enhancement layer of the predesigned network structure can be combined to obtain decoding neural network 1.

Scenario 6: basic layer information includes the basic layer usage predesigned network flag and basic layer predesigned network index. The basic layer usage predesigned network flag indicates that the basic layer uses the predesigned network. In this scenario, the coefficient hyperparameter feature generating unit determines based on the basic layer information that the basic layer uses the network layer with the predesigned network structure. Therefore, the basic layer of the predesigned network structure (such as the network layer of predesigned network structure s1, etc.) corresponding to the basic layer predesigned network index can be selected from the predesigned neural network pool. The enhancement layer information includes network parameters used to generate the enhancement layer. In this case, the coefficient hyperparameter feature generating unit can parse the network parameters from the control parameter and generate an enhancement layer with the variable network structure (i.e., a network layer with the variable network structure) based on the network parameters. For example, the coefficient hyperparameter feature generating unit parses network parameters such as the number of deconvolutional layers, the quantization stride of each deconvolutional layer, the number of channels in each deconvolutional layer, the size of the convolutional kernel, and the type of activation layer can from the control parameter. Based on these network parameters, the coefficient hyperparameter feature generating unit generates an enhancement layer with a variable network structure. On this basis, the coefficient hyperparameter feature generating unit can combine the basic layer of the predesigned network structure and the enhancement layer of the variable network structure to obtain the decoding neural network 1.

In an embodiment, the above network structures of the basic layer and enhancement layer can be determined by the decoded control parameter. The control parameter can include neural network information 1, and neural network information 1 can include basic layer information and enhancement layer information. An example of neural network information 1 for the coefficient hyperparameter feature generating unit can be seen in Table 1, where u (n) represents the n-bit fixed length code encoding method and ae (v) represents the variable length code encoding method.

**Table 1**

| | |
|---|---|
| Definition of Head for Coefficient Hyperparameter Feature generating unit | descriptor |
| hyper_basic_layer_use_default_para_flag | ae(v) |
| if (HyperBasicLayerUseDefaultParaFlag == 0) { | |
| hyper_basic_layer_use_predesigned_para_flag | ae(v) |
| if (HyperBasicLayerUsePredesignedParaFlag == 1) | |
| hyper_basic_id | u(32) |
| else | |
| layer_parameter() | |
| } | |
| hyper_enhance_layer_use_default_para _flag | ae(v) |
| if (HyperEnhanceLayerUseDefaultParaFlag == 0) { | |
| hyper _enhance_layer_use_predesigned_para_flag | ae(v) |
| if (HyperEnhaanceLayerUsePredesignedParaFlag == 1) | |
| hyper_enhance_id | u(32) |
| else | |
| layer_parameter() | |
| } | |

In Table 1, hyper _basic_layer_use_default_para_flag is the basic layer usage default network flag for the coefficient hyperparameter feature generating unit. hyper_basic_layer_use_default_para_flag is a binary variable, with a value of 1 indicating that the basic layer of the coefficient hyperparameter feature generating unit uses a default network, and a value of 0 indicating that the basic layer of the coefficient hyperparameter feature generating unit does not use the default network. The value of HyperBasicLayerUseDefaultParaFlag is equal to the value of hyper _basic_layer_use _default_para_flag.

In Table 1, hyper _basic_layer_use_predesigned_para_flag is a basic layer usage predesigned network flag of the coefficient hyperparameter feature generating unit, and hyper_basic _layer_use_predesigned_para_flag is a binary variable. The value of the binary variable being 1 indicates that the basic layer of the coefficient hyperparameter feature generating unit uses a predesigned network, and the value of the binary variable being 0 indicates that the basic layer of the coefficient hyperparameter feature generating unit does not use a predesigned network. The value of HyperBasicLayerUsePredesignedParaFlag can be equal to the value of hyper_basic_layer_use_predesigned_para_flag.

In Table 1, hyper_basic_id is the basic layer predesigned network index for the coefficient hyperparameter feature generating unit. The basic layer predesigned network index can be a 32-bit unsigned integer representing the index of the neural network used in the basic layer in the predesigned neural network pool.

In Table 1, hyper_enhance_layer_use_default_para_ flag is the enhancement layer usage default network flag for the coefficient hyperparameter feature generating unit, and hyper_enhance_layer_use_default_para_flag is a binary variable. The value of the binary variable being 1 indicates that the enhancement layer of the coefficient hyperparameter feature generating unit uses the default network, and the value of the binary variable being 0 indicates that the enhancement layer of the coefficient hyperparameter feature generating unit does not use the default network. The value of HyperEnhanceLayerUseDefaultParaFlag can be equal to the value of hyper_enhance_layer__use_default_para_flag.

In Table 1, hyper_enhance_layer_use_predesigned_para_flag is an enhancement layer usage predesigned network flag of the coefficient hyperparameter feature generating unit, and hyper_enhance_layer_use_predesigned_para_flag is a binary variable. The value of the binary variable being 1 indicates that the enhancement layer of the coefficient hyperparameter feature generating unit uses a predesigned network. The value of the binary variable being 0 indicates that the enhancement layer of the coefficient hyperparameter feature generating unit does not use a predesigned network. The value of HyperEnhanceLayerUsePredesignedParaFlag can be equal to the value of hyper_enhance_layer_use_predesigned_para_flag.

In Table 1, hyper_enhance_id is the enhancement layer predesigned network index for the coefficient hyperparameter feature generating unit. The enhancement layer predesigned network index can be a 32-bit unsigned integer representing the index of the neural network used by the enhancement layer in the predesigned neural network pool.

In the above process, the range of hyper_basic_id is [id_min, id_max], with id_min preferably set to 0 and id_max preferably set to 2 ^ 32-1. The [a, b] is reserved segment for later expansion of the predesigned neural network pool. It should be noted that the predesigned neural network pool for the basic layer can include several basic layer predesigned networks, such as 2, 3, 4, etc., include dozens of basic layer predesigned networks, or include more basic layer predesigned networks, which is not limited in the present disclosure. The preferred value of id_max as 2 ^ 32-1 is just an example, and the value of id_max can be dynamically adjusted in different situations.

In the above process, the range of hyper_enhance_id is [id_min, id_max], with id_min preferably set to 0 and id_max preferably set to 2 ^ 32-1. The [a, b] is reserved segment for later expansion of the predesigned neural network pool. It should be noted that the predesigned neural network pool for the enhancement layer can include several enhancement layer predesigned networks, such as 2, 3, 4, etc., include dozens of enhancement layer predesigned networks, or include more enhancement layer predesigned networks, which is not limited in the present disclosure. The preferred value of id_max as 2 ^ 32-1 is just an example, and the value of id_max can be dynamically adjusted in different situations.

In an embodiment, the above network structure for the enhancement layer can be determined by the decoded control parameter. The control parameter can include neural network information 1, and neural network information 1 can include enhancement layer information. An example of neural network information 1 for the coefficient hyperparameter feature generating unit can be seen in Tables 2 and 3.

**Table 2**

| | |
|---|---|
| Layer_parameter() Definition | descriptor |
| layer_parameter(){ | |
| layer_num | ae(v) |
| for(i=0; i<LayerNum; i++){ | |
| layer_unit_parameter() | |
| } | |
| } | |

**Table 3**

| | |
|---|---|
| Layer_unit_parameter() Definition | descriptor |
| layer_unit_parameter(){ | |
| deconv_layer_flag | ae(v) |
| if (DeconvLayerFlag == 1) { | |
| stride_num | ae(v) |
| filter_num | ae(v) |
| filter_size_index | ae(v) |
| for(i=0; i< FilterNum; i++){ | |
| for(j=0; j< FilterSize; j++){ | |
| filter_coeff_zero_flag[i][j] | ae(v) |
| if (FilterCoeffZeroFlag == 0) | |
| filter_coeff[i][j] | ae(v) |
| } | |
| } | |
| } | |
| activation_layer_flag | ae(v) |
| if (ActivationLayerFlag == 1) | |
| activation_layer_type | ae(v) |
| ..... | |
| } | |

In Table 2, layer_num represents the neural network layer number, used to indicate the number of layers in the neural network. If the activation layer is included in a certain network structure, no additional layers are calculated. The value of LayerNum is equal to layer_num.

In Table 3, deconv_layer_flag represents the deconvolutional layer flag, and deconv_layer_flag is a binary variable. The value of the binary variable being 1 indicates that the current layer is a deconvolutional layer network. The value of the binary variable being 0 indicates that the current layer is not a deconvolutional layer network. The value of DeconvLayerFlag is equal to the value of deconv_layer_flag.

In Table 3, stride_num represents the quantization stride of the deconvolutional layer.

In Table 3, filter_num represents the filter number, i.e., the number of filters in the current layer.

In Table 3, filter_size_index represents the filter size index, i.e., the index of the current filter size.

In Table 3, filter_coeff_zero_flag [i] [j] represents the filter coefficient being zero flag and is a binary variable. The value of the binary variable being 1 indicates that the current filtering coefficient is 0. The value of the binary variable being 0 indicates that the current filtering coefficient is not 0. The value of FilterCoeffZeroFlag [i] [j] is equal to the value of filter_coeff_zero_flag [i] [j].

In Table 3, filter_coeff [i] [j] represents the filtering coefficient, i.e., the current filtering coefficient.

In Table 3, activation_layer_flag represents the activation layer flag, and is a binary variable. The value of the binary variable being 1 indicates that the current layer is an active layer. The value of the binary variable being 0 indicates that the current layer is not an active layer. The value of ActivationLayerFlag is equal to the value of activation_layer_flag.

In Table 3, activation_layer_type represents the activation layer type, i.e., the specific type of activation layer in the current layer.

Embodiment 10: regarding Embodiments 5 and 6, the second feature decoding unit can decode bitstream 2 corresponding to the current block to obtain the picture feature information for the current block. For example, the second feature decoding unit includes at least one coefficient decoding module and at least one probability model obtaining module. In an embodiment, the coefficient decoding module can use the entropy decoding method to decode the coefficients, i.e., use the entropy decoding method to decode bitstream 2 for the current block to obtain the picture feature information for the current block.

For example, the entropy decoding method can include but is not limited to CAVLC or CABAC, etc., which is not limited in the present disclosure.

For example, the second feature decoding unit which uses the features generated by the coefficient hyperparameter feature generating unit can include methods 1 and 2.

Method 1: the probability model obtaining module is configured to obtain the probability model for entropy decoding. For example, the probability model obtaining module obtains the coefficient hyperparameter feature value P from the coefficient hyperparameter feature generating unit. On this basis, the coefficient decoding module can obtain the coefficient hyperparameter feature value P from the probability model obtaining module. Based on the coefficient hyperparameter feature value P, the coefficient decoding module can use the entropy decoding method for coefficient decoding.

Method 2: the coefficient parsing process (such as CABAC or CAVCL decoding process) does not rely on the features generated by the coefficient hyperparameter feature generating unit, and can directly parse the coefficient values, which can ensure parsing throughput or rate. Based on the features generated by the coefficient hyperparameter feature generating unit, the analysed coefficient values are transformed to obtain the quantized value F_q of the picture feature. For example, if the coefficient value obtained from the coefficient analysis process is 0, and the corresponding feature value generated by the coefficient hyperparameter feature generating unit is u, F_q=u. If the coefficient value obtained from the coefficient analysis process is 1, and the corresponding feature value generated by the coefficient hyperparameter feature generating unit is u, F_q=u+x, where x is the corresponding coefficient variance.

Embodiment 11: regarding Embodiment 5, the second inverse quantization unit can perform inverse quantization on the quantized value F_q of the picture feature (i.e., picture feature information) to obtain the reconstructed value F' of the picture feature. For example, there is no second inverse quantization unit, or when the second inverse quantization unit exists, the second inverse quantization unit can be selectively skipped based on the control parameter (such as high-level syntax, second enabling information, etc.), or enabled based on the control parameter. For example, if the second inverse quantization unit does not exist, the reconstructed value F' of the picture feature is the same as the quantized value F_q of the picture feature, that is, there is no need to inverse quantize the quantized value F_q of the picture feature. If the second inverse quantization unit is selectively skipped based on the control parameter, the reconstructed value F' of the picture feature is the same as the quantized value F_q of the picture feature, that is, there is no need to inverse quantize the quantized value F_q of the picture feature. If the second inverse quantization unit is enabled based on the control parameter, and the stride parameter qstep corresponding to the quantized value F_q of the picture feature is 1, the reconstructed value F' of the picture feature is the same as the quantized value F_q of the picture feature. That is, there is no need to inverse quantize the quantized value F_q of the picture feature.

For example, if the second inverse quantization unit is enabled based on the control parameter and the stride parameter qstep corresponding to the quantized value F_q of the picture feature is not 1, the second inverse quantization unit can inverse quantize the quantized value F_q of the picture feature based on the control parameter (such as quantization related parameters) to obtain the reconstructed value F' of the picture feature. For example, the second inverse quantization unit performs the following operation: obtaining the quantization related parameter corresponding to the quantized value F_q of the picture feature from the control parameter (the bitstream including the control parameter, where the control parameter can include the quantization related parameter), such as the stride parameter qstep or the quantization parameter qp. The multiplication factor (mult) and shift factor (shift) corresponding to the quantized value F_q of the picture feature are determined based on the stride parameter qstep or quantization parameter qp. Assuming that the quantized value F_q of the picture feature is Coff_hyper and the reconstructed value F' of the picture feature is Coff_hyper_rec, Coff_hyper_rec = (Coff_hyper * mult)<<shift. That is, when performing inverse quantization, the above formula can be used to obtain the reconstructed value F' of the picture feature.

It should be noted that for the quantization related parameter (such as stride parameter qstep) corresponding to the quantized value F_q of the picture feature, it can include: 1) the quantized values of the picture features for respective feature channels use the same stride parameter qstep; 2) the quantized values of the picture features for respective feature channels use different stride parameters qstep, but the quantized value of the picture features within a feature channel use the same stride parameter qstep; or 3) the quantized values of the picture features in respective feature channels use different stride parameters qstep.

Embodiment 12: regarding Embodiments 5 and 6, the picture feature inverse transform unit can perform inverse transform on the reconstructed value F' of the picture feature based on a decoding neural network to obtain the low order feature value LF of the picture. In an embodiment, as shown in FIG. 6D, the picture feature inverse transform unit can include a decoding neural network 2. The decoding neural network 2 can include a basic layer and an enhancement layer. The reconstructed value F' of the picture feature is used as the input feature of the decoding neural network 2, and the picture low order feature value LF is used as the output feature of the decoding neural network 2. The decoding neural network 2 is configured to perform inverse transform on the reconstructed value F' of the picture feature.

In this embodiment, the decoding neural network 2 is split into a basic layer and an enhancement layer. The basic layer can include at least one network layer, or the basic layer can include no network layer, i.e., the basic layer is empty. The enhancement layer can include at least one network layer, or the enhancement layer can include no network layer, i.e., the enhancement layer is empty. It should be noted that for multiple network layers in decoding neural network 2, the network layers can be split into basic layers and enhancement layers according to actual needs. For example, the network layer with a fixed network structure can be used as the basic layer, and the network layer with an unfixed network structure can be used as the enhancement layer.

For example, for the decoding neural network 2, the size of the output feature can be larger than the size of the input feature, or the size of the output feature can be equal to the size of the input feature, or the size of the output feature can be smaller than the size of the input feature.

For the decoding neural network 2, the basic layer and enhancement layer include at least one deconvolutional layer. For example, the basic layer can include at least one deconvolutional layer, and the enhancement layer can include at least one deconvolutional layer or not include any deconvolutional layer. Alternatively, the enhancement layer can include at least one deconvolutional layer, and the basic layer can include at least one deconvolutional layer or not include any deconvolutional layer.

For decoding neural network 2, the basic layer and enhancement layer include at least one residual structural layer. For example, the basic layer includes at least one residual structural layer, and the enhancement layer includes a residual structural layer, or not. Alternatively, the enhancement layer can include at least one residual structural layer, and the basic layer can include a residual structural layer, or not.

For example, the decoding neural network 2 can include but is not limited to deconvolutional layers and activation layers, etc., which is not limited in the present disclosure. For example, the decoding neural network 2 sequentially includes one deconvolutional layer with a stride being 2, one activation layer, one deconvolutional layer with a stride being 1, and one activation layer. All the above network layers can be used as the basic layer, and the enhancement layer is empty. For example, the decoding neural network 2 sequentially includes one deconvolutional layer with a stride being 2 and one deconvolutional layer with a stride being 1. All the above network layers can be used as the basic layer, and the enhancement layer is empty. For example, the decoding neural network 2 sequentially includes one deconvolutional layer with a stride being 2, one activation layer, one deconvolutional layer with a stride being 2, one activation layer, one deconvolutional layer with a stride being 1, and one activation layer. All the above network layers can be used as the basic layer, and the enhancement layer is empty.

For example, if there is no quality enhancement unit, the number of output features (number of filters) of the last network layer of the picture feature inverse transform unit is 1 or 3. For example, if the output is only the value of one channel (such as a grayscale picture), the number of output features of the last network layer of the picture feature inverse transform unit is 1. If the output is only values from three channels (such as RGB or YUV format), the number of output features of the last network layer of the picture feature inverse transform unit is 3.

For example, if there is a quality enhancement unit, the number of output features (number of filters) of the last network layer of the picture feature inverse transform unit can be 1 or 3, or other values, which is not limited in the present disclosure.

In an embodiment, the picture feature inverse transform unit can be configured with a network layer of a default network structure, and the network parameter related to the network layer of the default network structure is fixed. For example, in the network layers of the default network structure, the number of deconvolutional layers is fixed, the number of activation layers is fixed, the number of channels in each deconvolutional layer is fixed, the size of the convolutional kernel is fixed, and the filtering coefficient is fixed. Since the network parameters in the network layers of the default network structure are fixed and known, it is possible to directly obtain the network layers of the default network structure.

In an embodiment, a predesigned neural network pool can be configured for the picture feature inverse transform unit. The predesigned neural network pool includes network layers of at least one predesigned network structure. The network parameters related to the predesigned network layer can be configured according to actual needs. For example, a predesigned neural network pool includes network layers of predesigned network structure t1, network layers of predesigned network structure t2, and network layers of predesigned network structure t3. Where for the network layers of the predesigned network structure t1, the number of deconvolutional layers, the number of activation layers, the number of channels in each deconvolutional layer, the size of the convolutional kernel, filtering coefficients and other network parameters can be pre-configured. After all network parameters are configured, the network layers of the predesigned network structure t1 can be obtained. And so on.

In an embodiment, a network layer of a variable network structure can be dynamically generated for picture feature inverse transform unit based on the network parameter, and the network parameter related to the network layer of a variable network structure is dynamically generated by the encoding end rather than pre-configured. For example, the encoding end encodes network parameters such as the number of deconvolutional layers, the number of activation layers, the number of channels in each deconvolutional layer, the size of the convolutional kernel, and the filtering coefficients in the bitstream. The decoding end can parse the above network parameters from the bitstream and generate network layers with variable network structures based on these network parameters.

In an embodiment, the control parameter can include neural network information 2 corresponding to the picture feature inverse transform unit. The picture feature inverse transform unit can parse the neural network information 2 from the control parameter and generate a decoding neural network 2 based on the neural network information 2. For example, neural network information 2 can include basic layer information and enhancement layer information. The basic layer can be determined based on this basic layer information, and the enhancement layer can be determined based on this enhancement layer information. The basic layer and enhancement layer can be combined to obtain decoding neural network 2. For example, the following scenarios 1 to 6 can be used to obtain the neural network information 2.

Scenario 1: the basic layer information includes the basic layer usage default network flag, and the basic layer usage default network flag indicates that the basic layer uses the default network. In this case, the picture feature inverse transform unit determines based on the basic layer information that the basic layer uses the network layer of the default network structure, and therefore obtains the basic layer of the default network structure. The enhancement layer information includes the enhancement layer usage default network flag, and the enhancement layer usage default network flag indicates that the enhancement layer uses the default network. In this case, based on the enhancement layer information, it is determined that the enhancement layer adopts the default network structure of the network layer, and therefore, the enhancement layer of the default network structure is obtained. The basic layer of the default network structure and the enhancement layer of the default network structure can be combined to obtain decoding neural network 2.

Scenario 2: the basic layer information includes the basic layer usage default network flag, and the basic layer usage default network flag indicates that the basic layer uses the default network. In this case, the picture feature inverse transform unit determines based on the basic layer information that the basic layer uses the network layer of the default network structure, and therefore obtains the basic layer of the default network structure. The enhancement layer information includes the enhancement layer usage predesigned network flag and enhancement layer predesigned network index, and the enhancement layer usage predesigned network flag indicates that the enhancement layer uses the predesigned network. In this case, based on the enhancement layer information, it is determined that the enhancement layer adopts a network layer of a predesigned network structure. Therefore, the enhancement layer of the predesigned network structure corresponding to the enhancement layer predesigned network index is selected from the predesigned neural network pool. The basic layer of the default network structure and the enhancement layer of the predesigned network structure can be combined to obtain decoding neural network 2.

Scenario 3: basic layer information includes the basic layer usage default network flag, and the basic layer usage default network flag indicates that the basic layer uses the default network. The picture feature inverse transform unit determines based on the basic layer information that the basic layer uses the network layer of the default network structure, and therefore obtains the basic layer with the default network structure. The enhancement layer information includes network parameters used to generate the enhancement layer. In this case, the network parameters can be parsed from the control parameter and an enhancement layer with the variable network structure can be generated based on the network parameters. The basic layer of the default network structure and the enhancement layer of the variable network structure can be combined to obtain decoding neural network 2.

Scenario 4: the basic layer information includes the basic layer usage predesigned network flag and basic layer predesigned network index, and the basic layer usage predesigned network flag indicates that the basic layer uses the predesigned network. In this case, the picture feature inverse transform unit determines based on the basic layer information that the basic layer uses the network layer of the predesigned network structure, and therefore selects the basic layer of the predesigned network structure corresponding to the basic layer predesigned network index from the predesigned neural network pool. The enhancement layer information includes the enhancement layer usage default network flag, and the enhancement layer usage default network flag indicates that the enhancement layer uses the default network. In this case, based on the enhancement layer information, it is determined that the enhancement layer adopts the default network structure of the network layer, and therefore, the enhancement layer of the default network structure is obtained. The basic layer of the predesigned network structure and the enhancement layer of the default network structure can be combined to obtain decoding neural network 2.

Scenario 5: the basic layer information includes the basic layer usage predesigned network flag and basic layer predesigned network index, and the basic layer usage predesigned network flag indicates that the basic layer uses the predesigned network. In this case, the picture feature inverse transform unit determines based on the basic layer information that the basic layer uses the network layer of the predesigned network structure, and therefore selects the basic layer of the predesigned network structure corresponding to the basic layer predesigned network index can from the predesigned neural network pool. The enhancement layer information includes the enhancement layer usage predesigned network flag and enhancement layer predesigned network index, and the enhancement layer usage predesigned network flag indicates that the enhancement layer uses the predesigned network. In this case, based on the enhancement layer information, it is determined that the enhancement layer adopts a network layer of a predesigned network structure. Therefore, the enhancement layer of the predesigned network structure corresponding to the enhancement layer predesigned network index can be selected from the predesigned neural network pool. The basic layer of the predesigned network structure and the enhancement layer of the predesigned network structure can be combined to obtain decoding neural network 2.

Scenario 6: the basic layer information includes the basic layer usage predesigned network flag and basic layer predesigned network index, and the basic layer usage predesigned network flag indicates that the basic layer uses the predesigned network. In this case, the picture feature inverse transform unit determines based on the basic layer information that the basic layer uses the network layer of the predesigned network structure, and therefore selects the basic layer of the predesigned network structure corresponding to the basic layer predesigned network index can from the predesigned neural network pool. The enhancement layer information includes network parameters used to generate the enhancement layer. In this case, the network parameters can be parsed from the control parameter and an enhancement layer with the variable network structure can be generated based on the network parameters. The basic layer of the predesigned network structure and the enhancement layer of the variable network structure can be combined to obtain decoding neural network 2.

In an embodiment, the above network structures for both the basic layer and the enhancement layer can be determined by the decoded control parameter. The control parameter can include neural network information 2, and neural network information 2 can include both basic layer information and enhancement layer information. The neural network information 2 for the picture feature inverse transform unit is similar to Tables 1, 2, and 3, except that the relevant information is for the picture feature inverse transform unit, not for the coefficient hyperparameter feature generating unit, which will not be repeated here.

Embodiment 13: regarding Embodiments 5 and 6, the quality enhancement unit can obtain the low order feature value LF of the picture, and based on the decoding neural network, enhancement is performed on the low order feature value LF of the picture to obtain the reconstructed picture block I corresponding to the current block.

For example, there is no quality enhancement unit, or if the quality enhancement unit exists, the quality enhancement unit can be selectively skipped based on the control parameter (such as high-level syntax, such as third enabling information, etc.), or the quality enhancement unit can be enabled based on the control parameter. For example, if the quality enhancement unit is enabled based on the control parameter, the quality enhancement unit can be used to remove picture quality degradation problems such as quantization distortion and block effects between blocks. For example, the quality enhancement unit can enhance the low order feature value LF of the picture based on the decoding neural network to obtain the reconstructed picture block I corresponding to the current block.

In an embodiment, the quality enhancement unit can include a decoding neural network 3. The decoding neural network 3 can include a basic layer and an enhancement layer. The low order feature value LF of the picture is used as the input feature of the decoding neural network 3, and the reconstructed picture block I is used as the output feature of the decoding neural network 3. The decoding neural network 3 is configured to enhance the low order feature value LF of the picture.

In this embodiment, the decoding neural network 3 is split into a basic layer and an enhancement layer. The basic layer can include at least one network layer, or the basic layer can include no network layer, i.e., the basic layer is empty. The enhancement layer can include at least one network layer, or the enhancement layer can include no network layer, i.e., the enhancement layer is empty. It should be noted that for multiple network layers in decoding neural network 3, the network layers can be split into basic layers and enhancement layers according to actual needs. For example, the network layer with a fixed network structure can be used as the basic layer, and the network layer with an unfixed network structure can be used as the enhancement layer.

For example, for the decoding neural network 3, the size of the output feature can be larger than the size of the input feature, or the size of the output feature can be equal to the size of the input feature, or the size of the output feature can be smaller than the size of the input feature.

For the decoding neural network 3, the basic layer and enhancement layer include at least one deconvolutional layer. For example, the basic layer can include at least one deconvolutional layer, and the enhancement layer can include at least one deconvolutional layer or not include any deconvolutional layer. Alternatively, the enhancement layer can include at least one deconvolutional layer, and the basic layer can include at least one deconvolutional layer or not include any deconvolutional layer.

For decoding neural network 3, the basic layer and enhancement layer include at least one residual structural layer. For example, the basic layer includes at least one residual structural layer, and the enhancement layer includes a residual structural layer, or not. Alternatively, the enhancement layer can include at least one residual structural layer, and the basic layer can include a residual structural layer, or not.

For example, the decoding neural network 3 can include but is not limited to deconvolutional layers and activation layers, etc., which is not limited in the present disclosure. For example, the decoding neural network 3 sequentially includes one deconvolutional layer with a stride being 2, one activation layer, one deconvolutional layer with a stride being 1, and one activation layer. All the above network layers can be used as the basic layer, and the enhancement layer is empty. For example, the decoding neural network 3 sequentially includes one deconvolutional layer with a stride being 2 and one deconvolutional layer with a stride being 1. All the above network layers can be used as the basic layer, and the enhancement layer is empty. For example, the decoding neural network 3 sequentially includes one deconvolutional layer with a stride being 2, one activation layer, one deconvolutional layer with a stride being 2, one activation layer, one deconvolutional layer with a stride being 1, and one activation layer. All the above network layers can be used as the basic layer, and the enhancement layer is empty.

For example, the number of output features (number of filters) of the last network layer of the quality enhancement unit is 1 or 3. For example, if the output is only the value of one channel (such as a grayscale picture), the number of output features of the last network layer is 1. If the output is only values from three channels (such as RGB or YUV format), the number of output features of the last network layer is 3.

In an embodiment, the quality enhancement unit can be configured with a network layer of a default network structure, and the network parameter related to the network layer of the default network structure is fixed. A predesigned neural network pool can be configured for the quality enhancement unit. The predesigned neural network pool includes network layers of at least one predesigned network structure. The network parameters related to the network layer of the predesigned network structure can be configured according to actual needs. The network layer of a variable network structure can be dynamically generated for the quality enhancement unit based on the network parameter, and the network parameter related to the network layer of a variable network structure is dynamically generated by the encoding end rather than pre-configured.

In an embodiment, the control parameter can include neural network information 3 corresponding to the quality enhancement unit. The quality enhancement unit can parse the neural network information 3 from the control parameter and generate a decoding neural network 3 based on the neural network information 3. For example, neural network information 3 can include basic layer information and enhancement layer information. The basic layer can be determined based on this basic layer information, and the enhancement layer can be determined based on this enhancement layer information. The basic layer and enhancement layer can be combined to obtain decoding neural network 3. For example, the quality enhancement unit can adopt the following scenarios 1 to 6 to obtain the neural network information 3.

Scenario 1: the basic layer information includes the basic layer usage default network flag, and the basic layer usage default network flag indicates that the basic layer uses the default network. In this case, the quality enhancement unit determines based on the basic layer information that the basic layer uses the network layer of the default network structure, and therefore obtains the basic layer of the default network structure. The enhancement layer information includes the enhancement layer usage default network flag, and the enhancement layer usage default network flag indicates that the enhancement layer uses the default network. In this case, based on the enhancement layer information, it is determined that the enhancement layer adopts the default network structure of the network layer, and therefore, the enhancement layer of the default network structure is obtained. The basic layer of the default network structure and the enhancement layer of the default network structure can be combined to obtain decoding neural network 3.

Scenario 2: the basic layer information includes the basic layer usage default network flag, and the basic layer usage default network flag indicates that the basic layer uses the default network. In this case, the quality enhancement unit determines based on the basic layer information that the basic layer uses the network layer of the default network structure, and therefore obtains the basic layer of the default network structure. The enhancement layer information includes the enhancement layer usage predesigned network flag and enhancement layer predesigned network index, and the enhancement layer usage predesigned network flag indicates that the enhancement layer uses the predesigned network. In this case, based on the enhancement layer information, it is determined that the enhancement layer adopts a network layer of a predesigned network structure. Therefore, the enhancement layer of the predesigned network structure corresponding to the enhancement layer predesigned network index is selected from the predesigned neural network pool. The basic layer of the default network structure and the enhancement layer of the predesigned network structure can be combined to obtain decoding neural network 3.

Scenario 3: the basic layer information includes the basic layer usage default network flag, and the basic layer usage default network flag indicates that the basic layer uses the default network. The quality enhancement unit determines based on the basic layer information that the basic layer uses the network layer of the default network structure, and therefore obtains the basic layer of the default network structure. The enhancement layer information includes network parameters used to generate the enhancement layer. In this case, the network parameters can be parsed from the control parameter and an enhancement layer with the variable network structure can be generated based on the network parameters. The basic layer of the default network structure and the enhancement layer of the variable network structure can be combined to obtain decoding neural network 3.

Scenario 4: the basic layer information includes the basic layer usage predesigned network flag and basic layer predesigned network index, and the basic layer usage predesigned network flag indicates that the basic layer uses the predesigned network. In this case, the quality enhancement unit determines based on the basic layer information that the network layer uses the predesigned network structure, and therefore selects the basic layer of the predesigned network structure corresponding to the basic layer predesigned network index from the predesigned neural network pool. The enhancement layer information includes the enhancement layer usage default network flag, and the enhancement layer usage default network flag indicates that the enhancement layer uses the default network. In this case, based on the enhancement layer information, it is determined that the enhancement layer adopts the default network structure of the network layer, and therefore, the enhancement layer of the default network structure is obtained. The basic layer of the predesigned network structure and the enhancement layer of the default network structure can be combined to obtain decoding neural network 3.

Scenario 5: the basic layer information includes the basic layer usage predesigned network flag and basic layer predesigned network index, and the basic layer usage predesigned network flag indicates that the basic layer uses the predesigned network. In this case, the quality enhancement unit determines based on the basic layer information that the network layer adopts the predesigned network structure. Therefore, the basic layer of the predesigned network structure corresponding to the basic layer predesigned network index can be selected from the predesigned neural network pool. The enhancement layer information includes the enhancement layer usage predesigned network flag and enhancement layer predesigned network index, and the enhancement layer usage predesigned network flag indicates that the enhancement layer uses the predesigned network. In this case, based on the enhancement layer information, it is determined that the enhancement layer adopts a network layer of a predesigned network structure. Therefore, the enhancement layer of the predesigned network structure corresponding to the enhancement layer predesigned network index can be selected from the predesigned neural network pool. The basic layer of the predesigned network structure and the enhancement layer of the predesigned network structure can be combined to obtain decoding neural network 3.

Scenario 6: the basic layer information includes the basic layer usage predesigned network flag and basic layer predesigned network index, and the basic layer usage predesigned network flag indicates that the basic layer uses the predesigned network. In this case, the quality enhancement unit determines based on the basic layer information that the network layer adopts the predesigned network structure. Therefore, the basic layer of the predesigned network structure corresponding to the basic layer predesigned network index can be selected from the predesigned neural network pool. The enhancement layer information includes network parameters used to generate the enhancement layer. In this case, the network parameters can be parsed from the control parameter and an enhancement layer with the variable network structure can be generated based on the network parameters. The basic layer of the predesigned network structure and the enhancement layer of the variable network structure can be combined to obtain decoding neural network 3.

In an embodiment, the above network structures for both the basic layer and the enhancement layer can be determined by the decoded control parameter. The control parameter can include neural network information 3, and neural network information 3 can include both basic layer information and enhancement layer information. The neural network information 3 for the quality enhancement unit is similar to Tables 1, 2, and 3, except that the relevant information is for the quality enhancement unit, not for the coefficient hyperparameter feature generating unit, which will not be repeated here.

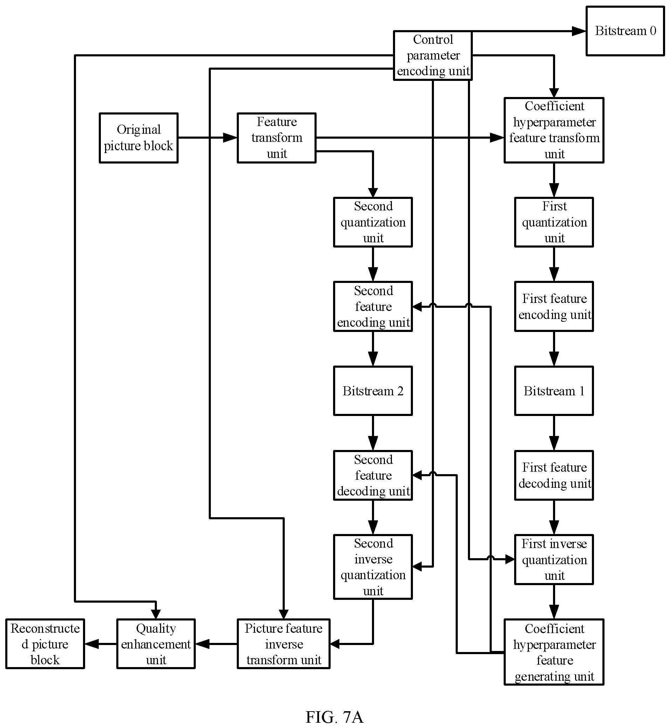

Embodiment 14: a picture encoding method based on a neural network is proposed in the embodiments of the present disclosure. The method can be applied to the encoding end (also referred to as a video encoder), as shown in FIG. 7A, which is a schematic diagram of the structure of the encoding end. The encoding end can include a control parameter encoding unit, a feature transform unit, a coefficient hyperparameter feature transform unit, a first quantization unit, a second quantization unit, a first feature encoding unit, a second feature encoding unit, a first feature decoding unit, a second feature decoding unit, a coefficient hyperparameter feature generating unit, a picture feature inverse transform unit, a first inverse quantization unit, a second inverse quantization unit, and a quality enhancement unit.

For example, the first quantization unit, second quantization unit, first inverse quantization unit, second inverse quantization unit, and quality enhancement unit are optional units, and in some scenarios, the process of turning off or skipping these optional units can be selected.

In this embodiment, for each current block (i.e., picture block), the corresponding bitstream includes three parts: bitstream 0 (containing the control parameter), bitstream 1 (containing coefficient hyperparameter feature information), and bitstream 2 (containing picture feature information). The coefficient hyperparameter feature information and picture feature information can be collectively referred to as picture information.

For example, the picture encoding method based on a neural network in this embodiment can include the following steps S71 to S79.

In step S71, feature transform is performed on the current block I to obtain the picture feature value F corresponding to the current block I. For example, the feature transform unit can perform feature transform on the current block I to obtain the picture feature value F corresponding to the current block I. For example, the feature transform unit can perform feature transform on the current block I based on an encoding neural network to obtain the picture feature value F corresponding to the current block I. Where the current block I serves as the input feature of the encoding neural network, and the picture feature value F serves as the output feature of the encoding neural network.

In step S72, picture feature information is determined based on the picture feature value F.

For example, if the second quantization unit is enabled, the second quantization unit can obtain the picture feature value F from the feature transform unit, quantize the picture feature value F, obtain the quantized value F_q of the picture feature, and determine the picture feature information based on the quantized value F_q of the picture feature. That is, the picture feature information can be the quantized value F_q of the picture feature. In this case, the control parameter encoding unit can encode the second enabling information for the second quantization unit in bitstream 0, that is, the control parameter includes the second enabling information for the second quantization unit, and the second enabling information is configured to indicate that the second quantization unit has been enabled. The control parameter encoding unit can further encode the quantization related parameters corresponding to the second quantization unit in bitstream 0, such as the stride parameter qstep or quantization parameter qp.

For example, if the second quantization unit is not enabled, the picture feature information is determined based on the picture feature value F. That is, the picture feature information can be the picture feature value F. In this case, the control parameter encoding unit can encode the second enabling information for the second quantization unit in bitstream 0, and the second enabling information is configured to indicate that the second quantization unit is not enabled.

In step S73, coefficient hyperparameter feature transform is performed on the picture feature value F to obtain the coefficient hyperparameter feature coefficient value C. For example, the coefficient hyperparameter feature transform unit performs coefficient hyperparameter feature transform on the picture feature value F to obtain the coefficient hyperparameter feature coefficient value C. For example, based on the encoding neural network, the coefficient hyperparameter feature transform is performed on the picture feature value F to obtain the coefficient hyperparameter feature coefficient value C. Where the picture feature value F is used as the input feature of the encoding neural network, and the coefficient hyperparameter feature coefficient value C is used as the output feature of the encoding neural network.

In step S74, the coefficient hyperparameter feature information is determined based on the coefficient hyperparameter feature coefficient value C.

For example, if the first quantization unit is enabled, the first quantization unit can obtain the coefficient hyperparameter feature coefficient value C from the coefficient hyperparameter feature transform unit, quantize the coefficient hyperparameter feature coefficient value C to obtain the quantized value C_q of coefficient hyperparameter feature coefficient, and determine the coefficient hyperparameter feature information based on the quantized value C_q of coefficient hyperparameter feature coefficient. That is, the coefficient hyperparameter feature information can be the quantized value C_q of coefficient hyperparameter feature coefficient. In this case, the control parameter encoding unit can encode the first enabling information of the first quantization unit in bitstream 0, that is, the control parameter includes the first enabling information for the first quantization unit, and the first enabling information is configured to indicate that the first quantization unit has been enabled. The control parameter encoding unit can further encode the quantization related parameter corresponding to the first quantization unit in bitstream 0.

For example, if the first quantization unit is not enabled, the coefficient hyperparameter feature information is determined based on the coefficient hyperparameter feature coefficient value C, that is, the coefficient hyperparameter feature information can be the coefficient hyperparameter feature coefficient value C. In this case, the control parameter encoding unit can encode the first enabling information of the first quantization unit in bitstream 0, and the first enabling information is configured to indicate that the first quantization unit is not enabled.

In step S75, the coefficient hyperparameter feature information (such as the quantized value C_q of coefficient hyperparameter feature coefficient or the coefficient hyperparameter feature coefficient value C) is encoded to obtain bitstream 1. For example, the first feature encoding unit can encode coefficient hyperparameter feature information in the bitstream corresponding to the current block. For ease of distinction, the bitstream that includes coefficient hyperparameter feature information is referred to as bitstream 1.

In step S76, bitstream 1 corresponding to the current block is decoded to obtain coefficient hyperparameter feature information (such as quantized value C_q of coefficient hyperparameter feature coefficient or coefficient hyperparameter feature coefficient value C), and the reconstructed value of the coefficient hyperparameter feature coefficient is determined based on the coefficient hyperparameter feature information.

For example, the first feature decoding unit can decode bitstream 1 corresponding to the current block and obtain coefficient hyperparameter feature information.

For example, if the first quantization unit is enabled, the coefficient hyperparameter feature information is the quantized value C_q of coefficient hyperparameter feature coefficient. In this case, the first inverse quantization unit can inverse quantize the quantized value C_q of coefficient hyperparameter feature coefficient to obtain the reconstructed value C' of the coefficient hyperparameter feature coefficient. Obviously, the reconstructed value C' of the coefficient hyperparameter feature coefficient can be the same as the coefficient hyperparameter feature coefficient value C. If the first quantization unit is not enabled, the coefficient hyperparameter feature information is the coefficient hyperparameter feature coefficient value C. In this case, the coefficient hyperparameter feature coefficient value C can be used as the reconstructed value C' of the coefficient hyperparameter feature coefficient. In summary, the reconstructed value C' of the coefficient hyperparameter feature coefficient can be obtained.

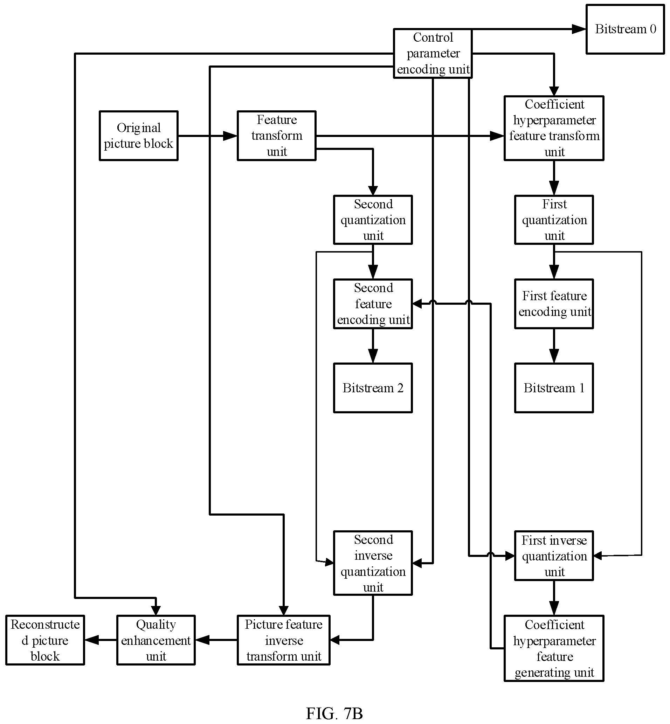

From the above, it can be seen that the reconstructed value C' of the coefficient hyperparameter feature coefficient is the same as the coefficient hyperparameter feature coefficient value C. Therefore, step S76 can be omitted and the coefficient hyperparameter feature coefficient value C can be directly used as the reconstructed value C' of the coefficient hyperparameter feature coefficient. In this case, the encoding end structure shown in FIG. 7A can further be improved to obtain the encoding end structure shown in FIG. 7B.

In step S77, inverse transform is performed on the reconstructed value C' of the coefficient hyperparameter feature coefficient to obtain the coefficient hyperparameter feature value P. For example, the coefficient hyperparameter feature generating unit performs inverse transform on the reconstructed value C' of the coefficient hyperparameter feature coefficient to obtain the coefficient hyperparameter feature value P.

In step S78, based on the coefficient hyperparameter feature value P, the picture feature information (such as quantized value F_q of the picture feature or picture feature value F) is encoded to obtain bitstream 2. For example, the second feature encoding unit can encode picture feature information in the bitstream corresponding to the current block. For ease of distinction, the bitstream containing picture feature information is denoted as bitstream 2.

In step S79, the control parameter encoding unit obtains the control parameter for the current block. The control parameter can include neural network information. The control parameter for the current block is encoded in the bitstream. The bitstream containing the control parameter is denoted as bitstream 0.

In an embodiment, the feature transform unit can use an encoding neural network to perform feature transform on the current block I. The control parameter encoding unit can determine the neural network information 2 corresponding to the picture feature inverse transform unit of the decoding device based on the network structure of the encoding neural network. The neural network information 2 is configured to determine the decoding neural network 2 corresponding to the picture feature inverse transform unit, and the neural network information 2 corresponding to the picture feature inverse transform unit is encoded in the bitstream 0.

In an embodiment, the coefficient hyperparameter feature transform unit can use an encoding neural network to perform coefficient hyperparameter feature transform on the picture feature value F. The control parameter encoding unit can determine the neural network information 1 corresponding to the coefficient hyperparameter feature generating unit of the decoding device based on the network structure of the encoding neural network. The neural network information 1 is configured to determine the decoding neural network 1 corresponding to the coefficient hyperparameter feature generating unit, and encode the neural network information 1 corresponding to the coefficient hyperparameter feature generating unit in the bitstream 0.

In an embodiment, continuing to refer to FIGs. 7A and 7B, the following steps S80-S86 can further be included.

In step S80, the bitstream 1 for the current block is decoded to obtain the coefficient hyperparameter feature information for the current block. For example, the first feature decoding unit can decode the bitstream 1 for the current block to obtain the coefficient hyperparameter feature information for the current block.

In step S81, the reconstructed value of the coefficient hyperparameter feature coefficient is determined based on the coefficient hyperparameter feature information.

For example, if the first quantization unit is enabled, the coefficient hyperparameter feature information is the quantized value C_q of coefficient hyperparameter feature coefficient. In this case, the first inverse quantization unit can inverse quantize the quantized value C_q of coefficient hyperparameter feature coefficient to obtain the reconstructed value C' of the coefficient hyperparameter feature coefficient. If the first quantization unit is not enabled, the coefficient hyperparameter feature information is the coefficient hyperparameter feature coefficient value C. In this case, the coefficient hyperparameter feature coefficient value C can be used as the reconstructed value C' of the coefficient hyperparameter feature coefficient.

In step S82, inverse transform is performed on the reconstructed value C' of the coefficient hyperparameter feature coefficient to obtain the coefficient hyperparameter feature value P. For example, the coefficient hyperparameter feature generating unit performs inverse transform on the reconstructed value C' of the coefficient hyperparameter feature coefficient to obtain the coefficient hyperparameter feature value P. For example, the coefficient hyperparameter feature generating unit performs inverse transform on the reconstructed value of the coefficient hyperparameter feature coefficient C' based on a decoding neural network to obtain the coefficient hyperparameter feature value P.

In step S83, the bitstream 2 corresponding to the current block is decoded to obtain the picture feature information for the current block. For example, the second feature decoding unit can decode the bitstream 2 corresponding to the current block to obtain the picture feature information for the current block. When decoding the bitstream 2 corresponding to the current block, the second feature decoding unit can use the coefficient hyperparameter feature value P to decode the bitstream 2 corresponding to the current block.

In step S84, the reconstructed value of the picture feature is determined based on the picture feature information.

For example, if the second quantization unit is enabled, the picture feature information is the quantized value F_q of the picture feature, and the second inverse quantization unit can inverse quantize the quantized value F_q of the picture feature to obtain the reconstructed value F' of the picture feature. If the second quantization unit is not enabled, the picture feature information is the picture feature value F. The picture feature value F can be used as the reconstructed value F' of the picture feature.

In step S85, inverse transform is performed on the reconstructed value F' of the picture feature to obtain the low order feature value LF of the picture. For example, the picture feature inverse transform unit performs inverse transform on the reconstructed value F' of the picture feature to obtain the low order feature value LF of the picture. For example, based on the decoding neural network, the reconstructed value F' of the picture feature is inverse transformed to obtain the low order feature value LF of the picture.

In step S86, the reconstructed picture block I for the current block is determined based on the low order feature value LF of the picture. For example, if the quality enhancement unit is enabled, the quality enhancement unit enhances the low order feature value LF of the picture to obtain the reconstructed picture block I corresponding to the current block. For example, based on the decoding neural network, the low order feature value LF of the picture is enhanced to obtain the reconstructed picture block I corresponding to the current block. If the quality enhancement unit is not enabled, the low order feature value LF of the picture is used as the reconstructed picture block I.

For example, regarding steps S80-S86, reference can be made according to embodiment 5, which will not be repeated here.

In an embodiment, the coefficient hyperparameter feature generating unit can use a decoding neural network to perform inverse transform on the reconstructed value C' of the coefficient hyperparameter feature coefficient to obtain the coefficient hyperparameter feature value P. The control parameter encoding unit can determine the neural network information 1 corresponding to the coefficient hyperparameter feature generating unit of the decoding device based on the network structure of the decoding neural network. The neural network information 1 is configured to determine the decoding neural network 1 corresponding to the coefficient hyperparameter feature generating unit, and the neural network information 1 is encoded in the bitstream 0.

In an embodiment, the picture feature inverse transform unit can use a decoding neural network to perform inverse transform on the reconstructed value F' of the picture feature to obtain the low order feature value LF of the picture. The control parameter encoding unit can determine the neural network information 2 corresponding to the picture feature inverse transform unit of the decoding device based on the network structure of the decoding neural network. The neural network information 2 is configured to determine the decoding neural network 2 corresponding to the picture feature inverse transform unit and the neural network information 2 is encoded in the bitstream 0.

In an embodiment, the quality enhancement unit can use a decoding neural network to enhance the low order feature value LF of the picture to obtain the reconstructed picture block I corresponding to the current block. The control parameter encoding unit can determine the neural network information 3 corresponding to the quality enhancement unit of the decoding device based on the network structure of the decoding neural network, where the neural network information 3 is configured to determine the decoding neural network 3 corresponding to the quality enhancement unit, and the neural network information 3 is encoded in the bitstream 0.

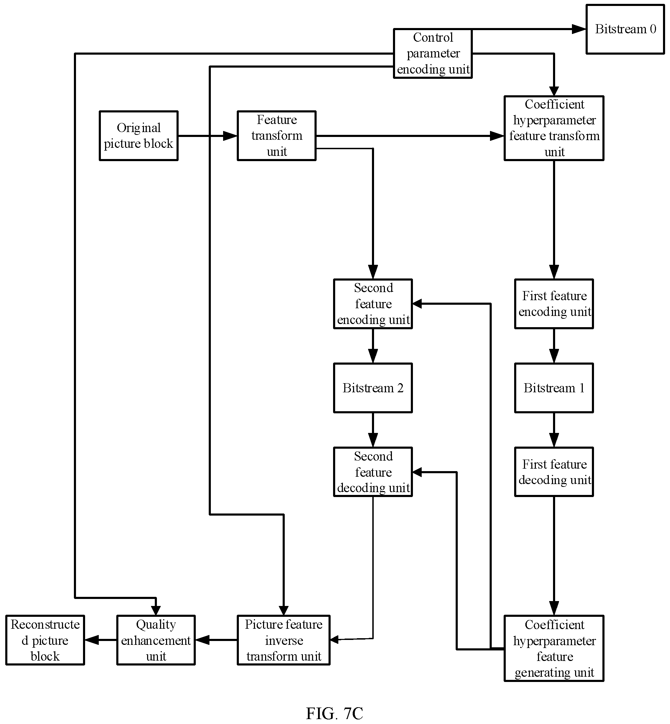

Embodiment 15: a picture encoding method based on a neural network is proposed in the embodiments of the present disclosure. The method can be applied to the encoding end, as shown in FIG. 7C, which is a schematic diagram of the structure of the encoding end. The encoding end can include a control parameter encoding unit, a feature transform unit, a coefficient hyperparameter feature transform unit, a first feature encoding unit, a second feature encoding unit, a first feature decoding unit, a second feature decoding unit, a coefficient hyperparameter feature generating unit, a picture feature inverse transform unit, and a quality enhancement unit.

For example, the picture encoding method based on a neural network in this embodiment can include the following steps S91 to S99.

In step S91, feature transform is performed on the current block I to obtain the picture feature value F corresponding to the current block I. For example, the feature transform unit can perform feature transform on the current block I based on an encoding neural network to obtain the picture feature value F corresponding to the current block I.

In step S92, coefficient hyperparameter feature transform is performed on the picture feature value F to obtain the coefficient hyperparameter feature coefficient value C. For example, the coefficient hyperparameter feature transform unit performs, based on the encoding neural network, the coefficient hyperparameter feature transform on the picture feature value F to obtain the coefficient hyperparameter feature coefficient value C.

In step S93, the coefficient hyperparameter feature coefficient value C is encoded to obtain bitstream 1. For example, the first feature encoding unit can encode the coefficient hyperparameter feature coefficient value C in the bitstream corresponding to the current block to obtain bitstream 1.

In step S94, the reconstructed value C' of the coefficient hyperparameter feature coefficient is determined based on the coefficient hyperparameter feature coefficient value C. If the reconstructed value C' of the coefficient hyperparameter feature coefficient is the same as the coefficient hyperparameter feature coefficient value C, inverse transform is performed on the reconstructed value C' of the coefficient hyperparameter feature coefficient to obtain the coefficient hyperparameter feature value P. For example, the coefficient hyperparameter feature generating unit performs inverse transform on the reconstructed value C' of the coefficient hyperparameter feature coefficient to obtain the coefficient hyperparameter feature value P.

In step S95, based on the coefficient hyperparameter feature value P, the picture feature value F is encoded to obtain bitstream 2. For example, the second feature encoding unit encodes the picture feature value F in the bitstream corresponding to the current block, to obtain bitstream 2.

In step S96, the control parameter encoding unit obtains the control parameter for the current block. The control parameter can include neural network information. The control parameter for the current block is encoded in the bitstream. The bitstream containing the control parameter is denoted as bitstream 0.

In step S97, bitstream 1 corresponding to the current block is decoded to obtain the coefficient hyperparameter feature coefficient value C for the current block. For example, the first feature decoding unit can decode the bitstream 1 for the current block to obtain the coefficient hyperparameter feature coefficient value C corresponding to the current block.

Further, based on the coefficient hyperparameter feature coefficient value C, the reconstructed value C' of the coefficient hyperparameter feature coefficient is determined.

In step S98, inverse transform is performed on the reconstructed value C' of the coefficient hyperparameter feature coefficient to obtain the coefficient hyperparameter feature value P. For example, the coefficient hyperparameter feature generating unit performs inverse transform on the reconstructed value C' of the coefficient hyperparameter feature coefficient based on the decoding neural network to obtain the coefficient hyperparameter feature value P. Bitstream 2 corresponding to the current block is decoded to obtain the picture feature value F corresponding to the current block, and the picture feature value F is used as the reconstructed value F' of the picture feature. For example, the second feature decoding unit uses the coefficient hyperparameter feature value P to decode bitstream 2 corresponding to the current block.

In step S99, inverse transform is performed on the reconstructed value F' of the picture feature to obtain the low order feature value LF of the picture. For example, the picture feature inverse transform unit performs inverse transform on the reconstructed value F' of the picture feature based on a decoding neural network to obtain the low order feature value LF of the picture. The reconstructed picture block I for the current block is determined based on the low order feature value LF of the picture. For example, the quality enhancement unit uses a decoding neural network to enhance the low order feature value LF of the picture to obtain the reconstructed picture block I corresponding to the current block.

Embodiment 16: regarding Embodiments 14 and 15, the first feature encoding unit can encode coefficient hyperparameter feature information in bitstream 1 corresponding to the current block. The encoding process of the first feature encoding unit corresponds to the decoding process of the first feature decoding unit, as described in Embodiment 7. For example, the first feature encoding unit can use the entropy encoding method (such as CAVLC or CABAC entropy encoding method) to encode the coefficient hyperparameter feature information, which will not be repeated here. The first feature decoding unit can decode the bitstream 1 corresponding to the current block to obtain the coefficient hyperparameter feature information for the current block. This process can be referred to in Embodiment 7.

Regarding embodiments 14 and 15, the second feature encoding unit can encode the picture feature information based on the coefficient hyperparameter feature value P to obtain bitstream 2. The encoding process of the second feature encoding unit corresponds to the decoding process of the second feature decoding unit, as shown in embodiment 10. For example, the second feature encoding unit can use the entropy encoding method (such as CAVLC or CABAC entropy encoding method) to encode the picture feature information, which will not be repeated here. The the second feature decoding unit can decode the bitstream 2 corresponding to the current block to obtain the picture feature information for the current block. This process can be referred to in Embodiment 10.

Regarding embodiments 14 and 15, the first quantization unit can quantize the coefficient hyperparameter feature coefficient value C to obtain the quantized value C_q of coefficient hyperparameter feature coefficient. The quantization process of the first quantization unit corresponds to the inverse quantization process of the first inverse quantization unit, as shown in embodiment 8. For example, the first quantization unit quantizes the coefficient hyperparameter feature coefficient value C based on the quantization related parameter, which will not be repeated here. It should be noted that for the quantization related parameter (such as stride parameter qstep, also referred to as quantization stride), 1) each feature value of each feature channel uses the same quantization stride; 2) each feature channel uses a different quantization stride, but each feature value within the feature channel uses the same quantization stride; or 3) each feature value of each feature channel adopts a different quantization stride. The first inverse quantization unit of the encoding end can perform inverse quantization on the quantized value C_q of the coefficient hyperparameter feature coefficient to obtain the reconstructed value C' of the coefficient hyperparameter feature coefficient. The processing procedure of the first inverse quantization unit of the encoding end can be referred to in Embodiment 10.

The second quantization unit can quantize the picture feature value F to obtain the quantized value F_q of the picture feature. The quantization process of the second quantization unit corresponds to the inverse quantization process of the second inverse quantization unit, as described in Embodiment 11. For example, the second quantization unit quantizes the picture feature value F based on the quantization related parameter, which will not be repeated here. It should be noted that for the quantization stride, 1) each feature value of each feature channel uses the same quantization stride; 2) each feature channel uses a different quantization stride, but each feature value within the feature channel uses the same quantization stride; or 3) each feature value of each feature channel adopts a different quantization stride. The second inverse quantization unit of the encoding end can perform inverse quantization on the quantized value F_q of the picture feature to obtain the reconstructed value F' of the picture feature. The processing procedure of the second inverse quantization unit of the encoding end can be referred to in Embodiment 11.

Embodiment 17: regarding Embodiments 14 and 15, the feature transform unit can perform feature transform on the current block I based on an encoding neural network to obtain the picture feature value F corresponding to the current block I. On this basis, the neural network information 2 corresponding to the picture feature inverse transform unit of the decoding device can be determined based on the network structure of the encoding neural network, and the neural network information 2 corresponding to the picture feature inverse transform unit can be encoded in bitstream 0. Regarding how the decoding device generates the decoding neural network 2 corresponding to the picture feature inverse transform unit based on the neural network information 2, reference can be made according to Embodiment 12, which will not be repeated here.

In an embodiment, the feature transform unit can include an encoding neural network 2. The encoding neural network 2 can include a basic layer and an enhancement layer. The encoding neural network 2 can be split into a basic layer and an enhancement layer. The basic layer can include at least one network layer, or the basic layer can include no network layer, i.e., the basic layer is empty. The enhancement layer can include at least one network layer, or the enhancement layer can include no network layer, i.e., the enhancement layer is empty. It should be noted that for multiple network layers in encoding neural network 2, the network layers can be split into basic layers and enhancement layers according to actual needs. For example, the network layer with a fixed network structure can be used as the basic layer, and the network layer with an unfixed network structure can be used as the enhancement layer.

For example, for the encoding neural network 2, the size of the output feature can be smaller than the size of the input feature, or the size of the output feature can be equal to the size of the input feature, or the size of the output feature can be larger than the size of the input feature.

For example, for encoding neural network 2, the basic layer and the enhancement layer include at least one convolutional layer. For example, the basic layer includes at least one convolutional layer, and the enhancement layer can include at least one convolutional layer or not include a convolutional layer. Alternatively, the enhancement layer can include at least one convolutional layer, and the basic layer can include at least one convolutional layer or not include any convolutional layer.

For encoding neural network 2, the basic layer and enhancement layer include at least one residual structural layer. For example, the basic layer includes at least one residual structural layer, and the enhancement layer includes a residual structural layer, or not. Alternatively, the enhancement layer can include at least one residual structural layer, and the basic layer can include a residual structural layer, or not.

The encoding neural network 2 can include but is not limited to convolutional layers and activation layers, etc., which is not limited in the present disclosure. For example, the encoding neural network 2 sequentially includes a convolutional layer with the stride being 2, an activation layer, a convolutional layer with the stride being 1, and an activation layer, all of which are considered as basic layers. For example, encoding neural network 2 sequentially includes one convolutional layer with the stride being 2 and one convolutional layer with the stride being 1, and all of the above network layers are used as basic layers. For example, the encoding neural network 2 sequentially includes one convolutional layer with a stride being 2, one activation layer, one convolutional layer with a stride being 2, one activation layer, one convolutional layer with a stride being 1, and one activation layer, all of which are considered as basic layers.

For example, the first network layer of the feature transform unit has 1 or 3 input channels. If the input picture block contains only one channel (such as a grayscale picture), the number of input channels of the first network layer of the feature transform unit is 1. If the input picture block contains three channels (such as in an RGB or YUV format), the first network layer of the feature transform unit has three input channels.

It should be noted that the network structures of the encoding neural network 2 of the feature transform unit and the decoding neural network 2 of the picture feature inverse transform unit (see Embodiment 12) can be symmetrical. The network parameters of the encoding neural network 2 of the feature transform unit and the decoding neural network 2 of the picture feature inverse transform unit can be the same or different.

In an embodiment, the feature transform unit can be configured with a network layer of a default network structure, and the network parameter related to the network layer of the default network structure is fixed. For example, in the network layers of the default network structure, the number of deconvolutional layers is fixed, the number of activation layers is fixed, the number of channels in each deconvolutional layer is fixed, the size of the convolutional kernel is fixed, and the filtering coefficient is fixed. It should be noted that the network layers of the default network structure configured for the feature transform unit and the network layers of the default network structure configured for the picture feature inverse transform unit (see Embodiment 12) can be symmetric structures.

In an embodiment, a predesigned neural network pool (corresponding to the predesigned neural network pool of the decoding device) can be configured for the feature transform unit. The predesigned neural network pool includes network layers of at least one predesigned network structure, and the network parameter related to the network layer of the predesigned network structure can be configured according to actual needs. For example, a predesigned neural network pool can include a network layer of predesigned network structure t1', a network layer of predesigned network structure t2', a network layer of predesigned network structure t3', and so on. It should be noted that the network layer of the predesigned network structure t1' and the network layer of the predesigned network structure t1 (see Embodiment 12) can be symmetrical structures. The network layer of predesigned network structure t2' and the network layer of predesigned network structure t2 can be symmetrical structures. The network layer of predesigned network structure t3' and the network layer of predesigned network structure t3 can be symmetrical structures.

In an embodiment, a network layer of a variable network structure can be dynamically generated for the feature transform unit based on the network parameter, and the network parameter related to the network layer of a variable network structure is dynamically generated by the encoding end rather than pre--configured.

In an embodiment, the encoding end determines the neural network information 2 corresponding to the picture feature inverse transform unit based on the network structure of the encoding neural network 2, and the neural network information 2 corresponding to the picture feature inverse transform unit can be encoded in bitstream 0. For example, the encoding end can use the following scenarios 1 to 6 to determine neural network information 2.

Scenario 1: if the basic layer of encoding neural network 2 adopts the network layer of the default network structure, and the enhancement layer adopts the network layer of the default network structure, the encoding end encodes the basic layer information and enhancement layer information in bitstream 0, and the basic layer information and enhancement layer information form the neural network information 2 corresponding to the picture feature inverse transform unit. Where the basic layer information includes the basic layer usage default network flag, and the basic layer usage default network flag indicates that the basic layer uses the default network. The enhancement layer information includes the enhancement layer usage default network flag, and the enhancement layer usage default network flag indicates that the enhancement layer uses the default network.

Scenario 2: if the basic layer of encoding neural network 2 adopts the network layer of the default network structure, and the enhancement layer adopts the network layer of the predesigned network structure, the encoding end encodes the basic layer information and enhancement layer information in bitstream 0, and the basic layer information and enhancement layer information form the neural network information 2 corresponding to the picture feature inverse transform unit. Where the basic layer information includes the basic layer usage default network flag, and the basic layer usage default network flag indicates that the basic layer uses the default network. The enhancement layer information includes the enhancement layer usage predesigned network flag and enhancement layer predesigned network index, where the enhancement usage predesigned network flag indicates that the enhancement layer uses the predesigned network, and the enhancement layer predesigned network index indicates the corresponding index of the network layer of the predesigned network structure in the predesigned neural network pool. For example, if the enhancement layer of the encoding neural network 2 adopts the network layer of the predesigned network structure t1', the enhancement layer predesigned network index represents the network layer of the first predesigned network structure t1' in the predesigned neural network pool.

Scenario 3: if the basic layer of encoding neural network 2 adopts the network layer of the default network structure, and the enhancement layer adopts the network layer of the variable network structure, the encoding end encodes the basic layer information and enhancement layer information in bitstream 0, and the basic layer information and enhancement layer information form the neural network information 2 corresponding to the picture feature inverse transform unit. Where the basic layer information includes the basic layer usage default network flag, and the basic layer usage default network flag indicates that the basic layer uses the default network. The enhancement layer information includes the network parameter used to generate the enhancement layer, where the network parameter can include but is not limited to at least one of the following: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, an activation layer flag, or an activation layer type. It should be noted that the network parameters in the enhancement layer information and the network parameters used in the enhancement layer of the encoding neural network 2 can be different. That is, for each network parameter used in the enhancement layer, a network parameter that is symmetrical to the network parameter can be generated. There are no restrictions on this generation process, and this symmetrical network parameter is transmitted as enhancement layer information to the decoding end.

Scenario 4: if the basic layer of encoding neural network 2 adopts a network layer of a predesigned network structure, and the enhancement layer adopts a network layer of a default network structure, the basic layer information and enhancement layer information are encoded in bitstream 0. The basic layer information and enhancement layer information form the neural network information 2 corresponding to the picture feature inverse transform unit. The basic layer information includes the basic layer usage predesigned network flag and basic layer predesigned network index, where the basic usage predesigned network flag indicates that the basic layer uses the predesigned network, and the basic layer predesigned network index indicates the corresponding index of the network layer of the predesigned network structure in the predesigned neural network pool. The enhancement layer information includes the enhancement layer usage default network flag, and the enhancement layer usage default network flag indicates that the enhancement layer uses the default network.

Scenario 5: if the basic layer of encoding neural network 2 adopts the network layer of the predesigned network structure, and the enhancement layer adopts the network layer of the predesigned network structure, the encoding end encodes the basic layer information and enhancement layer information in bitstream 0, and the basic layer information and enhancement layer information form the neural network information 2 corresponding to the picture feature inverse transform unit. The basic layer information includes the basic layer usage predesigned network flag and basic layer predesigned network index, where the basic usage predesigned network flag indicates that the basic layer uses the predesigned network, and the basic layer predesigned network index indicates the corresponding index of the network layer of the predesigned network structure in the predesigned neural network pool. The enhancement layer information includes the enhancement layer usage predesigned network flag and enhancement layer predesigned network index, where the enhancement usage predesigned network flag indicates that the enhancement layer uses the predesigned network, and the enhancement layer predesigned network index indicates the corresponding index of the network layer of the predesigned network structure in the predesigned neural network pool.

Scenario 6: if the basic layer of encoding neural network 2 adopts a network layer of a predesigned network structure, and the enhancement layer adopts a network layer of a variable network structure, the basic layer information and enhancement layer information are encoded in bitstream 0. The basic layer information and enhancement layer information form the neural network information 2 corresponding to the picture feature inverse transform unit. The basic layer information includes the basic layer usage predesigned network flag and basic layer predesigned network index, where the basic usage predesigned network flag indicates that the basic layer uses the predesigned network, and the basic layer predesigned network index indicates the corresponding index of the network layer of the predesigned network structure in the predesigned neural network pool. The enhancement layer information includes the network parameter used to generate the enhancement layer, where the network parameter can include but is not limited to at least one of the following: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, an activation layer flag, or an activation layer type. The network parameters in the enhancement layer information and the network parameters used in the enhancement layer of the encoding neural network 2 can be different. That is, for each network parameter used in the enhancement layer, a network parameter that is symmetrical to the network parameter can be generated. There are no restrictions on this generation process, and this symmetrical network parameter is transmitted as enhancement layer information to the decoding end.

Embodiment 18: regarding Embodiments 14 and 15, the picture feature inverse transform unit of the encoding end can perform inverse transform on the reconstructed value F' of the picture feature based on a decoding neural network to obtain the low order feature value LF of the picture. On this basis, the neural network information 2 corresponding to the picture feature inverse transform unit of the decoding device can be determined based on the network structure of the decoding neural network, and the neural network information 2 corresponding to the picture feature inverse transform unit can be encoded in bitstream 0.

In an embodiment, the picture feature inverse transform unit at the encoding end can include a decoding neural network 2. The decoding neural network 2 can include a basic layer and an enhancement layer. The network structure of the decoding neural network 2 at the encoding end is the same as the network structure of the decoding neural network 2 at the decoding end, as described in Embodiment 12, and will not be repeated here.

In an embodiment, the encoding end can configure a network layer of a default network structure for the picture feature inverse transform unit, where the network layer of the default network structure is the same as the network layer of the default network structure for the decoding end. The encoding end can configure a predesigned neural network pool for the picture feature inverse transform unit, where the predesigned neural network pool can include network layers of at least one predesigned network structure. This predesigned neural network pool is the same as the predesigned neural network pool at the decoding end. The encoding end can dynamically generate network layers with variable network structures for the picture feature inverse transform unit based on network parameters. The encoding end can determine the neural network information 2 corresponding to the picture feature inverse transform unit based on the network structure of decoding neural network 2, and the neural network information 2 is encoded in bitstream 0.

For example, if the basic layer of decoding neural network 2 adopts the network layer of the default network structure, and the enhancement layer adopts the network layer of the default network structure, the basic layer information includes the basic layer usage the default network flag, and the basic layer usage the default network flag indicates that the basic layer uses the default network. The enhancement layer information includes the enhancement layer usage default network flag, and the enhancement layer usage default network flag indicates that the enhancement layer uses the default network. For example, if the basic layer of decoding neural network 2 adopts a network layer of the default network structure, and the enhancement layer adopts a network layer of the predesigned network structure, the basic layer information includes the basic layer usage default network flag, and the basic layer usage default network flag indicates that the basic layer uses the default network. The enhancement layer information includes the enhancement layer usage predesigned network flag and enhancement layer predesigned network index, where the enhancement usage predesigned network flag indicates that the enhancement layer uses the predesigned network, and the enhancement layer predesigned network index indicates the corresponding index of the network layer of the predesigned network structure in the predesigned neural network pool. For example, if the basic layer of decoding neural network 2 adopts a network layer of the default network structure, and the enhancement layer adopts a network layer of the variable network structure, the basic layer information includes the basic layer usage default network flag, and the basic layer usage default network flag indicates that the basic layer uses the default network. The enhancement layer information includes network parameters used to generate the enhancement layer, and the network parameters in the enhancement layer information can be the same as those used in the enhancement layer of decoding neural network 2.

For example, if the basic layer of decoding neural network 2 adopts a network layer of the predesigned network structure and the enhancement layer adopts a network layer of the default network structure, the basic layer information includes the basic layer usage predesigned network flag and basic layer predesigned network index, where the basic usage predesigned network flag indicates that the basic layer uses the predesigned network, and the basic layer predesigned network index indicates the corresponding index of the network layer of the predesigned network structure in the predesigned neural network pool. The enhancement layer information includes the enhancement layer usage default network flag, and the enhancement layer usage default network flag indicates that the enhancement layer uses the default network. For example, if the basic layer of decoding neural network 2 adopts a network layer of the predesigned network structure and the enhancement layer adopts a network layer of the predesigned network structure, the basic layer information includes the basic layer usage predesigned network flag and basic layer predesigned network index, where the basic usage predesigned network flag indicates that the basic layer uses the predesigned network, and the basic layer predesigned network index indicates the corresponding index of the network layer of the predesigned network structure in the predesigned neural network pool. The enhancement layer information includes the enhancement layer usage predesigned network flag and enhancement layer predesigned network index, where the enhancement usage predesigned network flag indicates that the enhancement layer uses the predesigned network, and the enhancement layer predesigned network index indicates the corresponding index of the network layer of the predesigned network structure in the predesigned neural network pool. For example, if the basic layer of decoding neural network 2 adopts a network layer of the predesigned network structure and the enhancement layer adopts a network layer of the variable network structure, the basic layer information includes the basic layer usage predesigned network flag and basic layer predesigned network index, where the basic usage predesigned network flag indicates that the basic layer uses the predesigned network, and the basic layer predesigned network index indicates the corresponding index of the network layer of the predesigned network structure in the predesigned neural network pool. The enhancement layer information includes network parameters, and the network parameters in the enhancement layer information are the same as those used in the enhancement layer of decoding neural network 2.

Embodiment 19: regarding Embodiments 14 and 15, the coefficient hyperparameter feature transform unit can use an encoding neural network to perform coefficient hyperparameter feature transform on the picture feature value F to obtain the coefficient hyperparameter feature coefficient value C. On this basis, the neural network information 1 corresponding to the coefficient hyperparameter feature generating unit of the decoding device can be determined based on the network structure of the encoding neural network, and the neural network information 1 corresponding to the coefficient hyperparameter feature generating unit can be encoded in the bitstream 0. Regarding how the decoding device generates the decoding neural network 1 corresponding to the coefficient hyperparameter feature generating unit based on the neural network information 1, reference can be made according to Embodiment 9, which will not be repeated here.

In an embodiment, the coefficient hyperparameter feature transform unit can include an encoding neural network 1. The encoding neural network 1 can include a basic layer and an enhancement layer. The encoding neural network 1 can be split into a basic layer and an enhancement layer. The basic layer can include at least one network layer, or the basic layer can include no network layer, i.e., the basic layer is empty. The enhancement layer can include at least one network layer, or the enhancement layer can include no network layer, i.e., the enhancement layer is empty. It should be noted that the network structures of the encoding neural network 1 of the coefficient hyperparameter feature transform unit and the decoding neural network 1 of the coefficient hyperparameter feature generating unit (see Embodiment 9) can be symmetrical. The network parameters of the encoding neural network 1 of the coefficient hyperparameter feature transform unit and the decoding neural network 1 of the coefficient hyperparameter feature generating unit can be the same or different. The network structure of the encoding neural network 1 will not be repeated here.

In an embodiment, the coefficient hyperparameter feature transform unit can be configured with a network layer of a default network structure, and the network parameter related to the network layer of the default network structure is fixed. It should be noted that the network layers of the default network structure configured for the coefficient hyperparameter feature transform unit and the network layers of the default network structure configured for the coefficient hyperparameter feature generating unit can be symmetric structures. A predesigned neural network pool (corresponding to the predesigned neural network pool of the decoding device) can be configured for the coefficient hyperparameter feature transform unit. The predesigned neural network pool includes network layers of at least one predesigned network structure, and the network parameter related to the network layer of the predesigned network structure can be configured according to actual needs. Network layers with variable network structures can be dynamically generated for the coefficient hyperparameter feature transform unit based on network parameters, and the network parameters related to the network layers with variable network structures are dynamically generated by the encoding end.

In an embodiment, the encoding end can determine the neural network information 1 corresponding to the coefficient hyperparameter feature generating unit based on the network structure of the encoding neural network 1, and encode the neural network information 1 in the bitstream 0. Where neural network information 1 can include basic layer information and enhancement layer information. The way of encoding neural network information 1 is similar to the way of encoding neural network information 2, which can be seen in embodiment 17 and will not be repeated here. For example, if the basic layer of encoding neural network 1 adopts the network layer of the default network structure, and the enhancement layer adopts the network layer of the default network structure, the basic layer information includes the basic layer usage the default network flag, and the basic layer usage the default network flag indicates that the basic layer uses the default network. The enhancement layer information includes the enhancement layer usage default network flag, and the enhancement layer usage default network flag indicates that the enhancement layer uses the default network.

Embodiment 20: regarding Embodiments 14 and 15, the coefficient hyperparameter feature generating unit of the encoding end can perform inverse transform on the reconstructed value C' of the coefficient hyperparameter feature coefficient based on the decoding neural network to obtain the coefficient hyperparameter feature value P. On this basis, the neural network information 1 corresponding to the coefficient hyperparameter feature generating unit of the encoding device can be determined based on the network structure of the encoding neural network, and the neural network information 1 corresponding to the coefficient hyperparameter feature generating unit can be encoded in the bitstream 0.

In an embodiment, the coefficient hyperparameter feature generating unit at the encoding end can include a decoding neural network 1. The decoding neural network 1 can include a basic layer and an enhancement layer. The network structure of the decoding neural network 1 at the encoding end is the same as the network structure of the decoding neural network 1 at the decoding end, as described in Embodiment 9, and will not be repeated here.

In an embodiment, the encoding end can configure a network layer of a default network structure for the coefficient hyperparameter feature generating unit, where the network layer of the default network structure is the same as the network layer of the default network structure for the decoding end. The encoding end can configure a predesigned neural network pool for the coefficient hyperparameter feature generating unit, where the predesigned neural network pool can include network layers of at least one predesigned network structure. This predesigned neural network pool is the same as the predesigned neural network pool at the decoding end. The encoding end can dynamically generate network layers with variable network structures for the coefficient hyperparameter feature generating unit based on network parameters. The encoding end can determine the neural network information 1 corresponding to the coefficient hyperparameter feature generating unit based on the network structure of the decoding neural network 1, and encode the neural network information 1 in the bitstream 0. Where neural network information 1 can include basic layer information and enhancement layer information. The way of encoding neural network information 1 is similar to the way of encoding neural network information 2, which can be seen in embodiment 18 and will not be repeated here. For example, if the basic layer of decoding neural network 1 (used by the encoding end) adopts a network layer of the default network structure, and the enhancement layer adopts a network layer of the variable network structure, the basic layer information includes the basic layer usage default network flag, and the basic layer usage default network flag indicates that the basic layer uses the default network. The enhancement layer information includes network parameters used to generate the enhancement layer, and the network parameters in the enhancement layer information can be the same as those used in the enhancement layer (i.e., the enhancement layer used by the encoding end) of decoding neural network 1.

Embodiment 21: regarding Embodiments 14 and 15, the quality enhancement unit at the encoding end can enhance the low order feature values LF of the picture based on a decoding neural network to obtain the reconstructed picture block I corresponding to the current block. On this basis, the neural network information 3 corresponding to the quality enhancement unit of the decoding device can also be determined based on the network structure of the decoding neural network, and the neural network information 3 corresponding to the quality enhancement unit can be encoded in bitstream 0. For example, the quality enhancement unit at the encoding end can include a decoding neural network 3. The decoding neural network 3 can include a basic layer and an enhancement layer. The network structure of the decoding neural network 3 at the encoding end is the same as the network structure of the decoding neural network 3 at the decoding end, as described in Embodiment 13, and will not be repeated here.

In an embodiment, the encoding end can configure a network layer of a default network structure for the quality enhancement unit, where the network layer of the default network structure is the same as the network layer of the default network structure for the decoding end. The encoding end can configure a predesigned neural network pool for the quality enhancement unit, where the predesigned neural network pool can include network layers of at least one predesigned network structure. This predesigned neural network pool is the same as the predesigned neural network pool at the decoding end. The encoding end can dynamically generate network layers with variable network structures for the quality enhancement unit based on network parameters. The encoding end can determine the neural network information 3 corresponding to the quality enhancement unit based on the network structure of the decoding neural network 3, and encode the neural network information 3 in the bitstream 0. Where neural network information 3 can include basic layer information and enhancement layer information. The way of encoding neural network information 3 is similar to the way of encoding neural network information 2, which can be seen in embodiment 18 and will not be repeated here. For example, if the basic layer of decoding neural network 3 adopts a network layer of the default network structure, and the enhancement layer adopts a network layer of the variable network structure, the basic layer information includes the basic layer usage default network flag, and the basic layer usage default network flag indicates that the basic layer uses the default network. The enhancement layer information includes network parameters used to generate the enhancement layer, and the network parameters in the enhancement layer information can be the same as those used in the enhancement layer of decoding neural network 3.

In an embodiment, for the network parameters in Embodiments 1 to 21, fixed-point network parameters can be used. For example, the filter weights in the network parameters can be represented by 4, 8, 16, 32, and 64 bit widths. For the feature values output by the network, bit width restrictions can also be applied, such as limiting them to 4, 8, 16, 32, and 64 bit widths.

For example, the bit width of network parameters can be limited to 8 bits, and their values can be limited to [-127, 127]. The bit width of the feature values output by the network can be limited to 8 bits, and their values can be limited to [-127, 127].

Embodiment 22: for the relevant syntax table of the picture header, Table 4 provides the syntax information (i.e., the picture level syntax) related to the picture header. In Table 4, u (n) is configured to represent the n-bit fixed length code encoding method.

**Table 4**

| | |
|---|---|
| picture header definition | descriptor |
| picture_header() { | |
| pic_width | u(16) |
| pic_height | u(16) |
| bu_width | u(16) |
| bu_height | u(16) |
| block_width | u(16) |
| block_height | u(16) |
| pic_format | u(3) |
| bit_depth | u(5) |
| feature_map_max_bit_depth | u(4) |
| pic_qp | u(6) |
| lossless _flag | u(1) |
| } | |

In Table 4, pic_width represents picture width, pic_height represents picture height, and pic_format represents picture formats such as RGB 444, YUV 444, YUV 420, YUV 422, etc. Bu_width represents the width of the basic block, bu_height represents the height of the basic block, block_width represents the width of the picture block, block_height represents the height of the picture block, bit_depth represents the bit depth of the picture, pic_qp represents the quantization parameter in the current picture, lossless _flag represents whether the current picture is marked with lossless encoding, feature_map_max_bit_depth represents the feature map maximum bit depth, where the feature map maximum bit depth is configured to limit the maximum and minimum values of the input or output feature map of the network.

For example, the above embodiments can be implemented separately or in combination. For example, each of embodiments 1-22 can be implemented separately, and at least two of embodiments 1-22 can be implemented in combination.

For example, in the above embodiments, the content of the encoding end can also be applied to the decoding end, that is, the decoding end can process in the same way, and the content of the decoding end can also be applied to the encoding end, that is, the encoding end can process in the same way.

Based on the same application concept as the above method, the embodiments of the present disclosure further propose a neural network-based picture decoding device. The device is applied to the decoding end. The device includes: one or more memories configured to store video data; and a decoder configured to implement the decoding methods in embodiments 1-22, namely the processing flow of the decoding end.

For example, in an embodiment, a decoder is configured to achieve:
decoding a control parameter and picture information for a current block from a bitstream;
obtaining neural network information for a decoding processing unit from the control parameter, and generating a decoding neural network for the decoding processing unit based on the neural network information; and
determining an input feature for the decoding processing unit based on the picture information, and processing the input feature based on the decoding neural network to obtain an output feature for the decoding processing unit.

Based on the same application concept as the above method, the embodiments of the present disclosure further propose a neural network-based picture encoding device. The device is applied to the encoding end. The device includes: one or more memories configured to store video data; and an encoder configured to implement the encoding methods in embodiments 1-22, namely the processing flow of the encoding end.

For example, in an embodiment, an encoder is configured to achieve:
determining an input feature for an encoding processing unit based on a current block, obtaining an output feature for the encoding processing unit by processing the input feature based on an encoding neural network for the encoding processing unit, and determining picture information for the current block based on the output feature;
obtaining a control parameter for the current block, where the control parameter includes neural network information for a decoding processing unit, and the neural network information is configured to determine a decoding neural network for the decoding processing unit; and
encoding the control parameter and the picture information for the current block in a bitstream.

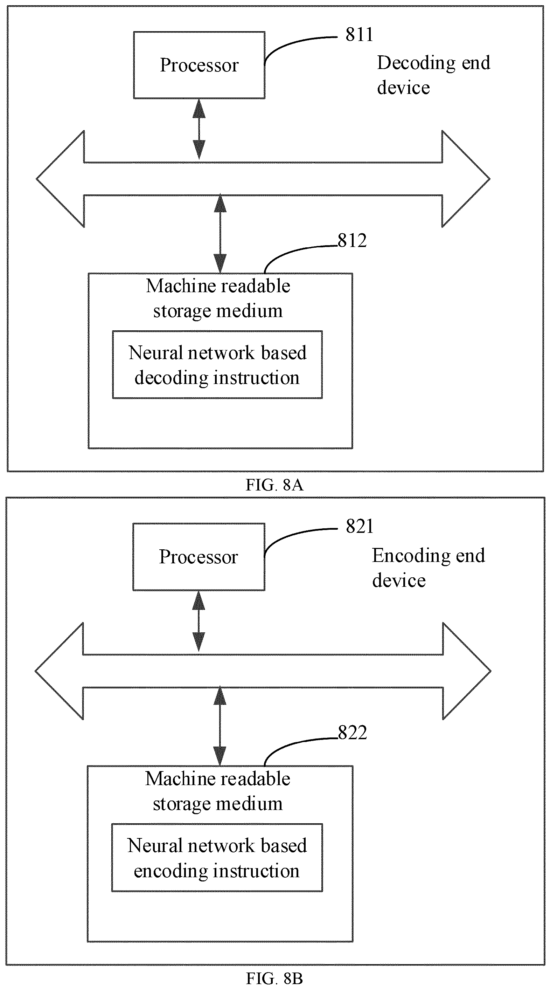

Based on the same application concept as the above methods, a decoding device (also referred to as a video decoder) provided in the embodiments of the present disclosure has, from a hardware perspective, a hardware architecture, as shown in FIG. 8A. The hardware architecture includes processor 811 and machine-readable storage medium 812, where machine-readable storage medium 812 stores machine executable instructions that can be executed by processor 811. Processor 811 is configured to execute machine executable instructions to implement the decoding methods of embodiments 1-22 in the present disclosure.

Based on the same application concept as the above methods, the encoding device (also referred to as a video encoder) provided in the embodiments of the present disclosure, from a hardware perspective, can be specifically illustrated in FIG. 8B for schematic of its hardware architecture schematic. The hardware architecture schematic includes processor 821 and machine-readable storage medium 822, where machine-readable storage medium 822 stores machine executable instructions that can be executed by processor 821.; The processor 821 is configured to execute machine executable instructions to implement the encoding methods of embodiments 1-22 in the present disclosure.

Based on the same application concept as the above methods, the embodiments of the present disclosure further provide a machine-readable storage medium, which stores several computer instructions. When the computer instructions are executed by a processor, the methods in the embodiments of the present disclosure can be implemented, such as the decoding methods or encoding methods in the above embodiments.

Based on the same application concept as the above methods, the embodiments of the present disclosure further provide a computer application program that, when executed by a processor, the decoding methods or encoding methods in the embodiments of the present disclosure are implemented.

Based on the same application concept as the above methods, the embodiments of the present disclosure further propose a neural network-based picture decoding apparatus, which is applied to the decoding end. The apparatus includes: a decoding module, configured to decode a control parameter and picture information for a current block from a bitstream; an obtaining module configured to obtain neural network information for a decoding processing unit from the control parameter, and generating a decoding neural network for the decoding processing unit based on the neural network information; and a processing module configured to determine an input feature for the decoding processing unit based on the picture information, and processing the input feature based on the decoding neural network to obtain an output feature for the decoding processing unit.

For example, when the neural network information includes basic layer information and enhancement layer information, the obtaining module, when generating the decoding neural network for the decoding processing unit based on the neural network information, is configured to: determine a basic layer for the decoding processing unit based on the basic layer information; determine an enhancement layer for the decoding processing unit based on the enhancement layer information; and generate a decoding neural network for the decoding processing unit based on the basic layer and the enhancement layer.

For example, the obtaining module, when determining the basic layer for the decoding processing unit based on the basic layer information, is configured to: when the basic layer information includes a basic layer usage default network flag, and the basic layer usage default network flag indicates that the basic layer uses a default network, obtain the basic layer of a default network structure.

For example, the obtaining module, when determining the basic layer for the decoding processing unit based on the basic layer information, is configured to: when the basic layer information includes a basic layer usage predesigned network flag and a basic layer predesigned network index, and the basic layer usage predesigned network flag indicates that the basic layer uses a predesigned network, select a basic layer of a predesigned network structure corresponding to the basic layer predesigned network index from a predesigned neural network pool; where the predesigned neural network pool includes network layers of at least one predesigned network structure.

For example, the obtaining module, determining the enhancement layer for the decoding processing unit based on the enhancement layer information, is configured to: when the enhancement layer information includes an enhancement layer usage default network flag, and the enhancement layer usage default network flag indicates that the enhancement layer uses a default network, obtain the enhancement layer of a default network structure.

For example, the obtaining module, when determining the enhancement layer for the decoding processing unit based on the enhancement layer information, is configured to: when the enhancement layer information includes an enhancement layer usage predesigned network flag and an enhancement layer predesigned network index, and the enhancement layer usage predesigned network flag indicates that the enhancement layer uses a predesigned network, select an enhancement layer of a predesigned network structure corresponding to the enhancement layer predesigned network index from a predesigned neural network pool; where the predesigned neural network pool includes network layers of at least one predesigned network structure.

For example, the obtaining module, when determining the enhancement layer for the decoding processing unit based on the enhancement layer information, is configured to: when the enhancement layer information includes a network parameter for generating the enhancement layer, generate the enhancement layer for the decoding processing unit based on the network parameter; where the network parameter includes at least one of: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, an activation layer flag, or an activation layer type.

For example, the picture information includes coefficient hyperparameter feature information and picture feature information, where the processing module, when determining the input feature for the decoding processing unit based on the picture information, and processing the input feature based on the decoding neural network to obtain the output feature for the decoding processing unit, is configured to: when executing a decoding process of coefficient hyperparameter feature generating, determine a reconstructed value of a coefficient hyperparameter feature coefficient based on the coefficient hyperparameter feature information, and perform inverse transform on the reconstructed value of the coefficient hyperparameter feature coefficient based on the decoding neural network to obtain a coefficient hyperparameter feature value; where the coefficient hyperparameter feature value is configured to decode the picture feature information from a bitstream; when executing a decoding process of picture feature inverse transform, determine a reconstructed value of the picture feature based on the picture feature information; and perform inverse transform on the reconstructed value of the picture feature based on the decoding neural network to obtain a picture low order feature value; where the picture low order feature value is configured to obtain a reconstructed picture block for the current block.

For example, the processing module, when determining the reconstructed value of the coefficient hyperparameter feature coefficient based on the coefficient hyperparameter feature information, is configured to: when the control parameter includes first enabling information, and the first enabling information represents enabling first inverse quantization, perform inverse quantization on the coefficient hyperparameter feature information to obtain the reconstructed value of the coefficient hyperparameter feature coefficient.

For example, the processing module, when determining the reconstructed value of the picture feature based on the picture feature information, is configured to: when the control parameter includes second enabling information and the second enabling information represents enabling a second inverse quantization, perform inverse quantization on the picture feature information to obtain the reconstructed value of the picture feature.

For example, the processing module is further used to: when the control parameter includes third enabling information, and the third enabling information represents enabling quality enhancement, when executing a decoding process of quality enhancement, obtain the picture low order feature value, and perform enhancement on the picture low order feature value based on the decoding neural network to obtain the reconstructed picture block for the current block.

Based on the same application concept as the above methods, the embodiments of the present disclosure further propose a neural network-based picture encoding apparatus, which is applied to the encoding end. The apparatus includes: a processing module configured to determine an input feature for an encoding processing unit based on a current block, process the input feature based on an encoding neural network for the encoding processing unit to obtain an output feature for the encoding processing unit, and determine picture information for the current block based on the output feature; an obtaining module configured to obtain a control parameter for the current block, where the control parameter includes neural network information for a decoding processing unit, and the neural network information is configured to determine a decoding neural network for the decoding processing unit; and an encoding module configured to encode the control parameter and the picture information for the current block in a bitstream.

For example, the neural network information includes basic layer information and enhancement layer information, and the decoding neural network includes a basic layer determined based on the basic layer information and an enhancement layer determined based on the enhancement layer information.

For example, when the basic layer information includes a basic layer usage default network flag, and the basic layer usage default network flag indicates that the basic layer uses a default network, the decoding neural network adopts the basic layer of a default network structure.

For example, when the basic layer information includes a basic layer usage predesigned network flag and a basic layer predesigned network index, and the basic layer usage predesigned network flag indicates that the basic layer uses a predesigned network, the decoding neural network adopts a basic layer of a predesigned network structure selected from a predesigned neural network pool corresponding to the basic layer predesigned network index; where the predesigned neural network pool includes network layers of at least one predesigned network structure.

For example, when the enhancement layer information includes an enhancement layer usage default network flag, and the enhancement layer usage default network flag indicates that the enhancement layer uses a default network, the decoding neural network adopts the enhancement layer of a default network structure.

For example, when the enhancement layer information includes an enhancement layer usage predesigned network flag and an enhancement layer predesigned network index, and the enhancement layer usage predesigned network flag indicates that the enhancement layer uses a predesigned network, the decoding neural network adopts an enhancement layer of a predesigned network structure selected from a predesigned neural network pool corresponding to the enhancement layer predesigned network index; where the predesigned neural network pool includes network layers of at least one predesigned network structure.

For example, when the enhancement layer information includes a network parameter configured to generate the enhancement layer, the decoding neural network adopts the enhancement layer generated based on the network parameter; where the network parameter includes at least one of: a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, an activation layer flag, or an activation layer type.

For example, the processing module further configured to: split the current picture into N non-overlapping picture blocks, where N is a positive integer; perform boundary padding on each of the picture blocks to obtain boundary padded picture blocks; where when performing boundary padding on each of the picture blocks, a padding value is independent on a reconstructed pixel value of an adjacent picture block; and generate N current blocks based on the boundary padded picture blocks.

For example, the processing module is further used to: split the current picture into a plurality of basic blocks, where each of the plurality of basic blocks includes at least one picture block; perform boundary padding on each picture block, to obtain boundary padded picture blocks; where for each picture block, when performing boundary padding on the picture block, the padding value for the picture block is independent on an reconstructed pixel value of another picture block within a same basic block, and the padding value for the picture block is allowed to be dependent on a reconstructed pixel value of a picture block within a different basic block; and generate a plurality of current blocks based on the boundary padded picture blocks.

It should be understood by those skilled in the art that embodiments of the present disclosure can be provided as methods, systems, or computer program products. The present disclosure can take the form of an entirely hardware embodiment, an entirely software embodiment, or an embodiment combining software and hardware aspects. The present disclosure can employ the form of a computer program product implemented on one or more computer-usable storage media (including, but not limited to, disk storage, CD-ROM, optical storage, etc.), where the one or more computer-usable storage media having computer-usable program code.

The above description is only embodiments of the present disclosure and is not intended to limit the present disclosure. For those skilled in the art, various modifications and changes can be made in the present disclosure. Any modification, equivalent replacement, improvement, etc. present the spirit and principle of the present disclosure shall be included in the scope of the claims of the present disclosure.

## Claims

1. A picture decoding method based on a neural network, comprising:
decoding a control parameter and picture information for a current block from a bitstream;
obtaining neural network information for a decoding processing unit from the control parameter, and generating a decoding neural network for the decoding processing unit based on the neural network information; and
determining an input feature for the decoding processing unit based on the picture information, and processing the input feature based on the decoding neural network to obtain an output feature for the decoding processing unit.

2. The method according to claim 1, wherein when the neural network information comprises basic layer information and enhancement layer information, generating the decoding neural network for the decoding processing unit based on the neural network information comprises:
determining a basic layer for the decoding processing unit based on the basic layer information;
determining an enhancement layer for the decoding processing unit based on the enhancement layer information; and
generating a decoding neural network for the decoding processing unit based on the basic layer and the enhancement layer.

3. The method according to claim 2, wherein determining the basic layer for the decoding processing unit based on the basic layer information comprises:
when the basic layer information comprises a basic layer usage default network flag, and the basic layer usage default network flag indicates that the basic layer uses a default network, obtaining the basic layer of a default network structure.

4. The method according to claim 2, wherein determining the basic layer for the decoding processing unit based on the basic layer information comprises:
when the basic layer information comprises a basic layer usage predesigned network flag and a basic layer predesigned network index, and the basic layer usage predesigned network flag indicates that the basic layer uses a predesigned network, selecting a basic layer of a predesigned network structure corresponding to the basic layer predesigned network index from a predesigned neural network pool;
wherein the predesigned neural network pool comprises network layers of at least one predesigned network structure.

5. The method according to claim 2, wherein determining the enhancement layer for the decoding processing unit based on the enhancement layer information comprises:
when the enhancement layer information comprises an enhancement layer usage default network flag, and the enhancement layer usage default network flag indicates that the enhancement layer uses a default network, obtaining the enhancement layer of a default network structure.

6. The method according to claim 2, wherein determining the enhancement layer for the decoding processing unit based on the enhancement layer information comprises:
when the enhancement layer information comprises an enhancement layer usage predesigned network flag and an enhancement layer predesigned network index, and the enhancement layer usage predesigned network flag indicates that the enhancement layer uses a predesigned network, selecting an enhancement layer of a predesigned network structure corresponding to the enhancement layer predesigned network index from a predesigned neural network pool;
wherein the predesigned neural network pool comprises network layers of at least one predesigned network structure.

7. The method according to claim 2, wherein determining the enhancement layer for the decoding processing unit based on the enhancement layer information comprises:
when the enhancement layer information comprises a network parameter for generating the enhancement layer, generating the enhancement layer for the decoding processing unit based on the network parameter; wherein the network parameter comprises at least one of:
a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, an activation layer flag, or an activation layer type.

8. The method according to any one of claims 1-7, wherein the picture information comprises coefficient hyperparameter feature information and picture feature information, wherein determining the input feature for the decoding processing unit based on the picture information, and processing the input feature based on the decoding neural network to obtain the output feature for the decoding processing unit comprises:
when executing a decoding process of coefficient hyperparameter feature generating, determining a reconstructed value of a coefficient hyperparameter feature coefficient based on the coefficient hyperparameter feature information, and performing inverse transform on the reconstructed value of the coefficient hyperparameter feature coefficient based on the decoding neural network to obtain a coefficient hyperparameter feature value; wherein the coefficient hyperparameter feature value is configured to decode the picture feature information from the bitstream; and
when executing a decoding process of picture feature inverse transform, determining a reconstructed value of the picture feature based on the picture feature information; and performing inverse transform on the reconstructed value of the picture feature based on the decoding neural network to obtain a picture low order feature value; wherein the picture low order feature value is configured to obtain a reconstructed picture block for the current block.

9. The method according to claim 8, wherein
determining the reconstructed value of the coefficient hyperparameter feature coefficient based on the coefficient hyperparameter feature information comprises:
when the control parameter comprises first enabling information, and the first enabling information represents enabling first inverse quantization, performing inverse quantization on the coefficient hyperparameter feature information to obtain the reconstructed value of the coefficient hyperparameter feature coefficient; and
determining the reconstructed value of the picture feature based on the picture feature information comprises:
when the control parameter comprises second enabling information and the second enabling information represents enabling a second inverse quantization, performing inverse quantization on the picture feature information to obtain the reconstructed value of the picture feature.

10. The method according to claim 8, further comprising:
when the control parameter comprises third enabling information, and the third enabling information represents enabling quality enhancement, when executing a decoding process of quality enhancement, obtaining the picture low order feature value, and performing enhancement on the picture low order feature value based on the decoding neural network to obtain the reconstructed picture block for the current block.

11. A picture encoding method based on a neural network, comprising:
determining an input feature for an encoding processing unit based on a current block, processing the input feature based on an encoding neural network for the encoding processing unit to obtain an output feature for the encoding processing unit, and determining picture information for the current block based on the output feature;
obtaining a control parameter for the current block, wherein the control parameter comprises neural network information for a decoding processing unit, and the neural network information is configured to determine a decoding neural network for the decoding processing unit; and
encoding the control parameter and the picture information for the current block in a bitstream.

12. The method according to claim 11, wherein the neural network information comprises basic layer information and enhancement layer information, and the decoding neural network comprises a basic layer determined based on the basic layer information and an enhancement layer determined based on the enhancement layer information.

13. The method according to claim 12, wherein when the basic layer information comprises a basic layer usage default network flag, and the basic layer usage default network flag indicates that the basic layer uses a default network, the decoding neural network adopts the basic layer of a default network structure.

14. The method according to claim 12, wherein when the basic layer information comprises a basic layer usage predesigned network flag and a basic layer predesigned network index, and the basic layer usage predesigned network flag indicates that the basic layer uses a predesigned network, the decoding neural network adopts a basic layer of a predesigned network structure selected from a predesigned neural network pool corresponding to the basic layer predesigned network index;
wherein the predesigned neural network pool comprises network layers of at least one predesigned network structure.

15. The method according to claim 12, wherein when the enhancement layer information comprises an enhancement layer usage default network flag, and the enhancement layer usage default network flag indicates that the enhancement layer uses a default network, the decoding neural network adopts the enhancement layer of a default network structure.

16. The method according to claim 12, wherein when the enhancement layer information comprises an enhancement layer usage predesigned network flag and an enhancement layer predesigned network index, and the enhancement layer usage predesigned network flag indicates that the enhancement layer uses a predesigned network, the decoding neural network adopts an enhancement layer of a predesigned network structure selected from a predesigned neural network pool corresponding to the enhancement layer predesigned network index;
wherein the predesigned neural network pool comprises network layers of at least one predesigned network structure.

17. The method according to claim 12, wherein when the enhancement layer information comprises a network parameter configured to generate the enhancement layer, the decoding neural network adopts the enhancement layer generated based on the network parameter; wherein the network parameter comprises at least one of:
a number of neural network layers, a deconvolutional layer flag, a number of deconvolutional layers, a quantization stride for each deconvolutional layer, a number of channels for each deconvolutional layer, a size of convolutional kernel, a number of filters, an index of filter size, a flag representing a filter coefficient is equal to zero or not, a filter coefficient, an activation layer flag, or an activation layer type.

18. The method according to any one of claims 11-17, wherein before determining the input feature for the encoding processing unit based on the current block, the method further comprises:
splitting a current picture into N non-overlapping picture blocks, wherein N is a positive integer;
performing boundary padding on each of the picture blocks to obtain boundary padded picture blocks; wherein when performing boundary padding on each of the picture blocks, a padding value is independent on a reconstructed pixel value of an adjacent picture block; and
generating N current blocks based on the boundary padded picture blocks.

19. The method according to any one of claims 11-17, wherein before determining the input feature for the encoding processing unit based on the current block, the method further comprises:
splitting a current picture into a plurality of basic blocks, wherein each of the plurality of basic blocks comprises at least one picture block;
performing boundary padding on each picture block, to obtain boundary padded picture blocks; wherein for each picture block, when performing boundary padding on the picture block, the padding value for the picture block is independent on an reconstructed pixel value of another picture block within a same basic block, and the padding value for the picture block is allowed to be dependent on a reconstructed pixel value of a picture block within a different basic block; and
generating a plurality of current blocks based on the boundary padded picture blocks.

20. A picture decoding device based on a neural network, comprising:
one or more memories configured to store video data; and
a decoder configured to implement:
decoding a control parameter and picture information for a current block from a bitstream;
obtaining neural network information for a decoding processing unit from the control parameter, and generating a decoding neural network for the decoding processing unit based on the neural network information; and
determining an input feature for the decoding processing unit based on the picture information, and processing the input feature based on the decoding neural network to obtain an output feature for the decoding processing unit.

21. A picture encoding device based on a neural network, comprising:
one or more memories configured to store video data; and
an encoder configured to implement:
determining an input feature for an encoding processing unit based on a current block, processing the input feature based on an encoding neural network for the encoding processing unit to obtain an output feature for the encoding processing unit, and determining picture information for the current block based on the output feature;
obtaining a control parameter for the current block, wherein the control parameter comprises neural network information for a decoding processing unit, and the neural network information is configured to determine a decoding neural network for the decoding processing unit; and
encoding the control parameter and the picture information for the current block in a bitstream.

22. A decoding device, comprising: one or more processors and one or more machine-readable storage media, wherein the one or more machine-readable storage media store machine executable instructions that are executable by the one or more processors; and
the one or more processors are configured to execute the machine executable instructions to implement the method according to any one of claims 1 to 10.

23. An encoding device, comprising: one or more processors and one or more machine-readable storage media, wherein the one or more machine-readable storage media store machine executable instructions that are executable by the one or more processors; and
the one or more processors are configured to execute the machine executable instructions to implement the method according to any one of claims 11 to 19.
